(19) Europäisches Patentamt
European Patent Office
Office européen des brevets

(11) EP 2 522 689 A1

(12) EUROPEAN PATENT APPLICATION

(43) Date of publication:
**14.11.2012 Bulletin 2012/46**

(51) Int Cl.:
***C08G 83/00*** *(2006.01)*

(21) Application number: **11166108.8**

(22) Date of filing: **13.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universität Bayreuth**
**95440 Bayreuth (DE)**

(72) Inventors:
- **Schallon, Anja**
  **95447 Bayreuth (DE)**
- **Jérôme, Valérie, Dr.**
  **95448 Bayreuth (DE)**
- **Freitag, Ruth, Prof. Dr.**
  **95445 Bayreuth (DE)**
- **Synatschke, Christopher**
  **95444 Bayreuth (DE)**
- **Majewski, Alexander**
  **95444 Bayreuth (DE)**
- **Schmalz, Holger, Dr.**
  **95448 Bayreuth (DE)**
- **Müller, Axel, Prof. Dr.**
  **65193 Wiesbaden (DE)**

(74) Representative: **Neuefeind, Regina**
**Maiwald Patentanwalts GmbH**
**Elisenhof**
**Elisenstrasse 3**
**80335 München (DE)**

(54) **Non-viral transfection systems**

(57) The present invention relates to the use of polyelectrolyte particles as non-viral vectors. In particular, the present invention relates to the use of a polyelectrolyte particle for transferring *in vitro, in vivo* or *ex vivo* an anionic substance into a cell, wherein the polyelectrolyte particle is a star-shaped particle that has a common branching centre and a specific number of polymer chains radiating outward therefrom, or is a spherical micelle comprising a specific number of polymer chains radiating outward from the micelle core. Such polyelectrolyte particles have applications in many fields, particularly in molecular biology, but also in gene therapy and for siRNA applications. The present invention further relates to an *in vitro* method for transferring an anionic substance into a cell by using such polyelectrolyte particles, a complex containing such polyelectrolyte particles and to their medical and biotechnological use.

EP 2 522 689 A1

## Description

### SUBJECT OF THE INVENTION

The present invention relates to the use of polyelectrolyte particles as non-viral vectors. In particular, the present invention relates to the use of a polyelectrolyte particle for transferring *in vitro*, *in vivo* or *ex vivo* an anionic substance into a cell, wherein the polyelectrolyte particle is a star-shaped particle that has a common branching centre and a specific number of polymer chains radiating outward therefrom, or is a spherical micelle comprising a specific number of polymer chains radiating outward from the micelle core. Such polyelectrolyte particles have applications in many fields, particularly in molecular biology, but also in gene therapy and for siRNA applications. The present invention further relates to an *in vitro* method for transferring an anionic substance into a cell by using such polyelectrolyte particles, a complex containing such polyelectrolyte particles and to their medical and biotechnological use.

### BACKGROUND OF THE INVENTION

Gene therapy has been conceived as principally applicable to heritable deficiency diseases. Moreover, gene therapy is not only seen as a promising method to correct hereditary defects, but also to treat life threatening diseases such as cancer and AIDS. In gene therapy, nucleic acid fragments or gene constructs are brought into human target cells in order to compensate for a missing or a defect gene or to introduce a new functionality in such cells. Another application of gene therapy is vaccination. In this regard, the immunogenic product encoded by the nucleic acid introduced into cells of a vertebrate may be expressed and secreted or be presented by said cells in the context of the major histocompatibility antigens, thereby eliciting an immune response against the expressed immunogen. However, successful gene therapy depends on the efficient delivery to and expression of genetic information within the cells of a living organism, and a key limitation to development of human gene therapy remains the lack of safe, efficient and controllable methods for gene delivery (IM Verma, N Somia (1997), Nature 389: 239-242). In recent years, many efforts have therefore been made in the research on potentially suitable transfection systems, both of viral and non-viral (such as cationic lipids and cationic polymers) origin.

Generally, transfection is known as the transient or stable introduction of exogenous molecules, such as nucleic acids, into cultured cells by various methods comprising chemical, biological or physical methods. These transfection systems should deliver the desired gene or DNA fragment to the target cell and cause it to be expressed to a high degree. In the field of molecular biology, this nucleic acid transfer technology is a powerful tool in biological laboratories to e.g. study gene function, modulation of gene expression, biochemical mapping, mutational analysis, and protein production in the context of eukaryotic cells. However, no single delivery method or transfection reagent can be applied efficiently to all types of cells or can be used to deliver all kind of exogenous material.

Exogenous material can be introduced into eukaryotic cells using biological particles, such as viruses, as a carrier (also known as transduction). In particular, adenoviral, oncoretroviral, and lentiviral vectors have been used extensively for delivery in cell culture and *in vivo.* Viruses have developed diverse and highly sophisticated mechanisms to deliver and to express genetic information within the cells of a living organism including crossing of the cellular membrane, escaping from endosomes and lysosomal degradation, and finally delivering of their genome to the nucleus followed by expression of the viral genome. Hence, viruses offer a means to reach hard-to-transfect cell types for protein overexpression or knockdown, and viral vectors have been used in the majority of gene-delivery studies reported in the literature (DW Pack et al. (2005), Nature Reviews Drug Discovery 4: 581-593).

However, the use of viral transfection systems suffers from a number of disadvantages, including

- most viral vectors cannot accomodate large-sized DNA
- viral vectors are able to effect integration of the introduced gene in the chromosomal DNA of the target cell and may thus cause genetic changes in the target cell, and infectious viral particles could disseminate within the living organism or into the environment
- viral vectors generally trigger the immune system of a living organism (i.e. viruses are inherently immunogenic), which can lead to strong immune responses against the viral transfection system when used *in vivo*
- manufacturing viral-based gene therapies is very expensive, and it is therefore at present very difficult to provide for viral vectors on a commercial scale
- although recombinant viral vectors are rendered non-replicative, and therefore non-pathogenic, there still exists the possibility that the virus will revert to a wild-type virion
- target-cell specificity is still limited.

Summing up, the use of viruses as delivery vehicles particularly raised some concerns in terms of their immunogenicity, pathogenicity and oncogenicity. Nevertheless, despite these drawbacks, viral vectors are currently the most

efficient delivery systems. Accordingly, there is an ongoing need in the art for equally efficient transfection systems that overcome one or more of these drawbacks.

A wide variety of gene transfer facilitating methods other than immunogenic viral vectors have therefore been developed, including synthetic vectors, which provide opportunities for improved safety, greater flexibility and more facile manufacturing. Accordingly, the transport of foreign genetic material into eukaryotic cells, or nucleic acids transfection, by means of non-viral vectors has been an active field of research for several decades (SC De Smedt et al. (2000), Pharmaceutical Research 17(2): 113-126).

In general, synthetic vectors are materials that electrostatically bind anionic substances, such as DNA or RNA, and mediate cellular entry. Various synthetic vectors, including cationic polymers, for *in vitro* gene-transfer studies are known in the art. Such cationic polymers generally comprise DNA-binding moieties (including primary, secondary, tertiary and quaternary amines, as well as other positively charged groups such as amidines) residing in the polymer backbone, in pendant groups or in grafted oligomers. Although nonviral agents, such as cationic polymers, offer a synthetic alternative to viral vectors due to reduction of immunogenic risk and the ability to tailor their macromolecular structure, transfection efficiencies are usually considerably lower compared to viral vectors (DW Pack et al. (2005), Nature Reviews Drug Discovery 4: 581-593; JM Layman (2009), Biomacromolecules 10(5): 1244-52; P Wetering et al. (1997), Journal of Controlled Release 49: 59-69).

One of the most efficient polycations for gene delivery, which is also considered to be the "gold standard" in this particular area, is poly(ethylene imine) (PEI). PEI is a highly polycationic synthetic polymer that is available in both linear and branched forms (b-PEI), mostly with a molecular weight around 25 kDa (WT Godbey et al. (1999), Journal of Controlled Release 60(2-3): 149-160; WT Godbey, AG Mikos (2001), Journal of Controlled Release 72: 115-125; L Parhamifar et al. (2010), Soft Matter 6(17): 4001-4009). PEI has primary, secondary and tertiary amines, of which two-thirds of the amines are protonated in a physiological milieu. The unprotonated amines with different pKa values confer a buffering effect over a wide range of pH, which buffering property gives PEI an opportunity to escape from the endosome (the so-called "proton sponge effect"). It is believed that this may prevent DNA degradation in the endosomal compartment during the maturation of the endosome to lysosome, facilitating intracellular trafficking of DNA (A Akinc et al. (2005), J Gene Med 7: 657-663; T. Bieber et al. (2002), Journal of Controlled Release 82: 441-454).

Another polycation for gene delivery is poly(2-(dimethylamino)ethyl methacrylate) (PDMAEMA). A large amount of scientific articles have been published on the use of PDMAEMA or its copolymers for the delivery of genetic material (e.g., P van de Wetering et al. (1997), Journal of Controlled Release 49: 59-69; RA Jones et al. (2004), Journal of Controlled Release 96: 379-391). This polycation offers some advantages over PEI since the monomer can be polymerized in a controlled manner. Nevertheless, both PEI and PDMAEMA have the drawback of relatively poor gene-transfer efficiencies compared to viral transfection systems as well as great cytotoxicity.

Further synthetic transfection systems within the family of cationic polyacrylates and the corresponding acrylamides are described in the international patent application WO 97/15680 A1. Said patent application discloses a synthetic transfection system based on polyacrylates or polyacrylamides which contain cationic substituents. The European patent application EP 1 505 089 A1 discloses further synthetic transfection systems comprising a particular group of cationic polyacrylamide derivates.

Recently, dendritic, (hyper-) branched and star-shaped polycations have been discussed in the art as potential gene-delivery agents. For instance, B. Newland *et al.* disclose a hyperbranched DMAEMA-based polymer that exhibits much higher transfection ability than linear PDMAEMA and is at least comparable to the SuperFect® dendrimer but with lower cytotoxicity (B. Newland et al. (2010), Chem. Commun. 46: 4698-4700). A star cationic polymer (star-shaped polymer "s-PDMAEMA") consisting of cleavable poly[N,Nbis(acryloyl) cystamine] (PBAC) crosslinked core and poly(N, N-dimethylaminoethyl methacrylate) (PDMAEMA) arms was disclosed in F. Dai et al. (2010), Biomaterials 31: 559-569. A star-like organic-inorganic cationic polymer, with PDMAEMA as the cationic segment anchored to a polyhedral oligomeric silsesquioxanes (POSS)-based rigid core was published by XJ Loh *et al.* (XJ Loh et al. (2010), J. Mater. Chem. 20: 10634-10642). According to the authors, this polymer forms micelles for the encapsulation of paclitaxel in the aqueous environment and the cationic PDMAEMA segments can serve as binding agents for the negatively charged DNA plasmids. Furthermore, the transfection efficiency and cytotoxicity of linear (17 kDa), star-shaped (59 kDa) and highly-branched PDMAEMA (11.6 kDa) polymers was assessed in A. Schallon et al. (2010), Reactive & Functional Polymers 70: 1-10. It was shown that for both PEI and PDMAEMA, the linear molecules showed lowest transfection capability where that of the star-shaped PDMAEMA and that of branched ones (each having a higher molecular weight compared to the linear molecules) was slightly better.

However, it is known in the art that cytotoxicity also increases as a function of the polycation molecular weight. For instance, these trends were observed by Layman et al. for linear PDMAEMA polymers (JM Layman et al. (2009), Biomolecules 10, 1244-1252). Similar trends were also observed by other authors, showing that the cytotoxicity increases with the length of a cationic PEI and a cationic PDMAEMA chain even though the structures contains no toxic moieties. Although there are certain hints in the art that polycation toxicity may decrease as a consequence of increased branching (B. Newland et al. (2010), Chem. Commun. 46: 4698-4700), there is still the common prejudice in the art, that polycations

will be toxic if they exceed a certain molecular weight. Hence, polycations having an intermediate molecular weight are commonly investigated by the skilled person, since such polymers appear to combine acceptable cytotoxicity and acceptable transfection efficacies.

However, the gene-transfer efficiency of these delivery systems was shown to be dependent on the specific cell type, and to be only comparable or even less than the gene-transfer efficiency of PEI, let alone of viral transfection systems. Furthermore, most of the above-mentioned transfection agents have gene-transfer efficiencies in specific cell types at least to some extents, but may also exhibit a considerable cytotoxicity, and may further be unsatisfactory in gene therapy applications, RNA interference (RNAi) applications (WJ Kim et al. (2009), Pharmaceutical Research 26 (3), 657; D Castanotto et al. (2009), Nature 457, 426); or in the transfection of differentiated and/or non-dividing cells (G.T. Atherton et al. (1996), Cell Growth & Differentiation 7: 1059-1066; F.I. Florea et al. (2002), AAPS PharmSci 4(3): article 12; B.R. Twaites et al. (2005), Journal of Controlled Release 108: 472-483).

Hence, there is a strong demand in the art for providing synthetic non-viral vectors for transport of anionic substances into cells, and in particular into the cell nucleus, which vectors exhibit an improved gene-transfer efficiency compared to PEI. Furthermore, some of the synthetic non-viral vectors known in the art may be insufficient with regard to their cytotoxicity, their efficacy, their applicability in gene therapy, their applicability in RNA interference (RNAi) applications, their preparation, their cost of production, their applicability in the transfection of primary mammalian cells, their applicability in the transfection of differentiated cells, and/or their applicability in the transfection of non-dividing cells. Accordingly, there is a need in the art for alternative synthetic non-viral vectors that may overcome one or more of these drawbacks.

## OBJECT AND SUMMARY OF THE INVENTION

It is an object of the invention to provide synthetic non-viral vectors for the transport of anionic substances into cells, and in particular into the cell nucleus. It is an object of the invention to provide the use of synthetic non-viral vectors for transporting anionic substances into cells, and in particular into the cell nucleus. It is an object of the invention to provide an *in vitro* method for transporting anionic substances into cells, and in particular into the cell nucleus, by using synthetic non-viral vectors.

In certain embodiments of the invention, such vectors exhibit an improved transfection efficiency compared to PEI. In certain embodiments of the invention, such vectors exhibit an improved transfection efficiency compared to PEI, but exhibit a lower cytotoxicity compared to PEI. In certain embodiments of the invention, such vectors can be used in gene therapy applications. In certain embodiments of the invention, such vectors can be used in RNA interference (RNAi) applications. In certain embodiments of the invention, such vectors exhibit considerable transfection efficiency in the transfection of primary mammalian cells. In certain embodiments of the invention, such vectors exhibit considerable transfection efficiency in the transfection of differentiated cells. In certain embodiments of the invention, such vectors exhibit considerable transfection efficiency in the transfection of non-dividing cells. In certain embodiments of the invention, such vectors can package large DNA plasmids. In certain embodiments of the invention, the provision of such vectors is not considerably expensive, thus facilitating industrial production.

It is a further object of the invention to provide the use of synthetic non-viral vectors for the transport of anionic substances into primary mammalian cells, differentiated cells, and/or non-dividing cells. It is an object of the invention to provide the use of synthetic non-viral vectors for the transport of anionic substances into cells, which vectors exhibit a transfection efficiency that is approaching to that of viral vectors. It is a further object of the invention to provide the use of synthetic non-viral vectors for transport of anionic substances into cells, which vectors exhibit considerable transfection efficiency, without exhibiting considerable cytotoxicity. It is a further object of the invention to provide the use of synthetic non-viral vectors for transport of anionic substances into cells, which vectors exhibit considerable transfection efficiency in aqueous solution comprising serum.

It is an object of the invention to provide a complex comprising a synthetic non-viral vector and an anionic substance for transport of the anionic substance into cells, and in particular into the cell nucleus. In certain embodiments of the invention, the synthetic non-viral vector according to the invention and/or the complex according to the invention (1) exhibits an improved transfection efficiency compared to PEI, (2) exhibits a considerable transfection efficiency in aqueous solution comprising serum, (3) exhibits an improved transfection efficiency compared to PEI, but exhibit a lower cytotoxicity compared to PEI, (4) can be used in gene therapy applications, (5) can be used in RNA interference (RNAi) applications, (6) can be used in the transfection of primary mammalian cells, (7) can be used in the transfection of differentiated cells, and/or (8) can be used in the transfection of non-dividing cells.

Also, the object of the invention is to provide a transfection, pharmaceutical and/or diagnostic composition comprising such a complex. Further, the object of the invention is to provide the use of such a complex in the curative, preventive or vaccinal treatment of an object, or for use as diagnostic tool in an object.

It has been found that the use of polyelectrolyte particles according to the present invention may offer a series of advantages compared to known synthetic non-viral vectors. In particular, it has been found that the polyelectrolyte

particles according to the present invention can lead to an improvement of the transfection efficiency together with reduced cytotoxicity as compared to the gold standard poly(ethylene imine) (PEI, 25 kDa). Contrary to the common accepted opinion that cytotoxicity increases as a function of the polycation molecular weight, the polyelectrolyte particles according to the present invention (despite a considerably high molecular weight) have surprisingly a less detrimental effect on cell metabolism.

Without wishing to be bound by any theory, it is believed that the particular architecture of the star-shaped particles according to the present invention carrying high arm density might reduce the surface contact with the cell membrane, thus decreasing membrane destabilisations but preserving a high charge density, meaning good transfection efficiency. This means that compared to other synthetic polycations known in the art which were used for gene transfer, the polyelectrolyte particles according to the present invention offer the great advantage of combining a high molecular weight and low *in vitro* cytotoxicity, and can thus be used for *in vivo* delivery of specific anionic pharmaceutically active substances.

Surprisingly, in specific cell lines known to be difficult to transfect, the use of polyelectrolyte particles according to the present invention can considerably improve the transfection efficiency. Furthermore, although most conventional methods working effectively for cell lines (such as, CHO-K1, HEK-293, ..), they fail to transfect primary cells. It has surprisingly been found that the polyelectrolyte particles according to the present invention allow for high transfection level in primary cells while showing cytotoxicity in the same range as the conventional transfecting agents. In aqueous solution at physiological pH, the polyelectrolyte particles have a positive net charge. This means that the present invention provides a polycation based non-viral vector with high potentiality for transfecting primary as well as non-growing / differentiated cells. Furthermore, the polyelectrolyte particles according to the present invention offer the great advantage of providing for *in vivo* delivery of nucleic acids and thus for human gene therapy. Furthermore, the polyelectrolyte particles according to the present invention offer the great advantage of providing for delivery of nucleic acids in an aqueous solution comprising serum.

These objectives as well as others which will become apparent from the ensuing description are attained by the subject matter of the independent claims. Some of the embodiments of the present invention are defined by the subject matter of the dependent claims.

In one embodiment, the present invention relates to an *in vitro* method for transferring an anionic substance into a cell, the method comprising contacting the anionic substance and a polyelectrolyte particle in an aqueous solution at physiological or even at slightly acidic pH so as to form a complex, and contacting said complex and the cell, wherein the polyelectrolyte particle comprises at least 15 polymer chains, which in the aqueous solution have a positive net charge and radiate outward from a common branching centre so as to form the star-shaped polyelectrolyte particle, and wherein each polymer chain comprises at least 40 covalently linked monomer units on average.

Optionally, the polymer chains are linear polymer chains and the polyelectrolyte particle does not comprise any branched or cross-linked polymer chains.

According to an optional embodiment of the invention, the polymer chains are each formed at least in part by the polymerisation of ethylenically unsaturated monomers selected from the group consisting of dialkylamino alkyl(alk) acrylates, dialkylamino alkyl(alk)acrylamides, hydroxy alkyl(alk)acrylates, hydroxy alkyl(alk)acrylamides, alkyl(alk)acrylates and alkyl(alk)acrylamides.

According to a further optional embodiment of the invention, the polymer chains are each formed at least in part by the polymerisation of ethylenically unsaturated monomers comprising monomers having the following general formula (I):

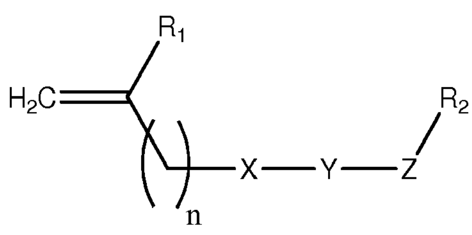

(I)

wherein:

$R_1$ is selected from hydrogen or optionally substituted -($C_1$-$C_3$)alkyl;
X is selected from -O-C(O)-, -C(O)-O-, -$NT_3$-C(O)- or -C(O)-$NT_3$-;
Y is -$(cH_2)_{m-}$;
Z is selected from -O-, -(O-$CH_2CH_2$)$_o$-, -($CH_2CH_2$-O)$_o$-, -O-C(O)-, -C(O)-O-, -$NT_3$-, - $NT_3$-C(O)- or -C(O)-$NT_3$-, or is absent;

n is an integer selected from 0, 1, or 2;
m is an integer selected from 0, 1, 2, 3, 4, or 5;
o is an integer selected from 1 to 10;
$R_2$ is selected from -H or -($C_1$-$C_3$)alkyl which is unsubstituted or substituted with 1 or 2 independently selected $R_4$ groups;
each $R_4$ is independently selected from -$OT_3$, -N($T_1$)($T_2$), -N($T_3$)C(=O)$T_3$, or -N($T_3$)C(=O)$OT_3$; and
each $T_1$, $T_2$, and $T_3$ is independently selected from -H or -($C_1$-$C_3$)alkyl.

According to a further optional embodiment of the invention, the polymer chains are each formed at least in part by the polymerisation of ethylenically unsaturated monomers comprising monomers having a general formula selected from the group consisting of formulae (II), (III) and (IV), wherein formulae (II), (III) and (IV) have the following chemical structures:

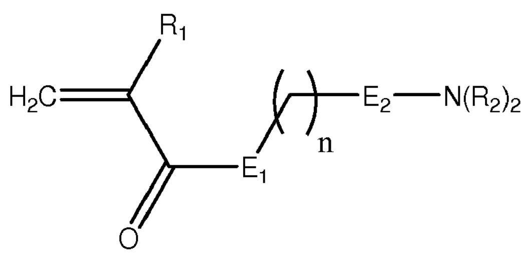

(II),

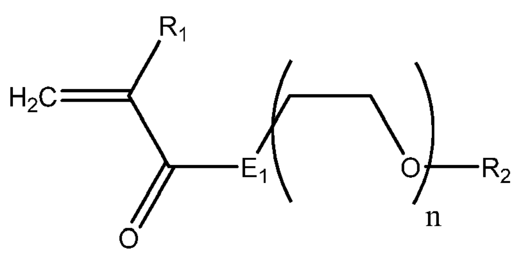

(III),

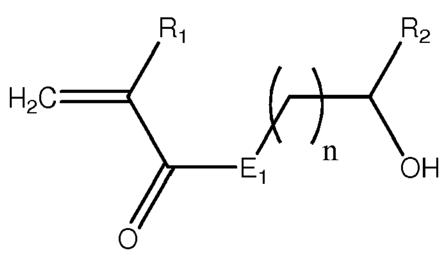

(IV),

wherein:

in formula (II):

$R_1$ is selected from -H, -$CH_3$ or -$CH_2CH_3$;
$E_1$ is selected from -O-, -NH-, or -N($CH_3$)-;
n is an integer selected from 0, 1 or 2;
$E_2$ is selected from -(NH-$CH_2$)$_m$-, -($CH_2$-NH)$_m$-, -(NH-$CH_2CH_2$)$_m$-, -($CH_2CH_2$-NH)$_{m-}$, -(N($CH_3$)-$CH_2$)$_m$-, -($CH_2$-N($CH_3$))$_m$-, -(N($CH_3$)-$CH_2CH_2$)$_m$-, -($CH_2CH_2$-N($CH_3$))$_m$-, or is absent;
m is an integer selected from 0, 1, 2, 3, 4, 5, or 6; and
$R_2$ is selected from -H, -$CH_3$ and -$CH_2CH_3$;

in formula (III):

$R_1$ is selected from -H, -$CH_3$ or -$CH_2CH_3$;

$E_1$ is selected from -O-, -NH-, or -N($CH_3$)-;
n is an integer selected from 1, 2, 3, 4, 5, 6, 7, 8, 9, or 10; and
$R_2$ is selected from -H, -$CH_3$ and -$CH_2CH_3$;

in formula (IV):

$R_1$ is selected from -H, -$CH_3$ or -$CH_2CH_3$;
$E_1$ is selected from -O-, -NH-, or -N($CH_3$)-;
n is an integer selected from 0, 1, 2, or 3; and
$R_2$ is selected from -H, -$CH_3$ and -$CH_2CH_3$-

According to an optional embodiment of the invention, the common branching centre is a branched, cross-linked polymer network, or is a silicate nanoparticle, optionally a silsesquioxane, or is a functionalized metal-containing nanoparticle.

In a specific embodiment of the invention, the functionalized metal-containing nanoparticle is selected from the group consisting of a functionalized magnetic nanoparticle, a functionalized iron oxide containing nanoparticle, and a functionalized maghemite nanoparticle.

According to an optional embodiment of the invention, the polymer chains are block copolymers and are arranged as spherical micelles having a micellar core in the aqueous solution so as to form the star-shaped polyelectrolyte particle, wherein the micellar core acts as common branching centre.

According to an optional embodiment of the invention, the polymer chains comprised by the polyelectrolyte particle together have a molecular weight of at least 500 kDa, 550 kDa, 600 kDa, 650 kDa, 700 kDa, 750 kDa, 800 kDa, 850 kDa, 900 kDa, 950 kDa, 1000 kDa, 1500 kDa, 2000 kDa, 2500 kDa, 3000 kDa, 3500 kDa, 4000 kDa, 4500 kDa, 5000 kDa, 6000 kDa, 7000 kDa, 8000 kDa, 9000 kDa, 10,000 kDa, 15,000 kDa, 20,000 kDa, or 30,000 kDa.

A further embodiment of the invention relates to a complex obtainable in the method according to any of claims 1 to 9.

A further embodiment of the invention relates to a polyelectrolyte particle as defined in any of claims 1 to 9, or the complex according to claim 10 for use in the curative, preventive or vaccinal treatment of an object, or for use as diagnostic tool in an object.

A further embodiment of the invention relates to a transfection, pharmaceutical or diagnostic composition comprising a polyelectrolyte particle as defined in any of claims 1 to 9, or the complex according to claim 10.

A further embodiment of the invention relates to a use of a polyelectrolyte particle as chemical-based transfection agent for transferring an anionic substance into a cell, wherein the polyelectrolyte particle comprises at least 15 polymer chains which in an aqueous solution at physiological pH have a positive net charge and radiate outward from a common branching centre so as to form the star-shaped polyelectrolyte particle, and wherein each polymer chain comprises at least 40 covalently linked monomer units on average.

According to an optional embodiment of the invention, the anionic substance is a nucleic acid, optionally being selected from the group consisting of cDNA, genomic DNA, plasmid DNA, messenger RNA, antisense RNA, siRNA, short hairpin RNA, micro-RNA, ribozymes, transfer RNA, ribosomal RNA, and DNA encoding for such types of RNA.

According to an optional embodiment of the invention, the polymer chains comprise quaternized nitrogen atoms and the N/P ratio is between 5 and 50.

## FIGURE LEGENDS

The accompanying drawings, which are incorporated and form part of the specification, merely illustrate certain embodiments of the present invention. They are meant to serve to explain specific modes of the present invention to those of skilled in the art. In the drawings:

Figure 1 depicts the $^1H$ NMR spectrum of the Si-PDMAEMA particle with $CDCl_3$ as the solvent.

Figure 2 depicts the distribution of the hydrodynamic radii of the Si-PDMAEMA particle in MilfiQ® water (1 g/L, $\Theta$ = 90˚) from dynamic light scattering measurements.

Figure 3 depicts an evolution of the pH value (A) and conductivity (B) of 0.5 g/L polymer solutions (b-PEI and Si-PDMAEMA particle depicted in solid and dotted lines, respectively) and pure MilliQ water (dashed line) with the addition of 0.1 N HCl.

Figure 4 depicts a summary of the cell lines transfection with b-PEI and Si-PDMAEMA polycations. DNA concentration

in all cases was 15 μg/mL, polymer concentrations were adjusted to the indicated N/P ratio. Data represent mean ± s.e.m, $n \geq 5$.[a]: Data represent mean ± s.e.m, $n \geq 2$.

Figure 5 depicts a summary of transfection in the presence of serum in CHO cells with PEI and Si-PDMAEMA polycations. DNA concentration in all cases was 15 μg/mL, polymer concentrations were adjusted to the indicated N/P ratio.

Figure 6 depicts a summary of the transfection data in non-dividing and end-differentiated C2C12 with PEI and Si-PDMAEMA polycations. DNA concentration in all cases was 15 μg/mL, polymer concentrations were adjusted to the indicated N/P ratio. Data represent mean ± s.e.m, $n \geq 9$. Cell cycle distribution on the day of transfection:

[a]: sub-G1: 0.5 %, G1: 81.3 %, S: 15.3 %, G2/M: 0.5 %.
[b]: sub-G1: 7.7 %, G1: 87.5 %, S: 5.1 %, G2/M: 0.2 %.

Figure 7 depicts a comparative analysis of gene delivery in non-dividing and differentiated (myoblast) C2C12 cells. Transfection efficiency in non-dividing (■, □) and differentiated (▲, △) cells was plotted against the viability. Cells transfected with PEI (black symbols) or star-shaped Si-PDMAEMA (Si-PDMAEMA, white symbols) at N/P10 were analyzed for EGFP expression at day 2 post-transfection. The relative expression of EGFP fluorescence was quantified *via* flow cytometry. Dead cells were identified *via* counterstaining with propidium iodide. Data shown are from 10 to 14 individual transfections. The cell cycle distribution of the cells prior transfection was analyzed by flow cytometry.

Figure 8 depicts a comparative analysis of gene delivery in primary human T cells. Lymphocytes transfected with PEI or Si-PDMAEMA at N/P 10 or electroporated were analyzed for EGFP expression at day 2 post-transfection. Transfected cells were identified by gating on living lymphocyte population.

(A) Relative percentage of viable transfected EGFP-expressing cells.
(B) Mean fluorescence intensity (MFI) of all viable cells.
(C) Relative viability after transfection was assessed by propidium-iodide staining of the dead cells at the time of analysis of transgene expression. The viability is given in percent of living cells of transfected samples versus living cells of the non-transfected sample. Data shown are from 5 individual PBMCs samples.

Figure 9 depicts a scheme of the synthesis strategy and dual-responsive behavior of the NP@PDMAEMA particles.

Figure 10A depicts the TEM-micrograph of oleic acid stabilized nanoparticles prepared by drop-coating from toluene ($c < 0.1$ g/L) on a copper grid. Figure 10B depicts the DLS curve of oleic acid stabilized nanoparticles ($c = 0.5$ g/L, $\Theta = 90^\circ$).

Figure 11A depicts the EDX spectrum of purified NP@Dopamine initiator. Figure 11B depicts the FT-IR spectra of pure dopamine based ATRP-initiator (a), pure oleic acid (b), purified nanoparticles covered by oleic acid NP@Oleic acid (c) and purified ATRP-initiator functionalized particles NP@Dopamine initiator (d).

Figure 12A depicts the TGA of pure dopamine based ATRP initiator. Figure 12B depicts the comparison of TGA traces of NP@Oleic acid (O) and NP@Dopamine initiator (■).

Figure 13 depicts a comparison of the TGA curves of a) NP@Dopamine initiator, b) NP@$PDMAEMA_{46}$.

Figure 14 depicts TEM micrographs of NP@$PDMAEM_{A4}$6 drop-coated from water onto hydrophylized carbon-coated copper grids at different magnifications.

Figure 15 depicts aqueous NP@PDMAEMA-solution under influence of a NdFeB-magnet below LCST (left) and above LCST (right).

Figure 16 depicts the normalized magnetization curves of NP@Oleic acid (●) and NP@$PDMAEMA_{46}$ (D), and corresponding Ivanov fits (black line).

Figure 17 depicts the distribution of the hydrodynamic radii determined with DLS of $B_{290}DMAEMA_{240}$in PBS buffer solution at a concentration of 10.65 g/L ($\Theta = 90^\circ$).

Figure 18 depicts cryogenic TEM micrographs of $B_{290}DMAEMA_{240}$(10.65 g/L) in PBS buffer solution. The scalebars represent 500 nm (A) and 200 nm (B), respectively.

## DETAILED DESCRIPTION OF THE INVENTION

The present invention illustratively described in the following may suitably be practiced in the absence of any element or elements, limitation or limitations, not specifically disclosed herein.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where the term "comprising" is used in the present description and claims, it does not exclude other elements or steps. For the purposes of the present invention, the term "consisting of' is considered to be a preferred embodiment of the term "comprising of'. If hereinafter a group is defined to comprise at least a certain number of embodiments, this is also to be understood to disclose a group which optionally consists only of these embodiments.

Where an indefinite or definite article is used when referring to a singular noun e.g. "a" or "an", "the", this includes a plural of that noun unless something else is specifically stated.

The term "about" in the context of the present invention denotes an interval of accuracy that the person skilled in the art will understand to still ensure the technical effect of the feature in question. The term typically indicates deviation from the indicated numerical value of ± 10%, and optionally ± 5%.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Further definitions of term will be given in the following in the context of which the terms are used.

In one embodiment, the present invention relates to the use of a polyelectrolyte particle as chemical-based transfection agent for transferring an anionic substance into a cell, wherein the polyelectrolyte particle comprises at least 15 polymer chains which in an aqueous solution at physiological pH have a positive net charge and radiate outward from a common branching centre so as to form the star-shaped polyelectrolyte particle, and wherein each polymer chain comprises at least 40 covalently linked monomer units on average.

In another embodiment, the present invention relates to an *in vitro* method for transferring an anionic substance into a cell, the method comprising contacting the anionic substance and a polyelectrolyte particle in an aqueous solution at physiological pH so as to form a complex, and contacting said complex and the cell, wherein the polyelectrolyte particle comprises at least 15 polymer chains, which in the aqueous solution have a positive net charge and radiate outward from a common branching centre so as to form the star-shaped polyelectrolyte particle, and wherein each polymer chain comprises at least 40 covalently linked monomer units on average.

A further embodiment of the present invention is directed to a complex obtainable by contacting an anionic substance and a polyelectrolyte particle in an aqueous solution at physiological pH, wherein the polyelectrolyte particle comprises at least 15 polymer chains, which in the aqueous solution have a positive net charge and radiate outward from a common branching centre so as to form the star-shaped polyelectrolyte particle, and wherein each polymer chain comprises at least 40 covalently linked monomer units on average.

In particular, when used herein, the term "polyelectrolyte particle" denotes a star-shaped particle that comprises a certain number of "polymer chains" (also designated as "polymer arms") radiating outward from a common branching centre so as to form the star-shaped polyelectrolyte particle. In the context of the present invention, the term "star-shaped particle" (as designated as "star polymer") thus concerns a macromolecule having a common branching centre (also designated as "central anchoring point" or "branch point") with branches radiating from the centre or point (i.e. the polymer arms). In a specific embodiment according to the present invention, the polymer chains of the polyelectrolyte particle possess a positive net charge at physiological pH. An example of such a star-shaped polyelectrolyte particle is a so-called star polymer, i.e. a branched polymer molecule in which a single branch point gives rise to multiple linear chains or arms. A further example of such a star-shaped polyelectrolyte particle is a spherical micelle, i.e. the polymer chains in the aqueous solution are arranged as spherical micelles having a micellar core, wherein the micellar core acts as common branching centre giving rise to multiple linear chains or arms.

When used herein, the term "polymer" generally denotes a large molecule (macromolecule) composed of repeating structural units (i.e. monomer units), which subunits are typically connected by covalent chemical bonds. In the context of the present invention, "polymerization" is the process of combining many small molecules known as monomers into a covalently bonded chain. During the polymerization process, some chemical groups may be lost from each monomer. The distinct piece of each monomer that is incorporated into the polymer is known as a "repeat unit", "monomer unit" or "monomer residue". The polymer nomenclature is generally based upon the type of monomer residues

comprising the polymer. Polymers that contain only a single type of repeat unit are known as "homopolymers", while polymers containing a mixture of repeat units are known as "copolymers".

In the context of the present invention, a "polyelectrolyte particle" is a particle comprising several polymer arms whose repeating units bear electrolyte groups. Polyelectrolyte properties are thus similar to both electrolytes (salts) and polymers (high molecular weight compounds). Also many biological molecules (such as, e.g., polypeptides and nucleic acids) are polyelectrolytes. It is understood that the "polyelectrolyte particle" according to the invention has a positive net charge in aqueous solution and thus represents a "cationic particle", which is able to form a complex with an anionic substance (such as nucleic acids). It is understood that at least some of the repeating units of the the polymer arms comprised by the polyelectrolyte particle according to the invention comprise positively charged nitrogen atoms (also designated as "quaternized nitrogen atoms").

In the context of the present invention, the term "polyelectrolyte particle" (also designated as "cationic particle" or "cationic polymer") thus refers to a water soluble particle which in an aqueous solution, generally at physiological pH, has a positive net charge. In order to be able to bind an anionic substance, the polyelectrolyte particle according to the present invention should possess a positive charge at physiological pH. For instance, and without being limiting, the polyelectrolyte particle should be able to bind and condense nucleic acids such as DNA, e.g. in the form of a plasmid, wherein a gene construct is incorporated.

In chemistry, pH is a measure of the acidity or basicity of an aqueous solution. Measuring the pH is routine to the person skilled in the art. In the context of the present invention, the term "physiological pH" denotes the pH of the cell to be transfected in its natural environment. For instance, for mammalian cells, the physiological pH generall is a slightly basic pH typically between about 7.2 and about 7.4. This value is often referred to as physiological pH in biology and medicine. In the context of the present invention, the conditions where the complex is formed can be readily determined by the skilled person (based on the structural features of the particle according to the invention), and preferably refer to an aqueous solution at physiological pH or at slightly acid pH.

An important microstructural feature determining polymer properties is the polymer architecture. The simplest polymer architecture is a linear chain: a single backbone with no branches. A related unbranching architecture is a "ring polymer". A "branched polymer" molecule is composed of a main chain with one or more substituent side chains or branches. Special types of branched polymers include star polymers, comb polymers, brush polymers, dendronized polymers, ladders, and dendrimers.

The architecture of the polymer chains is often physically determined by the functionality of the monomers from which it is formed. This property of a monomer is defined as the number of reaction sites at which may form chemical covalent bonds. The basic functionality required for forming even a linear chain is two bonding sites. Higher functionality yields branched or even crosslinked or networked polymer chains. In an optional embodiment, the monomer units comprised by the polymer chains of the polyelectrolyte particle each contain two bonding sites.

In particular, when used herein, the term "graft polymer" denotes a branched polymer molecule in which one or more the side chains are different, structurally or configurationally, from the main chain. The term "star polymer" (or star-shaped polymer") denotes a branched polymer molecule in which a single branch point gives rise to multiple linear chains or arms. If the arms are identical the star polymer molecule is said to be "regular". If adjacent arms are composed of different repeating subunits, the star polymer molecule is said to be "variegated". In the context of the present invention, a "comb polymer" molecule consists of a main chain with two or more three-way branch points and linear side chains. When used herein, the term "brush polymer" denotes a molecule consisting of a main chain with linear, unbranched side chains and where one or more of the branch points has four-way functionality or larger. A "polymer network", as used herein, denotes a network in which all polymer chains are interconnected to form a single macroscopic entity by many crosslinks.

Branching of polymer chains affects the ability of chains to slide past one another by altering intermolecular forces, in turn affecting bulk physical polymer properties. The effect of such long-chain branches on the size of the polymer in solution is characterized by the "branching index". Dendrimers are a special case of polymer where every monomer unit is branched. Alternatively, dendritic polymers are not perfectly branched but share similar properties to dendrimers due to their high degree of branching.

In an optional embodiment of the invention, the polymer chains are linear polymer chains and the polyelectrolyte particle does not comprise any branched or cross-linked polymer chains.

A means of expressing the length of a polymer chain is the degree of polymerization, which quantifies the number of monomer units incorporated into the chain. As with other molecules, a polymer’s size may also be expressed in terms of molecular weight. It is understood that since synthetic polymerization techniques typically yield a polymer product including a range of molecular weights, the weight is expressed statistically to describe the distribution of chain lengths present in the same. Common examples are the number average molecular weight and weight average molecular weight. The ratio of these two values is the polydispersity index, used to express the "width" of the molecular weight distribution. A final measurement is contour length, which can be understood as the length of the chain backbone in its fully extended state. It is understood that the polymer chains comprised by the polyelectrolyte particle according to the

invention comprises at least 20 covalently linked monomer units on average. The size distribution can be characterized statistically by its weight average molecular weight ($M_w$) and its number average molecular weight ($M_n$), the ratio of which is called the polydispersity index ($M_w/M_n$).The measure of $M_w$ and $M_n$ and the determination of the polydispersity index is routine to the person skilled in the art.

In particular, when used herein, the term "polymer chain" can denote a homopolymer or a copolymer. In the context of the present invention, monomer units within a copolymer may be organized along the backbone in a variety of ways:

(1) -A-A-A-A-A-A-A-A-A-A-
(2) -A-B-A-B-A-B-A-B-A-B-
(3) -A-B-B-B-A-B-A-B-A-A-
(4) -B-B-B-B-B-A-A-A-A-A-

(1) depicts a typcial homopolymer. "Alternating copolymers" possess regularly alternating monomer residues: $[AB...]_n$ (2). "Periodic copolymers" have monomer residue types arranged in a repeating sequence: $[A_nB_m...]$, m being different from n. "Statistical copolymers" have monomer residues arranged according to a known statistical rule. A statistical copolymer in which the probability of finding a particular type of monomer residue at an particular point in the chain is independent of the types of surrounding monomer residue is referred to as a truly random copolymer (3). "Block copolymers" have two or more homopolymer subunits linked by covalent bonds (4). Polymers with two or three blocks of two distinct chemical species (e.g., A and B) are called "diblock copolymers" and "triblock copolymers", respectively. Polymers with three blocks, each of a different chemical species (e.g., A, B, and C) are termed "triblock terpolymers". In an optional embodiment, the polymer chains comprised by the polyelectrolyte particle are homopolymers (1) or diblock copolymers (4).

Furthermore, in the context of the present invention, the polymer chains comprised by the polyelectrolyte particle may be regular (i.e. adjacent arms are composed of substantially the same repeating subunits or polymer blocks) or may be variegated (i.e. adjacent arms are composed of different repeating subunits or polymer blocks).

It is understood that there are multiple conventions for naming polymer substances. Many commonly used polymers, such as those found in consumer products, are referred to by a common or trivial name. The trivial name is assigned based on historical precedent or popular usage rather than a standardized naming convention. Both the American Chemical Society (ACS) and IUPAC have proposed standardized naming conventions; the ACS and IUPAC conventions are similar but not identical. As used herein, the polymers' names are intended to reflect the monomer unit (s) from which they are synthesized rather than the precise nature of the repeating subunit.

Examples of polymer chains comprised by the polyelectrolyte particle according to the invention are polymers (i.e. homopolymers or copolymers) comprising polyethylenglycols, polyoxazolines, optionally substituted poly(alk)acrylates, optionally substituted poly(alk)acrylamides, polylysines, and polyethyleneimines. It is however understood that at least some of the repeating units of the polymer arms comprised by the polyelectrolyte particle according to the invention contain positively charged nitrogen atoms.

In the context of the present invention, at least some of the repeating units of the polymer arms comprised by the polyelectrolyte particle according to the invention can be polyethylenglycol. Polyethylene glycol (PEG) is a polyether compound with many applications from industrial manufacturing to medicine. It has also been known as polyethylene oxide (PEO) or polyoxyethylene (POE), depending on its molecular weight. As used herein, PEG, PEO, or POE refers to a polymer of ethylene oxide. The three names are chemically synonymous, but historically PEG has tended to refer to oligomers and polymers with a molecular mass below 20,000 g/mol, PEO to polymers with a molecular mass above 20,000 g/mol, and POE to a polymer of any molecular mass. Different forms of PEG are also available dependent on the initiator used for the polymerization process, the most common of which is a monofunctional methyl ether PEG (methoxypoly(ethylene glycol)), abbreviated mPEG. PEG or PEO as used in the polymer arms according to the invention has the following chemical structure: $-(CH_2-CH_2-O)_n-$, wherein n indicates the number of repeating units. According to an optional embodiment of the invention, the polymer arms are diblock copolymers having a homopolymer subunit of PEG or PEO linked by covalent bonds to a further homopolymer subunit.

In the context of the present invention, at least some of the repeating units of the polymer arms comprised by the polyelectrolyte particle according to the invention can be polyoxazoline. In the context of the present invention, polyoxazoline polymers are referred to as products of the cationic ring-opening polymerization of optionally substituted oxazolines.. According to an optional embodiment of the invention, the polymer arms are diblock copolymers having a homopolymer subunit of polyoxazoline linked by covalent bonds to a further homopolymer subunit.

In the context of the present invention, a typical example of polymerization can be the ring-opening polymerization of 2-oxazolines. 2-Oxazolines are five-membered cyclic imino ethers (imidates), which are heterocyclic compounds with an imino ether linkage. Cationic ring-opening polymerization of such cyclic imino ethers generally involves a thermodynamically favorable isomerization of the imino ether group to the amide. Suitable monomers for such polymerization

reactions include:

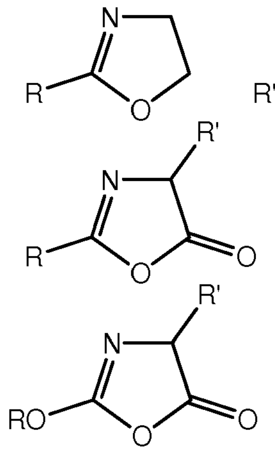
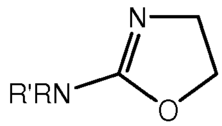
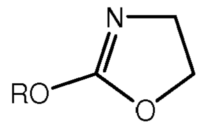
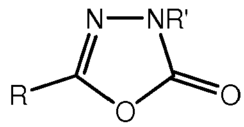
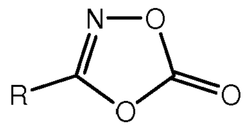

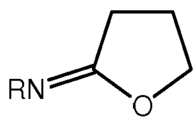
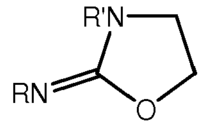
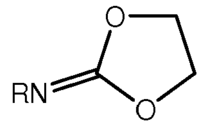

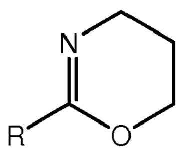
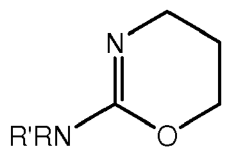
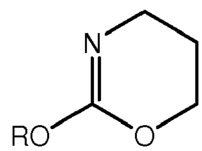

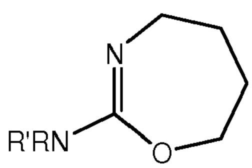
,

wherein each R and R' are independently selected from -H, -phenyl, -($C_1$-$C_6$)alkyl or -($C_3$-$C_7$)cycloalkyl, each of which is unsubstituted or substituted with 1 or 2 independently selected $R_2$ groups;
each $R_2$ is independently selected from -C(=O)N($T_3$), -N($T_1$)($T_2$), -N($T_3$)C(=O)$T_3$, -N($T_3$)C(=O)O$T_3$, or -N($T_3$)C(=O)N ($T_1$)($T_2$); and
each $T_1$, $T_2$, and $T_3$ is independently selected from -H, $-CH_3$ or $-CH_2CH_3$.
The synthesis of such monomers is known to the person skilled in the art (see, e.g., K. Aoi and M. Okada (1996), Prog. Polym. Sci 21: 151-208).

Various kinds of cationic initiators have been used for the polymerization of 2-oxazolines. In the context of the present invention, types of initiators for the polymerization of cyclic imino ethers include sulfonate esters (such as p-$MeC_6H_4SO_3Me$, p-$O_2NC_6H_4SO_3Me$, $CF_3SO_3Me$, $FSO_3Me$), sulfate esters (such as $(MeO)_2SO_2$), sulfonic anhydrides (such as $MeSO_2)_2O$), alkyl halides (such as $PhCH_2Cl$), protonic acids (such as $HClO_4$, $CF_3SO_3H$, $H_2SO_4$, HBr), Lewis acids ($BF_3$, $AlCl_3$, $TiCl_4$, $PF_5$, $SbF_5$), salts of Lewis acids (such as $Et_3O^+BF_4^-$), alkyl haloformates, oxazolinium salts and electron acceptors. The selection of suitable initiators as well as the selection of suitable polymerization methods is within the knowledge of the skilled person (see, e.g., K. Aoi and M. Okada (1996), Prog. Polym. Sci 21: 151-208).

According to an optional embodiment of the invention, the polymer chains diblock copolymers based on 2-methyl-2-oxazoline (MeOx) and 2-phenyl-2-oxazoline (PhOx). It is well known in the art that poly(2-oxazoline)s can be used as precursor for the synthesis of linear poly(ethylene imine) (PEI) via acidic or basic hydrolysis (see, e.g., H. M. L. Lambermont-Thijs et al. (2011), Polym. Chem. 2: 313-322).

In the context of the present invention, at least some of the repeating units of the polymer arms comprised by the polyelectrolyte particle according to the invention can be polycaprolactone. In the context of the present invention,

polycaprolactone polymers are referred to as aliphatic polyesters composed of hexanoate repeat units. According to an optional embodiment of the invention, the polymer arms are diblock copolymers having a homopolymer subunit of polycaprolactone linked by covalent bonds to a further homopolymer subunit. The synthesis of such polycaprolactones is known to the person skilled in the art (see, e.g., M. Labet and W. Thielemans (2009), Chem. Soc. Rev. 38:3484-3504; being incorporated herein by reference).

In the context of the present invention, at least some of the repeating units of the polymer arms comprised by the polyelectrolyte particle according to the invention can be polylysine. Polylysine (ε-poly-L-lysine, EPL) is a small natural homopolymer of the essential amino acid L-lysine that is produced by bacterial fermentation. Polylysine as used in the polymer arms according to the invention has the following chemical structure: $-(C(=O)-CH(NH_2)-(CH_2)_4-NH)n^-$, wherein n indicates the number of repeating units. According to an optional embodiment of the invention, the polymer arms are diblock copolymers having a homopolymer subunit of polylysine linked by covalent bonds to a further homopolymer subunit.

In the context of the present invention, at least some of the repeating units of the polymer arms comprised by the polyelectrolyte particle according to the invention can be polyethyleneimine (PEI). Linear polyethyleneimines (PEIs) contain only secondary amines, in contrast to branched PEIs which contain primary, secondary and tertiary amino groups. Linear PEI as used in the polymer arms according to the invention has the following chemical structure: $-(CH_2-CH_2-NH)_n-$, wherein n indicates the number of repeating units. According to an optional embodiment of the invention, the polymer arms are diblock copolymers having a homopolymer subunit of linear PEI linked by covalent bonds to a further homopolymer subunit. Linear PEI is known to exhibit interesting solubility properties since it is soluble in water at elevated temperatures and insoluble in water at room temperature. This specific behavior is ascribed to a phase separation induced by crystallization of linear PEI. At low temperatures, the unsubstituted flexible polymer chains favor ordered packing in hydrated crystals while at elevated temperature the increased chain mobility causes a melting of the crystals and, therefore, dissolution. In literature, several block copolymers are reported combining these interesting properties of PEI with other common polymers (H. M. L. Lambermont-Thijs et al. (2011), Polym. Chem. 2: 313-322). According to a further optional embodiment of the invention, the polymer arms are diblock copolymers having a homopolymer subunit of branched PEI linked by covalent bonds to a further homopolymer subunit.

In a specic embodiment of the present invention, the polymer chains are each formed at least in part by the polymerisation of monomers are selected from the group consisting of APMA (3-aminopropyl methacrylamide), Boc-AEMA (N-tert-butoxycarbonyl-aminoethyl methacrylate), Boc-AEAEMA (N,N'-di-(tert-butoxycarbonyl)-2-(2-aminoethylamino)ethyl methacrylate), DEAEMA (2-(diethylamono)ethyl methacrylate), DMAEMA (2-methylaminoethyl methacrylate), DMAPMAA (N-(3-(dimethylamino)propyl) methacrylamide), DPAEMA (2-(diisopropylamino)ethyl methacrylate), MeDMA (2-(methacryloyloxy)ethyl) trimethyl ammonium chloride), HAEAPMA (2-hydroxy-3-(2-aminoethyl)amino)propyl methacrylate), BMA (butyl methacrylate), GAPMA (3-gluconamidopropyl methacrylamide), GMA (glycidyl methycrylate), HEMA (2-hydroxyethyl methacrylate), HPMA (N-(2-hydroxypropyl)methacrylamide), LAEMA (2-lactobionamidoethyl methacrylamide), MAS (methyacryloxysuccinimide), MPC (2-methacryloyloxyethyl phosphorylcholine), NIPAAm (N-isopropylacrylamide), OEGMA (oligo(ethylene glycol) methacrylate), St (styrene) and tBA (tert-butyl(meth)acrylate). The synthesis of these polymer chains can be conducted by using controlled polymerization methods, as for example either reversible addition-fragmentation chain transfer or atom transfer radical polymerization. The selection of a suitable sythesis method and the provision of such polymer chains is known to the skilled person.

In the context of the present invention, at least some of the repeating units of the polymer arms comprised by the polyelectrolyte particle according to the invention generally, but not necessarily, are optionally substituted poly(alk)acrylates or optionally substituted poly(alk)acrylamides. More in particular, a specific embodiment of the invention relates to water soluble or water dispersible polyacrylate, polyacrylamide, polymethacrylate, polymethacrylamide, poly(alkyl) methacrylate, poly(alkyl)methacrylamide, poly(alkyl)acrylate or poly(alkyl)acrylamide based transfection systems, wherein cationic moieties are attached to the polyacrylate, poly(alkyl)methacrylate, polymethacrylate or poly(alkyl)acrylate backbone or the backbone of the corresponding acrylamides.

In the context of the present invention, the term "(alk)acrylate" refers to the ester of 2-alkyl-2-propenoic acid, and more specifically to the ester of 2-methyl-2-propenoic acid, 2-ethyl-2-propenoic acid, or 2-propyl-2-propenoic acid. In the context of the present invention, the term "(alk)acrylamide" refers to the amide of 2-alkyl-2-propenoic acid, and more specifically to the ester of 2-methyl-2-propenoic acid, 2-ethyl-2-propenoic acid, or 2-propyl-2-propenoic acid. The terms "poly(alk)acrylate" or "poly(alk)acrylamide" denote polymers which are each formed at least in part by the polymerisation of ethylenically unsaturated esters or amides of 2-alkyl-2-propenoic acid, respectively.

According to a specific embodiment of the present invention, the polymer chains are each formed at least in part by the polymerisation of ethylenically unsaturated monomers selected from the group consisting of dialkylamino alkyl(alk)acrylates, dialkylamino alkyl(alk)acrylamides, hydroxy alkyl(alk)acrylates, hydroxy alkyl(alk)acrylamides, alkyl (alk)acrylates and alkyl(alk)acrylamides.

According to an optional embodiment, the polymer chains are each formed at least in part by the polymerisation of ethylenically unsaturated monomers comprising monomers having the following general formula (I):

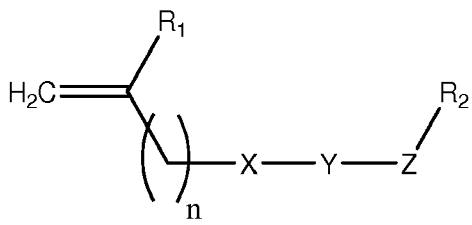

(I)

wherein:

$R_1$ is selected from hydrogen or optionally substituted -($C_1$-$C_3$)alkyl;
X is selected from -O-C(O)-, -C(O)-O-, -$NT_3$-C(O)- or -C(O)-$NT_3$-;
Y is -$(CH_2)_m$-;
Z is selected from -O-, -(O-$CH_2CH_2$)$_o$-, -($CH_2CH_2$-O)$_o$-, -O-C(O)-, -C(O)-O-, -$NT_3$-, - $NT_3$-C(O)- or -C(O)-$NT_3$-, or is absent;
n is an integer selected from 0, 1, or 2;
m is an integer selected from 0, 1, 2, 3, 4, or 5;
o is an integer selected from 1 to 10;
$R_2$ is selected from -H or -($C_1$-$C_3$)alkyl which is unsubstituted or substituted with 1 or 2 independently selected $R_4$ groups;
each $R_4$ is independently selected from -$OT_3$, -N($T_1$)($T_2$), -N($T_3$)C(=O)$T_3$, or -N($T_3$)C(=O)O$T_3$; and
each $T_1$, $T_2$, and $T_3$ is independently selected from -H or -($C_1$-$C_3$)alkyl.

According to a further optional embodiment, the polymer chains are each formed at least in part by the polymerisation of ethylenically unsaturated monomers comprising monomers having a general formula selected from the group consisting of formulae (II), (III) and (IV), wherein formulae (II), (III) and (IV) have the following chemical structures:

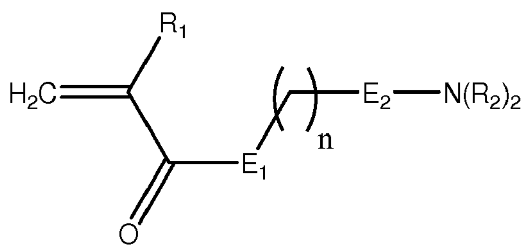

(II),

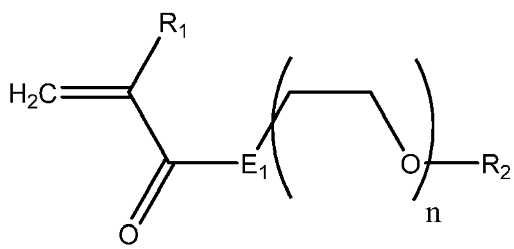

(III),

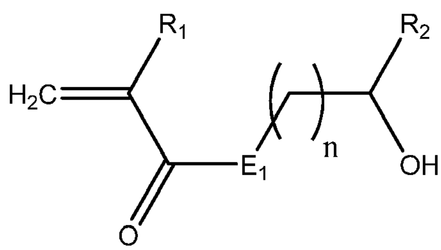

(IV),

wherein:

in formula (II):

$R_1$ is selected from -H, $-CH_3$ or $-CH_2CH_3$;
$E_1$ is selected from -O-, -NH-, or $-N(CH_3)-$;
n is an integer selected from 0, 1 or 2;
$E_2$ is selected from $-(NH-CH_2)_m-$, $-(CH_2-NH)_m-$, $-(NH-CH_2CH_2)_{m-,}$ $-(CH_2CH_2-NH)_m-$, $-(N(CH_3)-CH_2)_m-$, $-(CH_2-N(CH_3))_m-$, $-(N(CH_3)-CH_2CH_2)_m-$, or $-(CH_2CH_2-N(CH_3))_m-$, or is absent;
m is an integer selected from 0, 1, 2, 3, 4, 5, or 6; and
$R_2$ is selected from -H, $-CH_3$ and $-CH_2CH_3$;

in formula (III):

$R_1$ is selected from -H, $-CH_3$ or $-CH_2CH_3$;
$E_1$ is selected from -O-, -NH-, or $-N(CH_3)-$;
n is an integer selected from 1, 2, 3, 4, 5, 6, 7, 8, 9, or 10; and
$R_2$ is selected from -H, $-CH_3$ and $-CH_2CH_3$;

in formula (IV):

$R_1$ is selected from -H, $-CH_3$ or $-CH_2CH_3$;
$E_1$ is selected from -O-, -NH-, or $-N(CH_3)-$;
n is an integer selected from 0, 1, 2, or 3; and
$R_2$ is selected from -H, $-CH_3$ and $-CH_2CH_3$-

According to a further optional embodiment, the polymer chains are each formed at least in part by the polymerisation of ethylenically unsaturated monomers comprising monomers having a general formula selected from the group consisting of formulae (V), (VI), (VII) and (VIII), wherein formulae (V), (VI), (VII) and (VIII) have the following chemical structures:

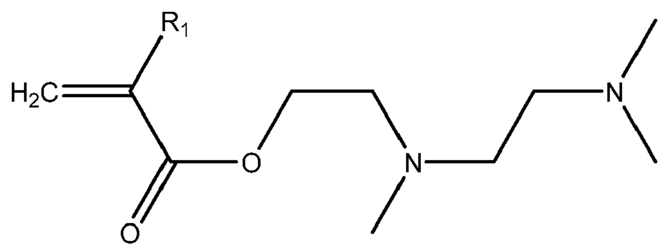

(V),

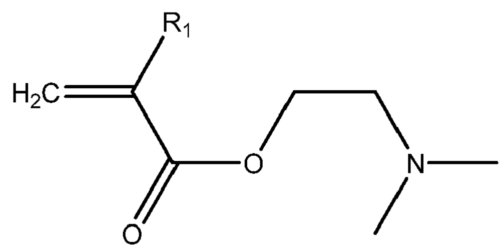

(VI),

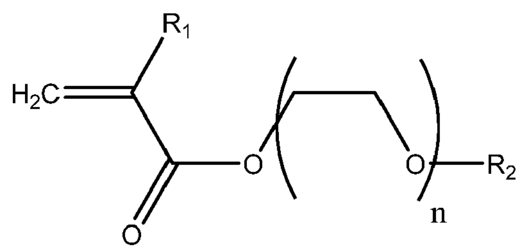

(VII),

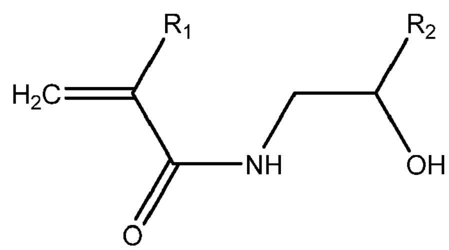

(VIII),

wherein:

in formula (V):

$R_1$ is selected from -H, $-CH_3$ or $-CH_2CH_3$;

in formula (VI):

$R_1$ is selected from -H, $-CH_3$ or $-CH_2CH_3$;

in formula (VII):

$R_1$ is selected from -H, $-CH_3$ or $-CH_2CH_3$;
n is an integer selected from 1, 2, 3, 4, 5, 6, 7, 8, 9, or 10; and
$R_2$ is selected from -H, $-CH_3$ and $-CH_2CH_3$;

in formula (VIII):

$R_1$ is selected from -H, $-CH_3$ or $-CH_2CH_3$; and
$R_2$ is selected from -H, $-CH_3$ and $-CH_2CH_3$-

According to a further optional embodiment, the polymer chains are each formed at least in part by the polymerisation of ethylenically unsaturated monomers having the general formula (VI), wherin $R_1$ is defined as above.

According to a very specific embodiment, the polymer chains are each formed by the polymerisation of ethylenically unsaturated monomers having the general formula (VI), wherin $R_1$ is defined as above. According to a further very specific embodiment, the polymer chains are each formed by the polymerisation of DMAEMA ((2-dimethylamino) ethyl methacrylate).

As used in connection with the polymers herein, the terms used herein having following meaning:

When a first group is "substituted with one or more" second groups, one or more hydrogen atoms of the first group is replaced with a corresponding number of second groups. When the number of second groups is two or greater, each second group can be the same or different. In one embodiment, a first group is substituted with up to three second groups. In another embodiment, a first group is substituted with one or two second groups. In another embodiment, a first group is substituted with only one second group.

"-($C_1$-$C_6$)alkyl" means a straight chain or branched non-cyclic hydrocarbon having from 1 to 6 carbon atoms. Representative straight chain -($C_1$-$C_6$)alkyls include -methyl, -ethyl, - n-propyl, -n-butyl, -n-pentyl, and -n-hexyl. Representative branched -($C_1$-$C_6$)alkyls include -*iso*-propyl, -*sec*-butyl, -*iso*-butyl, -*tert- butyl,* -*iso*-pentyl, -neopentyl, 1-methylbutyl, 2-methylbutyl, 3-methylbutyl, 1,1-dimethylpropyl, 1,2-dimethylpropyl, 1-methylpentyl, 2-methylpentyl, 3-methylpentyl, 4-methylpentyl, 1-ethylbutyl, 2-ethylbutyl, 3-ethylbutyl, 1,1-dimethtylbutyl, 1,2-dimethylbutyl, 1,3-dimethylbutyl,

2,2-dimethylbutyl, 2,3-dimethylbutyl, and 3,3-dimethylbutyl.

"-($C_3$-$C_7$)cycloalkyl" means a saturated monocyclic hydrocarbon having from 3 to 7 carbon atoms. Representative ($C_3$-$C_7$)cycloalkyls include cyclopropyl, -cyclobutyl, -cyclopentyl, -cyclohexyl, -and cycloheptyl.

"-($C_1$-$C_4$)alkyl" means a straight chain or branched non-cyclic hydrocarbon having from 1 to 4 carbon atoms. Representative straight chain -($C_1$-$C_4$)alkyls include -methyl, -ethyl, - n-propyl, and -n-butyl. Representative branched -($C_1$-$C_4$)alkyls include -*iso*-propyl, -*sec*-butyl, -*iso*-butyl, and -*tert*-butyl.

"-($C_1$-$C_3$)alkyl" means a straight chain or branched non-cyclic hydrocarbon having from 1 to 3 carbon atoms. Representative straight chain -($C_1$-$C_3$)alkyls include -methyl, -ethyl, and - n-propyl. Representative branched -($C_1$-$C_3$) alkyls include -iso-propyl.

"-($C_1$-$C_2$)alkyl" means a straight chain non-cyclic hydrocarbon having 1 or 2 carbon atoms. Representative straight chain -($C_1$-$C_2$)alkyls include -methyl and -ethyl.

"-(5- or 6-membered)heteroaryl" means a monocyclic aromatic heterocycle ring of 5 or 6 members where at least one carbon atom is replaced with a heteroatom independently selected from nitrogen, oxygen, and sulfur. In one embodiment, one of the -(5- or 6-membered)heteroaryl's ring contains at least one carbon atom. Representative -(5- or 6-membered)heteroaryls include pyridyl, furyl, pyrrolyl, oxazolyl, imidazolyl, thiazolyl, isoxazolyl, 1,2,3-oxadiazolyl, 1,3,4-oxadiazolyl, 1,2,5-oxadiazolyl, 1,2,3-triazolyl, pyrazolyl, isothiazolyl, pyridazinyl, pyrimidyl, pyrazinyl, 1,2,3-thiadiazolyl, 1,3,4-thiadiazolyl, 1,2,5-thiadiazolyl, 1,3,5-triazinyl, and thiophenyl.

"-$CH_2$(halo)" means a methyl group where one of the hydrogens of the methyl group has been replaced with a halogen. Representative -$CH_2$(halo) groups include -$CH_2F$, -$CH_2Cl$, -$CH_2Br$, and -$CH_2I$.

"-CH$(halo)_2$" means a methyl group where two of the hydrogens of the methyl group have been replaced with a halogen. Representative -CH$(halo)_2$ groups include -$CHF_2$, -$CHCl_2$, - $CHBr_2$, -CHBrCl, -CHClI, and -$CHI_2$.

"-C$(halo)_3$" means a methyl group where each of the hydrogens of the methyl group has been replaced with a halogen. Representative -C$(halo)_3$ groups include -$CF_3$, -$CCl_3$, -$CBr_3$, and - $CI_3$.

"-Halogen" or "-halo" means -F, -Cl, -Br, or -I.

"Oxo", "=O", and the like as used herein mean an oxygen atom doubly bonded to carbon or another element.

"Thiooxo", "thioxo", "=S", and the like as used herein mean a sulfur atom doubly bonded to carbon or another element.

"Imino", "=$NT_3$", and the like as used herein mean a nitrogen atom doubly bonded to carbon or another element.

As used herein in connection with the polyelectrolyte particle, if the polymer chains are each formed at least in part by the polymerisation of ethylenically unsaturated monomers having the general formula (I), then this part of the polymer chains is understood to appear as follows:

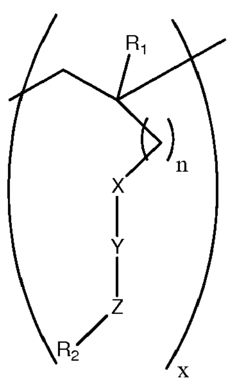

,

wherein $R_1$, n, X, Y, Z and $R_2$ are defined as herein above, and x denotes the (average) number of covalently linked monomer units comprised by each polymer chain.

As used herein in connection with the polyelectrolyte particle, if the polymer chains are each formed at least in part by the polymerisation of ethylenically unsaturated monomers having the general formula (II), then this part of the polymer chains is understood to appear as follows:

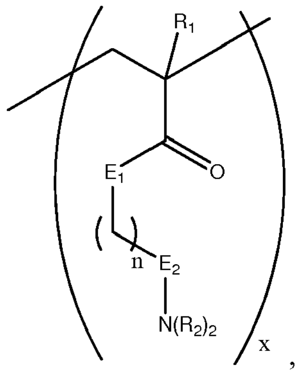

wherein $R_1$, n, $E_1$, $E_2$ and $R_2$ are defined as herein above, and x denotes the (average) number of covalently linked monomer units comprised by each polymer chain.

As used herein in connection with the polyelectrolyte particle, if the polymer chains are each formed at least in part by the polymerisation of ethylenically unsaturated monomers having the general formula (III), then this part of the polymer chains is understood to appear as follows:

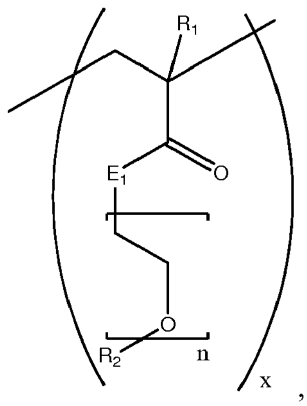

wherein $R_1$, n, $E_1$, and $R_2$ are defined as herein above, and x denotes the (average) number of covalently linked monomer units comprised by each polymer chain.

As used herein in connection with the polyelectrolyte particle, if the polymer chains are each formed at least in part by the polymerisation of ethylenically unsaturated monomers having the general formula (IV), then this part of the polymer chains is understood to appear as follows:

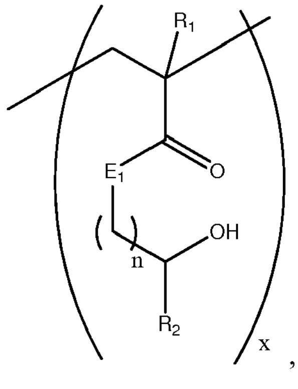

wherein $R_1$, n, $E_1$, and $R_2$ are defined as herein above, and x denotes the (average) number of covalently linked monomer units comprised by each polymer chain.

As used herein in connection with the polyelectrolyte particle, if the polymer chains are each formed at least

in part by the polymerisation of ethylenically unsaturated monomers having the general formula (V), then this part of the polymer chains is understood to appear as follows:

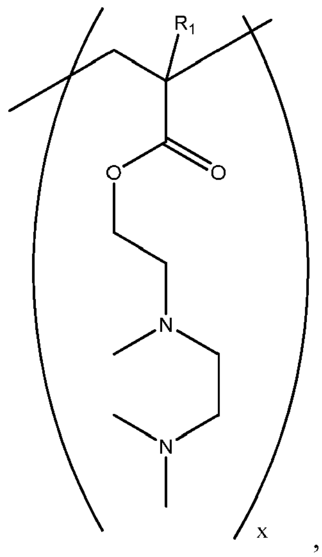

wherein $R_1$ is defined as herein above, and x denotes the (average) number of covalently linked monomer units comprised by each polymer chain.

As used herein in connection with the polyelectrolyte particle, if the polymer chains are each formed at least in part by the polymerisation of ethylenically unsaturated monomers having the general formula (VI), then this part of the polymer chains is understood to appear as follows:

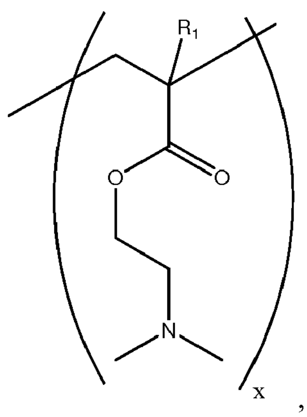

wherein $R_1$ is defined as herein above, and x denotes the (average) number of covalently linked monomer units comprised by each polymer chain.

As used herein in connection with the polyelectrolyte particle, if the polymer chains are each formed at least in part by the polymerisation of ethylenically unsaturated monomers having the general formula (VII), then this part of the polymer chains is understood to appear as follows:

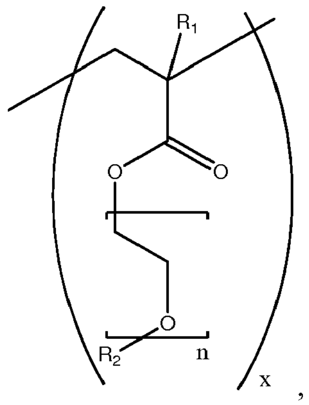

wherein $R_1$, n and $R_2$ are defined as herein above, and x denotes the (average) number of covalently linked monomer units comprised by each polymer chain.

As used herein in connection with the polyelectrolyte particle, if the polymer chains are each formed at least in part by the polymerisation of ethylenically unsaturated monomers having the general formula (VIII), then this part of the polymer chains is understood to appear as follows:

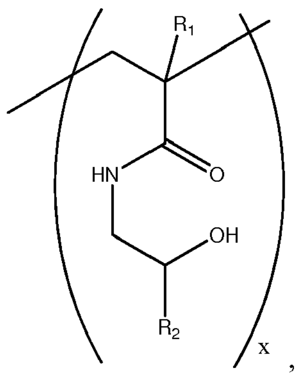

wherein $R_1$, n, $E_1$, and $R_2$ are defined as herein above, and x denotes the (average) number of covalently linked monomer units comprised by each polymer chain.

As used herein in connection with the polyelectrolyte particle, if the polymer chains are each formed at least in part by the polymerisation of DMAEMA, then this part of the polymer chains is understood to appear as follows:

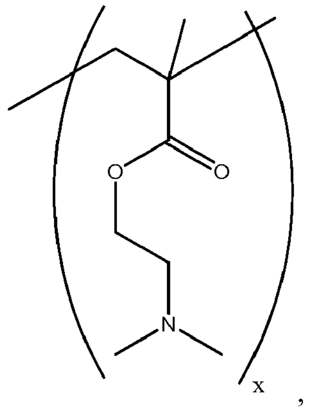

wherein $R_1$ is defined as herein above, and x denotes the (average) number of covalently linked monomer units comprised by each polymer chain.

According to an optional embodiment, the polymer chains can also be diblock copolymers having a homopolymer subunit of linear PEI linked by covalent bonds to a further homopolymer subunit formed by the polymerisation of ethylenically unsaturated monomers selected from the group consisting of monomers having the general formulae (I), (II), (III), (IV), (V), (VI), (VII), and (VIII).

According to an optional embodiment, the polymer chains can also be diblock copolymers having a homopolymer subunit formed by the polymerisation of ethylenically unsaturated monomers selected from the group consisting of monomers having the general formulae (I), (II), (III), (IV), (V), (VI), (VII), and (VIII), which subunit is linked by covalent bonds to a different homopolymer subunit formed by the polymerisation of ethylenically unsaturated monomers selected from the group consisting of monomers having the general formulae (I), (II), (III), (IV), (V), (VI), (VII), and (VIII).

According to an optional embodiment, the polymer chains can also be diblock copolymers having a homopolymer subunit of PEG linked by covalent bonds to a further homopolymer subunit.

According to an optional embodiment, the polymer chains can also be diblock copolymers having a homopolymer subunit formed by the polymerisation of butadiene, which subunit is linked by covalent bonds to a further homopolymer subunit formed by the polymerisation of ethylenically unsaturated monomers selected from the group consisting of monomers having the general formulae (I), (II), (III), (IV), (V), (VI), (VII), and (VIII).

According to a very specific embodiment, the polymer chains can also be a diblock copolymer selected from the group consisting of polystyrene-*block*-PDMAEMA, poly(1,2-butadiene)-*block*-PDMAEMA, poly(*p*-*tert*-butoxystyrene)-block-PDMAEMA, poly(*p*-vinylphenol)-*block*-PDMAEMA, and PEO-*block*-PDMAEMA. Principles for synthesis of such copolymers were published by F Schacher (2009), Macromol. Chem. Phys. 210, 256-262, which publication is incorporated herein by reference.

According to a specific embodiment, the polymer chains can be a block copolymer, werein at least one block is selected from a biodegradable polyester (such as, e.g. polylactide, polyglycolide, polycaprolactone etc.). According to a further specific embodiment, the polymer chains can be a block copolymer, werein at least one block is a hydrophobic polymer formed by the polymerisation of a monomer selected from the group consisting of butadiene, isoprene, methylmethacrylate, N-butylacrylate, polystyrole, and polycaprolactone. Such hydrophobic polymers are known to the skilled person (see, e.g., G. Riess (2003), Prog. Polym. Sci. 28:1107-1170; being incorporated herein by reference).

According to a specific embodiment, the polymer chains can also be a diblock copolymer selected from the group consisting of PEG-*block*-PAEMA, PEG-*block*-PDEAEMA, PEG-*block*-PDMAEMA, PEG-*block*-P(DMAPMAA-co-(HEMA-PCL)), PEG-*block*-Aminated PGMA, PMPC-*block*-PDEAEMA, PMPC-*block*-PDMAEMA, PMPC-*block*-PDPAEMA, PEEP-*block*-PDR4AEMA, PHPMA-*block*-PDMAPMAA, P(HPMA-co-APMA)-*block*-PDMAPMAA, PAPMA-*block*-PGAPMA, PAPMA-*block*-PLAEMA, PDMAEMA-*block*-PBMA, PDMAEMA-*block*-P(DMAEMA-co-PAA-co-BMA), and aminated PtBA-*block*-PS. The synthesis of these block copolymers is known to the skilled person (see, e.g., FJ Xu, WT Yang (2011), Prog. Polym. Sci, doi: 10.1016/j.progpolymsci.2010.11.005).

According to a specific embodiment, the polymer chains can also be a triblock copolymer selected from the group consisting of PDMAEMA-*block*-PEG-*block*-PDMAEMA, PEG-*block*-PDMAEMA-*block*-PEG, PEG-*block*-PDPAEMA-*block*-PDMAEMA, PEG-*block*-PBMA-*block*-PDMAEMA, PEG-*clock*-PCL-*block*-PDMAEMA, and PDMAEMA-*block*-PCL-*block*-PDMAEMA. The synthesis of these block copolymers is known to the skilled person (see, e.g., FJ Xu, WT Yang (2011), Prog. Polym. Sci, doi: 10.1016/j.progpolymsci.2010.11.005). Further pentablock copolymers are known to the skilled person (see, e.g., FJ Xu, WT Yang (2011), Prog. Polym. Sci, doi: 10.1016/j.progpolymsci.2010.11.005).

According to a very specific embodiment, the polymer chains can also be diblock copolymers having a homopolymer subunit formed by the polymerisation of butadiene, which subunit is linked by covalent bonds to a further homopolymer subunit formed by the polymerisation of DMAEMA.

It is understood that in the aqueous solution the polymer chains comprised by the polyelectrolyte particle radiate outward from a common branching centre so as to form the star-shaped polyelectrolyte particle.

According to one embodiment of the invention, said branching centre is a branched, cross-linked polymer network. Hence, the polymer chains comprised by the polyelectrolyte particle are attached to the branched, cross-linked polymer network and radiate outward therefrom so as to form the star-shaped polyelectrolyte particle. Generally, the polymer chains are covalently attached to the branched, cross-linked polymer network. In particular, rational selection of functional initiators, monomers and/or divinyl cross-linkers for the copolymerization, allows incorporation of a large variety of functionalities into the copolymer. The structure of the copolymers can be varied by simply changing the sequence of the polymerization of the monomer and cross-linker. Such star-like polymers with a cross-linked core are formed either when the monomer is polymerized prior to addition of cross-linker, or if polymerization of monomer occurs after cross-linker. As an example for such a polyelectrolyte particle can serve a multiarm star polymer with a dendrimer as the branching centre.

Generally speaking, star polymers can be synthesized via one of three common strategies: "core-first" by growing arms from a multifunctional initiator; "coupling-onto" by attaching linear polymer arm precursors onto a multifunctional core and the "arm-first" method by cross-linking preformed linear polymer arm precursors using a divinyl compound. Suitable synthesis strategies are well known to the person skilled in the art (see, e.g., K. Matyjaszewski, Y. Gnanou, L. Leibler, Eds.: "Macromolecular Engineering" (4 volumes), Wiley-VCH, Weinheim 2007; LV Vinogradova

(2010), Russian Journal of Applied Chemistry 83(3), 351-378; H Gao et al. (2009), Progress in Polymer Science 34, 317-350; which publications are incorporated herein by reference).

In particular, the principles of controlled radical polymerization (CRP) are well-known to a person skilled in the art (e.g., see H Gao et al. (2009), Progress in Polymer Science 34, 317-350; being incorporated herein by reference) and can be employed for the synthesis of polyelectrolyte particles according to the invention. In CRP, the fast initiation reactions, relative to propagation reactions, result in all polymer chains undergoing initiation at approximately the same time and a nearly constant number of chains growing throughout the polymerization, which enables control over chain architecture. Three different mechanisms of intermittent activation are employed in CRPs. They include: dissociation-combination, represented by nitroxide mediated polymerization (NMP) or organometallic radical polymerization; catalytic atom (group) transfer, represented by atom transfer radical polymerization (ATRP); and degenerative chain transfer, represented by iodine mediated polymerization or reversible addition-fragmentation chain transfer (RAFT) polymerization. During these CRP processes, the active radicals either undergo a reversible activation/deactivation process (i.e., NMP and ATRP), or participate in a degenerative transfer reaction (e.g., RAFT) to assure simultaneous growth of all polymer chains. The ability of CRP techniques to control molecular weight and polydispersity and to provide access to welldefined molecular architecture, originates from both fast initiation of all chains and limitation of the chain growth during each activation cycle to a level where the contribution of chain breaking reactions is negligible.

According to a specific embodiment of the invention, said branching centre is a polycarbohydrate or a polysaccharide. According to another specific embodiment of the invention, said branching centre is a polyglycerol. According to another specific embodiment of the invention, said branching centre is a quantum dot bioconjugate (see, e.g., IL Medintz et al. (2005), Nature Materials, 435-446).

According to a specific embodiment of the invention, said branching centre is a silicate nanoparticle. Optionally, said silicate nanoparticle is a silsequioxane. In the context of the present invention, a "silsesquioxane" is a compound with the empirical chemical formula $RSiO_{3/2}$ where Si is the element silicon, O is oxygen and R is either hydrogen or an alkyl, alkene, aryl, arylene group, and which compound has a cage like structure. The structure of silsesquioxanes depends on the preparation method (RG Jones et al. (2000) (1st ed.). Dodrecht, The Netherlands: Kluwer Academic Publishers. pp. 157-183). To simplify, a silsequioxane is synthesized from a silicon with a hydrolytically stable organic substituent and three easily hydrolyzed groups such as chlorine or alkoxy groups, which are reacted with water and an acid or base catalyst. The final structure depends on the function of the concentration of initial monomer, concentration of water, temperature, type of catalyst, and the nature of the non-hydrolyzing substituent. In this context, the polymer chains comprised by the polyelectrolyte particle are covalently attached to the silicate nanoparticle (or the silsesquioxane) and radiate outward therefrom so as to form the star-shaped polyelectrolyte particle. For a typical polymerization procedure of the polyelectrolyte particle having a silicate nanoparticle as branching centre, a silsesquioxane initiator for atom transfer radical polymerization (ATRP) can be used, as published e.g. by H. Mori et al. (2003), Journal of the American Chemical Society 125: 3712-3713; H. Mori et al. (2004), Macromolecules 37: 5228-5238; and S. Muthukrishnan et al. (2005), Macromolecules 38: 10631-10642; which publications are incorporated herein by reference.

The principles of synthesis of polyelectrolyte particles having a silicate nanoparticle (such as the silsesquioxane nanoparticle based macroinitiator of ca. 58 functions of Example 1) as branching centre are well-known to a person skilled in the art (e.g., see F. Plamper *et al.* (2007), Macromolecules 40: 5689; being incorporated herein by reference). Among the spectrum of polymers with complex architectures, star polymers provide one of the simplest arrangement of linked chains, because a structurally well defined star polymer contains only one central branching point, the core of the star, and multiple emanating arms. The average number of polymer arms attached to a star core depends on several experimental parameters, and are well-known to a person skilled in the art.

According to a specific embodiment of the invention, the polyelectrolyte particles according to the invention are star polymers having a silsesquioxane nanoparticle based star core. Suitable synthesis strategies are well known to the person skilled in the art (see, e.g., F. Plamper *et al.* (2007), Macromolecules 40: 5689; being incorporated herein by reference). According to a very specific embodiment of the invention, the polyelectrolyte particles according to the invention are star polymers having a silsesquioxane nanoparticle based star core, wherein the polymer chains are each formed by the polymerisation of ethylenically unsaturated monomers having the general formula (VI), wherin $R_1$ is defined as above.

According to a further specific embodiment of the invention, said branching centre is a functionalized metal-containing nanoparticle. In the context of the present invention, the term "metal-containing nanoparticle" denotes nanostructured metal-containing powders (in some cases they may even be alloys). In the context of the present invention, the term "functionalized metal-containing nanoparticle" means that a coating for surface functionalization has been applied to the metal-containing nanoparticle. The principles of synthesis of such metal-containing nanoparticles and suitable coatings are well known to the person skilled in the art.

In a specific embodiment of the invention, the functionalized metal-containing nanoparticle is selected from the group consisting of a functionalized magnetic nanoparticle, a functionalized iron oxide containing nanoparticle, and a functionalized maghemite nanoparticle. In the context of the present invention, the term "magnetic nanoparticle"

denotes matrix-dispersed nanoparticles having superparamagnetic properties. Examples of such nanoparticles are known to the skilled person (see, e.g., S. Behrens (2011), Nanoscale 3: 877; being incorporated herein by reference).

Optionally, said functionalized metal-containing nanoparticle is a functionalized maghemite nanoparticle. For instance, syntheses of magnetic nanoparticles of various elemental compositions and phases have been reported in the literature, e.g., $Fe_3O_4$ and $\gamma$-$Fe_2O_3$, metallic Co, Fe, Ni, spinel-type ferrite $MgFe_2O_4$, $MnFe_2O_4$, $CoFe_2O_4$ and alloyed FePt, FeCo, $CoPt_3$, or FeCoPt nanoparticles (see, e.g., S. Behrens (2011), Nanoscale 3: 877; being incorporated herein by reference). The principles of synthesis of polyelectrolyte particles having a functionalized maghemite nanoparticle (such as the FeO nanoparticle based macroinitiator of up to 160 functions of Example 2) as branching centre are well-known to a person skilled in the art (e.g., see K. Matyjaszewski, Y. Gnanou, L. Leibler, Eds.: "Macromolecular Engineering" (4 volumes), Wiley-VCH, Weinheim 2007; being incorporated herein by reference).

In particular, polymer-coated nanoparticles can be produced directly by *in situ* precipitating or thermolysing a metal precursor in the presence of the polymer which then acts as a stabilizer. Polymeric surfactants can be designed with tunable composition via copolymerization or post-functionalization techniques. Such polymeric surfactants must include a few general features, such as functional groups to anchor the particle surface (e.g., carboxylic acid, phosphine oxide, amine, or amide groups) located either along the polymeric backbone and/or at the end. In the art, a wide range of polymers has been used to date to synthesize and colloidally stabilize magnetic nanoparticles via polymeric coatings. Alternatively, the surface functionalization of magnetic nanoparticles with polymeric surfactants may be achieved by replacing the ligands used in the initial nanoparticle synthesis. The nanoparticles are synthesized separately and mixed with the polymer to enable ligand exchange by either physical or chemical adsorption of the polymer onto the magnetic material. Surface initiated polymerization allows the controllable polymerization of end-tethered polymer coronas directly from the nanoparticle surface. A key requirement of this approach is the introduction of appropriate, surface attached initiators, while suppressing undesirable flocculation of the colloid.

According to a specific embodiment of the invention, the polyelectrolyte particles according to the invention are star-shaped particles having a functionalized maghemite nanoparticle based core. Suitable synthesis strategies for such nanoparticles are well known to the person skilled in the art (see, e.g., T Hyeon et al. (2001), J. Am. Chem. Soc. 123, 12798-12801; being incorporated herein by reference). Suitable initiators are also well-known to a person skilled in the art (see, e.g., X. Fan et al. (2005), J. Am. Chem. Soc. 127, 15843-15847; being incorporated herein by reference). For example, the maghemite nanoparticles can be functionalized with a catechol-terminated dopamine-initiator in a suitable solvent. According to a very specific embodiment of the invention, the polyelectrolyte particles according to the invention are star-shaped particles having a dopamine-functionalized maghemite nanoparticle based core, wherein the polymer chains are each formed by the polymerisation of ethylenically unsaturated monomers having the general formula (VI), wherin $R_1$ is defined as above.

However, it is understood that, in principle, any nanoparticle having a suitable number of attachment sites (i.e. reactive sites / initiation sites) for the attachment / synthesis of the polymer arms can be used as branching centre in the context of the present invention. According to a specific embodiment of the invention, such a nanoparticle (which can be, e.g., a silsesquioxane nanoparticle or a functionalized maghemite nanoparticle) comprises at least 20, 25, 30, 35, 40, 45, 50, 55, 60, 65, 70, 75, 80, 85, 90, 95, 100, 110, 120, or even 130 sites for the attachment of polymer chains. It is however understood that, due to sterical hindrance, only some of said attachment sites will be attached to polymer arms.

According to a further specific embodiment of the invention, the polymer arms are block copolymers and are arranged as spherical micelles in the aqueous solution so as to form the star-shaped polyelectrolyte particle. This means that the polymer arms are not covalently attached to a particular core or branching centre, but are aggregates that resemble many properties of micelles formed by low-molecular-weight surfactants. They are the consequence of a self-assembling tendency displayed by block copolymers when dissolved in a so-called selective solvent, which is a good solvent for one of the blocks, but a poor one for the other. Solvent selectivity and, hence, copolymer self-assembling, have been observed for a variety of block copolymers in aqueous solutions. Block copolymers include diblock and triblock copolymers.

Water is unique in terms of its properties as solvent, which arise from a singular cohesive energy due to the strongest hydrogen bridging network among polar solvents. Surface activity and tendency to self-assembly is displayed when a dissolved molecule presents an apolar moiety attached to polar (ionic or nonionic groups), due to its dual interaction with water. By far, the most common polar group found in aqueous block copolymer micelles is poly(ethylene oxide), attached to a variety of apolar moieties. The simplest apolar group is a long hydrocarbon chain, as found in normal nonionic surfactants.

Copolymer aggregation may be directed by changes in both concentration and temperature. Regarding the first aggregation step, from unimers to micelles, the concentration at which micelles start to appear is, likewise to normal surfactants, called critical micelle concentration (cmc). Similarly, the temperature at which, for a given polymer concentration, micelles are formed, is called critical micelle temperature (cmt). The cmc and cmt values may be obtained by using a variety of techniques, similar to investigations with normal surfactants. Among some of the most commonly used

methods are surface tension measurements, solubilization of apolar dyes or spectroscopic probes, including absorption, fluorescence measurements, light-scattering techniques, NMR spectroscopy, DSC (usually high sensitivity DSC), and scanning densitometry; these last two techniques are appropriate only for cmt determination, whereas the other apply to both cmc and cmt measurements. All measurement methods are within the common knowledge to the person skilled in the art.

According to a further specific embodiment, the polymer chains can also be diblock or triblock copolymers, which associate reversibly in an aqueous solution to form micellar aggregates which resemble in most of their aspects to those obtained with classical low molecular weight surfactants. In the context of the present invention, such micelles consist of a more or less swollen core of the insoluble blocks surrounded by a flexible fringe of soluble blocks. These micelles are generally spherical with narrow size distribution, but may change in shape and size distribution under certain conditions. The synthesis of such diblock or triblock copolymers is known to the skilled person (see, e.g., G. Riess (2003), Prog. Polym. Sci. 28:1107-1170; being incorporated herein by reference).

The principles of synthesis of block copolymers which are arranged as spherical micelles in an aqueous solution so as to form the star-shaped polyelectrolyte particle, are well-known to a person skilled in the art (see, e.g., K. Matyjaszewski, Y. Gnanou, L. Leibler, Eds.: "Macromolecular Engineering" (4 volumes), Wiley-VCH, Weinheim 2007; being incorporated herein by reference). According to a specific embodiment of the invention, the polyelectrolyte particles according to the invention are spherical micelles and the polymer arms comprised by the spherical micelles are poly (1,2-butadiene)-*block*-Poly(N,N-dimethylaminoethyl methacrylate) diblock copolymers. Suitable synthesis strategies for such block copolymers are well known to the person skilled in the art (see, e.g., F Schacher et al. (2009), Macromolecular Chemistry and Physics 210, 256-262; being incorporated herein by reference). However, it is understood that, in principle, any block copolymers which are arranged as spherical micelles in an aqueous solution so as to form the star-shaped polyelectrolyte particle can be used in the context of the present invention.

According to an optional embodiment, the polyelectrolyte particle comprises at least 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, or 90 polymer chains. According to an optional embodiment, the polyelectrolyte particle comprises at least 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, or 90 linear polymer chains. According to an optional embodiment, the polyelectrolyte particle comprises at least 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, or 90 polymer chains. According to an optional embodiment, the polyelectrolyte particle comprises at least 40, 42, 44, 46, 48, 50, 52, 54, 56, 58, 60, 62, 64, 66, 68, 70, 72, 74, 76, 78, 80, 82, 84, 86, 88, or 90 polymer chains. According to an optional embodiment, the polyelectrolyte particle comprises at least 50, 52, 54, 56, 58, 60, 62, 64, 66, 68, 70, 72, 74, 76, 78, 80, 82, 84, 86, 88, or 90 polymer chains. According to an optional embodiment, the polyelectrolyte particle comprises at least 60, 62, 64, 66, 68, 70, 72, 74, 76, 78, 80, 82, 84, 86, 88, or 90 polymer chains. According to an optional embodiment, the polyelectrolyte particle comprises at least 70, 72, 74, 76, 78, 80, 82, 84, 86, 88, or 90 polymer chains. According to an optional embodiment, the polyelectrolyte particle comprises at least 80, 82, 84, 86, 88, or 90 polymer chains.

According to an optional embodiment, the polyelectrolyte particle comprises between 15 and 180 polymer chains. According to an optional embodiment, the polyelectrolyte particle comprises between 15 and 25 polymer chains. According to an optional embodiment, the polyelectrolyte particle comprises between 40 and 150 polymer chains. According to an optional embodiment, the polyelectrolyte particle comprises between 40 and 230 polymer chains. According to an optional embodiment, the polyelectrolyte particle comprises between 15 and 300 polymer chains. According to an optional embodiment, the polyelectrolyte particle comprises between 40 and 300 polymer chains. According to an optional embodiment, the polyelectrolyte particle comprises between 80 and 300 polymer chains. According to an optional embodiment, the polyelectrolyte particle comprises between 40 and 250 polymer chains. According to an optional embodiment, the polyelectrolyte particle comprises between 40 and 200 polymer chains.

According to a more specific embodiment, each of the polymer chains comprised by the polyelectrolyte particle according to the invention comprises at least 20, 24, 28, 30, 34, 38, 40, 44, 48, 50, 54, 58, 60, 64, 68, 70, 74, 78, 80, 84, 88, 90, 94, 98, 100, 104, 108, 110, 114, 118, 120, 124, 128, 130, 134, 138, 140, 144, 148, 150, 154, 158, 160, 164, 168, 170, 174, 178, 180, 184, 188, 190, 194, 198, or 200 covalently linked monomer units on average. According to a more specific embodiment, each of the polymer chains comprised by the polyelectrolyte particle according to the invention comprises at least 50, 54, 58, 60, 64, 68, 70, 74, 78, 80, 84, 88, 90, 94, 98, 100, 104, 108, 110, 114, 118, 120, 124, 128, 130, 134, 138, 140, 144, 148, 150, 154, 158, 160, 164, 168, 170, 174, 178, 180, 184, 188, 190, 194, 198, or 200 covalently linked monomer units on average. According to a more specific embodiment, each of the polymer chains comprised by the polyelectrolyte particle according to the invention comprises at least 70, 74, 78, 80, 84, 88, 90, 94, 98, 100, 104, 108, 110, 114, 118, 120, 124, 128, 130, 134, 138, 140, 144, 148, 150, 154, 158, 160, 164, 168, 170, 174, 178, 180, 184, 188, 190, 194, 198, or 200 covalently linked monomer units on average. According to a more specific embodiment, each of the polymer chains comprised by the polyelectrolyte particle according to the invention comprises at least 90, 94, 98, 100, 104, 108, 110, 114, 118, 120, 124, 128, 130, 134, 138, 140, 144, 148, 150, 154, 158, 160, 164,

168, 170, 174, 178, 180, 184, 188, 190, 194, 198, or 200 covalently linked monomer units on average. According to a more specific embodiment, each of the polymer chains comprised by the polyelectrolyte particle according to the invention comprises at least 110, 114, 118, 120, 124, 128, 130, 134, 138, 140, 144, 148, 150, 154, 158, 160, 164, 168, 170, 174, 178, 180, 184, 188, 190, 194, 198, or 200 covalently linked monomer units on average. According to a more specific embodiment, each of the polymer chains comprised by the polyelectrolyte particle according to the invention comprises at least 150, 154, 158, 160, 164, 168, 170, 174, 178, 180, 184, 188, 190, 194, 198, or 200 covalently linked monomer units on average. According to a more specific embodiment, each of the polymer chains comprised by the polyelectrolyte particle according to the invention comprises at least 170, 174, 178, 180, 184, 188, 190, 194, 198, or 200 covalently linked monomer units on average. According to a more specific embodiment, each of the polymer chains comprised by the polyelectrolyte particle according to the invention comprises at least 30, 40, 50, 60, 70, 80, 90, 100, 120, 140, 160, 180, 200, 250, 300, 350, 400, 450, 500, 550, 600, 650, 700, 750, 800, 850, 900, 950, 1000, 1050, 1100, 1150, or 1200 covalently linked monomer units on average.

According to a specific embodiment, each of the polymer chains comprised by the polyelectrolyte particle according to the invention comprises between 40 and 600 covalently linked monomer units on average. According to a specific embodiment, each of the polymer chains comprised by the polyelectrolyte particle according to the invention comprises between 40 and 1200 covalently linked monomer units on average. According to a specific embodiment, each of the polymer chains comprised by the polyelectrolyte particle according to the invention comprises between 80 and 600 covalently linked monomer units on average. According to a specific embodiment, each of the polymer chains comprised by the polyelectrolyte particle according to the invention comprises between 80 and 1200 covalently linked monomer units on average. According to a specific embodiment, each of the polymer chains comprised by the polyelectrolyte particle according to the invention comprises between 100 and 1000 covalently linked monomer units on average. According to a specific embodiment, each of the polymer chains comprised by the polyelectrolyte particle according to the invention comprises between 150 and 800 covalently linked monomer units on average. According to a specific embodiment, each of the polymer chains comprised by the polyelectrolyte particle according to the invention comprises between 200 and 800 covalently linked monomer units on average.

According to a specific embodiment, the polyelectrolyte particle comprises the following ranges of polymer chains (as indicated in following Table A in the top row) and each of the polymer chains comprised by the polyelectrolyte particle comprises the following ranges of covalently linked monomer units on average (as indicated in following Table A in the left column), wherein Table A explicitly discloses the specific combinations of both ranges (indicated by an "x", respectively:

Table A:

| | 15-180 | 15-25 | 40-150 | 40-230 | 15-300 | 40-300 | 80-250 |
|---|---|---|---|---|---|---|---|
| 40-600 | x | x | x | x | x | x | x |
| 40-1200 | x | x | x | x | x | x | x |
| 80-600 | x | x | x | x | x | x | x |
| 80-1200 | x | x | x | x | x | x | x |
| 100-1000 | x | x | x | x | x | x | x |
| 150-800 | x | x | x | x | x | x | x |
| 200-800 | x | x | x | x | x | x | x |

Accordingly, the polymer chains comprised by the polyelectrolyte particle together have a molecular weight of at least 500 kDa, 550 kDa, 600 kDa, 650 kDa, 700 kDa, 750 kDa, 800 kDa, 850 kDa, 900 kDa, 950 kDa, 1000 kDa, 1500 kDa, 2000 kDa, 2500 kDa, 3000 kDa, 3500 kDa, 4000 kDa, 4500 kDa, 5000 kDa, 6000 kDa, 7000 kDa, 8000 kDa, 9000 kDa, 10,000 kDa, 15,000 kDa, 20,000 kDa, or 30,000 kDa.

According to a more specific embodiment, each of the polymer chains comprised by the polyelectrolyte particle according to the invention comprises at least 30, 40, 50, 60, 70, 80, 90, 100, 120, 140, 160, 180, 200, 250, 300, 350, 400, 450, 500, 550, 600, 650, 700, 750, 800, 850, 900, 950, 1000, 1050, 1100, 1150, or 1200 positively charged nitrogen atoms.

It is understood that the *in vitro* method of the invention for transferring an anionic substance into a cell comprises contacting the anionic substance and a polyelectrolyte particle as described herein above in an aqueous solution at physiological pH so as to form a complex, and further comprises contacting said complex and the cell. A further aspect of the invention relates to the complex obtainable in the methods as described herein. As used in the context of the present invention, the term "anionic substance" denotes any substance having a negative net charge, such as, e.g.

nucleic acids and proteins.

One particularly important aspect of the invention relates to such a complex wherein the anionic substance is selected from nucleic acid and protein, and wherein the anionic substance is preferably nucleic acid. In the context of the present invention, the nucleic acid may be a DNA and/or RNA fragment, single or double stranded, linear or circular, natural or synthetic, modified or not (see, e.g., US-A-5525711, US-A-4711955 or EP-A-302175 for modification examples) defining a fragment or a portion of a nucleic acid, without size limitation. It may be, *inter alia*, a genomic DNA, a cDNA, a mRNA, an antisense RNA, a ribosomal RNA, a ribozyme, a tRNA or DNA encoding such RNAs. "Polynucleotides" and "nucleic acids" are synonyms with regard to the present invention. The nucleic acid may also be in the form of a plasmid or linear polynucleotide which contains at least one coding sequence of nucleic acid that can be transcribed and translated to generate polypeptide, ribozyme, antisense or other molecule of interest upon delivery to a cell. The nucleic acid can also be an oligonucleotide which is to be delivered to the cell, e.g., for antisense or ribozyme functions. According to the invention, said nucleic acid can also be formulated with viral proteins, or cationic lipids, or cationic polymers.

According to an optional embodiment of the present invention, the anionic substance is a nucleic acid, optionally being selected from the group consisting of cDNA, genomic DNA, plasmid DNA, messenger RNA, antisense RNA, siRNA, short hairpin RNA, micro-RNA, ribozymes, transfer RNA, ribosomal RNA, and DNA encoding for such types of RNA.

In a specific embodiment, both DNA and RNA molecules can be delivered to cells to trigger or to prevent the formation of a polypeptide of interest which may stay within the cell or which will be secreted from the cell. In a more specific embodiment, plasmid DNA is preferred. If the nucleic acids contain the proper genetic information, they will direct the synthesis of relatively large amounts of the encoded polypeptide. When the nucleic acids delivered to the cells encode an immunizing polypeptide, the use according to the invention can be applied to achieve improved and effective immunity against infectious agents, including intracellular viruses, and also against tumor cells. The genetic information necessary for expression by a target cell comprise all the elements required for transcription of said DNA into mRNA and for translation of mRNA into polypeptide. Transcriptional promoters suitable for use in various vertebrate systems are well known to the skilled person. For example, suitable promoters include viral promoters RSV, MPSV, SV40, CMV or 7.5k, vaccinia promoter, inducible promoters, etc. Nucleic acids can also include intron sequences, targeting sequences, transport sequences, sequences involved in replication or integration. Said sequences have been reported in the literature and can be readily obtained by those skilled in the art. Nucleic acids can also be modified in order to be stabilized with specific components as spermine.

According to the invention, the nucleic acid can be homologous or heterologous to the target expressing cells. Advantageously said nucleic acid encodes all or part of a polypeptide, especially a therapeutic or prophylactic polypeptide. A polypeptide is understood to be any translational product of a polynucleotide regardless of size, and whether glycosylated or not, and includes peptides and proteins. Therapeutic polypeptides include as a primary example those polypeptides that can compensate for defective or deficient proteins in an animal, or those that act through toxic effects to limit or remove harmful cells from the body. They can also been immunity-conferring polypeptides which act as endogenous immunogens to provoke a humoral or cellular response, or both. Examples of encoded polypeptides according to the invention are enzyme, hormone, cytokine, membrane receptor, structural polypeptide, transport polypeptide, adhesine, ligand, transcription factor, transduction factor, replication factor, stabilisation factor, antibody, more especially CFTR, dystrophin, factors VIII or IX, E6 or E7 from HPV, MUC1, BRCA1, interferon beta , interferon gamma , interleukin (IL)2, IL-4, IL-6, IL-7, IL-12, GM-CSF (Granulocyte Macrophage Colony Stimulating Factor), tk gene from Herpes Simplex type 1 virus (HSV-1), p53, VEGF. The polynucleotide can also code for an antibody. In this regard, antibody encompasses whole immunoglobulin of any class, chimeric antibodies and hybrid antibodies with dual or multiple antigen or epitope specificities, and fragments, such as F(ab)2, Fab', Fab including hybrid fragments and anti-idiotypes (see, e.g., US-A-4,699,880).

The present invention encompasses an *in vitro* method for transferring an anionic substance into cells, wherein said method comprises contacting said cells with at least one complex according to the invention. This method may be also applied by direct administration of said complex to cells of the animal *in vivo,* or by *in vitro* treatment of cells which were recovered from the animal and then reintroduced into the animal body *(ex vivo* process). In *in vitro* application, cells cultivated on an appropriate medium are placed in contact with a suspension consisting of complexes of the invention. After an incubation time, the cells are washed and recovered. Introduction of the active substance can be verified (eventually after lysis of the cells) by any appropriate method.

The introduction or transfer process is by itself well known. "Introduction or transfer" means that the negatively-charged substance is transferred into the cell and is located, at the end of the process, inside said cell, within its nucleus or within or on its membrane. If the active substance is a nucleic acid, this method is called "transfection". Transfection can be verified by any appropriate method, for example by measuring the expression of said gene or by measuring the concentration of the expressed protein. Suitable methods of transfection, measuring the expression of said gene or measuring the concentration of the expressed protein, or methods for detecting the viability of the cell (such as MTT

assays) are well known to the person skilled in the art (see, e.g., Cell Biology. A Laboratory Handbook: vol. 4, Kai Simons, J. Victor Small, Tony Hunter, Julio E. Celis, Nigel Carter, (2005) Elsevier Ltd, Oxford; Auflage: 3rd ed. Literatur; being incorporated herein by reference).

If the anionic substance is nucleic acid, complexes of the polyelectrolyte particle with nucleic acid are also known as "polyplexes". Most polyplexes contain cationic polymers and their formation is regulated by ionic interactions. One large difference between the methods of action of polyplexes and lipoplexes is that polyplexes generally cannot release their nucleic acid load into the cytoplasm, so to this end, co-transfection with endosome-lytic agents (to lyse the endosome that is made during endocytosis, the process by which the polyplex enters the cell) such as inactivated adenovirus must occur. However, this isn't always the case, and polymers such as polyethylenimine have their own method of endosome disruption. Without wishing to be bound by any theory, it is believed that the complexes according to the invention also do not require endosome disruption.

For complex formation, a certain ratio between the polyelectrolyte particle according to the invention and the anionic substance to be transferred is required. If the anionic substance is nucleic acid, this ratio is also known as "N/P ratio". Determining the optimal N/P ratio is routine to the person skilled in the art. According to an optional embodiment of the invention, the polymer chains comprise positively charged nitrogen atoms and the N/P ratio is between 5 and 50, and preferably between 5 and 20.

According to a certain aspect of the invention, negatively charged proteins and/or small molecule drugs and/or small molecule dyes can (additionally or alternatively) be encapsulated by the polyelectrolyte particle, in particular if the polyelectrolyte particle comprises block copolymers, and delivered into the cell by conducting the methods disclosed herein. For example, C Zhu et al. (Biomaterials 31, 2408-2416) disclose a PDMAEMA-PCL-PDMAEMA triblock copolymer could form micelles for the combinatorial delivery of siRNA and lipophilic anti-cancer drugs (in particular, paclitaxel). Furthermore, T.-M- Sun et al. disclose that simultaneous delivery of siRNA and paclitaxel via a "Two-in-One" Micelleplex promotes synergistic tumor suppression. In particular, the authors disclosed a micelleplex approach based in micellar nanoparticles of a biodegradable triblock copolymer poly(ethylene glycol)-b-poly(ε-caprolactone)-b-poly(2-aminoethyl ethylene phosphate) to systemically deliver siRNA and the chemotherapeutic drug paclitaxel (see. T.-M. Sun (2011), ACSN Nano 5: 1483-1494). Such encapsulation (also called co-delivery) can provide several advantages, including an improved overcome of resistances, improved efficiencies in therapy, or providing imaging possibilities (e.g., by co-delivery of a fluorescent dye and the like). Further examples of protein and/or drug encapsulation into block copolymers are known in the art (see, e.g., Y. Matsumura and K. Kataoka (2009), Cancer Science 100(4): 572-579; Journal of Pharmaceutical Sciences 2011, vol. 100, issue 1, pages 38-52; being incorporated herein by reference).

According to a certain aspect of the invention, the aqueous medium comprises serum. For most commercially available transfection reagents based on polycations, serum-free conditions are required (see, e.g., Eur J Pharm Biopharm. 2008 Jan;68(1):129-37. Epub 2007 Jul 13; Pharm Res. 2010 Nov;27(11):2457-65. Epub 2010 Aug 21; Pharmaceutical Research Volume 13, Number 7, 1038-1042, DOI: 10.1023/A:1016054623543). Unexpectedly, the polyelectrolyte particles according to the invention are able to reach considerable transfection efficiencies in the presence of serum, which is obligatory for *in vivo* applications.

In accordance with one aspect of the invention, there is provided the use of a compound, composition or a complex according to the present invention for *in vitro, ex vivo* or *in vivo* transfer of at least one anionic substance, notably a nucleic acid, into cells. More especially, it relates to a method for therapeutical treatment of humans or animals. An embodiment of the present invention thus relates to the use of a polyelectrolyte particle as chemical-based transfection agent for transferring an anionic substance, optionally a nucleid acid, into a cell, wherein the polyelectrolyte particle comprises at least 15 polymer chains which in an aqueous solution at physiological pH have a positive net charge and and radiate outward from a common branching centre so as to form the star-shaped polyelectrolyte particle, and wherein each polymer chain comprises at least 40 covalently linked monomer units on average.

As used herein, the term "transfection" denotes the process of deliberately introducing anionic substances, e.g. nucleic acids, into cells. The term is used notably for non-viral methods of introducing nucleic acids in eukaryotic cells. However, it may also refer to other methods and cell types. In particular, genetic material (such as supercoiled plasmid DNA or siRNA constructs), or even proteins such as antibodies, may be transfected. In general, chemical-based transfection can be divided into several kinds: cyclodextrin, polymers, liposomes, or nanoparticles (with or without chemical or viral functionalization; see above). In the context of the present invention, the term "chemical-based transfection agent" means that the polyelectrolyte particle will be used for chemical-based transfection method, but not for particle-based methods (such as gene gun or magnetofection).

For some applications of transfection, it is sufficient if the transfected genetic material is only transiently expressed. Since the nucleic acid introduced in the transfection process is usually not integrated into the nuclear genome, the foreign nucleic acid will be diluted through mitosis or degraded. If it is desired that the transfected gene actually remains in the genome of the cell and its daughter cells, a stable transfection must occur. To accomplish this, a marker gene is co-transfected, which gives the cell some selectable advantage, such as resistance towards a certain toxin. Some of the transfected cells will, by chance, have integrated the foreign genetic material into their genome. If the toxin

is then added to the cell culture, only those few cells with the marker gene integrated into their genomes will be able to proliferate, while other cells will die. After applying this selective stress (selection pressure) for some time, only the cells with a stable transfection remain and can be cultivated further. A common agent for selecting stable transfection is Geneticin, also known as G418, which is a toxin that can be neutralized by the product of the neomycin resistance gene. Further suitable methods of stable transfection are known to the person skilled in the art.

As used herein, the term "cells" includes prokaryote cells and eukaryote cells, yeast cells, plant cells, human or animal cells, in particular mammalian cells. In particular, cancer cells should be mentioned. The invention can be applied *in vivo* to the interstitial or luminal space of tissues in the lungs, the trachea, the skin, the muscles, the brain, the liver, the heart, the spleen, the bone marrow, the thymus, the bladder, the lymphatic system, the blood, the pancreas, the stomach, the kidneys, the ovaries, the testicles, the rectum, the peripheral or central nervous system, the eyes, the lymphoid organs, the cartilage, the endothelium. In preferred embodiments, the cell will be a muscle cell, a hematopoietic system stem cell or an airways cell. In further preferred embodiments, the cell will be a primary mammalian cell, a differentiated cell, and/or a non-dividing cell. According to a further optional embodiment, the cell is a eukaryotic cell, without or depleted of, its cell wall (insect cells, plant yeast fungi protoplasts, parasitic Protozoa).

RNA interference (RNAi) is a highly efficient regulatory process that causes posttranscriptional gene silencing in most eukaryotic cells. RNAi thus represents a promising new approach for producing gene-specific inhibition and knockouts, producing transgenic animal models, and designing new therapeutics. This field is progressing at a very rapid pace. A broad and comprehensive overview on the multiple barriers, the diverse carrier systems, and the current status of the clinical development of siRNA therapeutics was published by J Wang et al. (2010), The AAPS Journal, DOI: 10.1208/s12248-010-9210-4. Unexpectedly, it could be shown that the polyelectrolyte particles according to the invention can also be used for the systemic delivery of siRNA therapeutics, thus providing a valuable tool for biochemical studies as well as for gene therapy. According to a certain aspect of the invention, the anionic substance is siRNA.

A further aspect of the invention relates to a polyelectrolyte particle as defined herein, or the complex as defined herein for use in the curative, preventive or vaccinal treatment of an object, or for use as diagnostic tool in an object. A further aspect of the invention relates to a transfection, pharmaceutical or diagnostic composition comprising a polyelectrolyte particle as herein, or the complex as defined herein.

Hence, in accordance with this aspect of the invention, there is provided a polyelectrolyte particle or polyelectrolyte particle / anionic substance complex for use as medicinal composition for curative, preventive or vaccinal purposes. Such complex can be used in a therapeutic treatment consisting of transferring at least one anionic substance, notably a nucleic acid, into cells. The invention more particularly concerns the use of a polyelectrolyte particle, a composition or a complex of the invention for the made of a pharmaceutical composition for curative, preventive or vaccinal treatment of humans or animals, and more specifically for gene therapy use.

As used herein, "pharmaceutical composition" may be used to refer to a composition that has measurable specified or selected physiologic activity when administered to a subject in a significant or effective amount. The composition according to the present invention incorporates the complex of the invention in a medically effective amount, namely an amount which is useful either therapeutically or diagnostically. Such an amount can be determined on the intended end-use of the composition. Therapeutically useful amounts of the particular complex are commonly known to a person skilled in the art.

As used herein, "effective amount", and "sufficient amount" may be used interchangeably and refer to an amount of the complex which, when included in a composition, is sufficient to achieve an intended compositional or physiological effect. Thus, a "therapeutically effective amount" refers to a non-toxic, but sufficient amount of the pharmaceutically active complex, to achieve therapeutic, preservative or diagnostic results in treating a condition for which the pharmaceutically active complex is known to be effective.

It is understood that various biological factors may affect the ability of a substance to perform its intended function. Therefore, an "effective amount" or a "therapeutically effective amount" may be dependent in some instances on such biological factors.

Further, while the achievement of therapeutic effects may be measured by a physician or other qualified medical personnel using evaluations known in the art, it is recognized that individual variation and response to treatments may make the achievement of therapeutic effects a subjective decision. The determination of an effective amount is well within the ordinary skill in the art of pharmaceutical sciences and medicine.

In one embodiment, the compositions further comprise a buffer in an amount sufficient to adjust the pH of the respective composition to a physiologically tolerable level. The term "buffer" as used herein refers to a chemical compound that reduces the tendency of pH of a solution such as chromatographic solutions to change over time as would otherwise occur. Suitable buffers include, but are not limited to acetate, carbonate, citrate, glycylglycine, glycine, histidine, lysine, phosphate, borate, Trishydroxymethyl-aminomethane, ethanolamine and mixtures thereof. Usually, the pH of the composition is greater than about 5.5, e.g. greater than about 6, such as from about 6.9 to about 7.9, or from about 7.3 to about 7.4.

According to still another embodiment, the compositions further comprise pharmaceutically acceptable excipients. For instance, the respective composition can additionally comprise an isotonic agent (i.e. an isotonicity modifier), e.g. a physiologically tolerated inorganic salt, such as sodium chloride or potassium chloride, or a physiologically tolerated sugar or sugar alcohol for example, sorbitol, or a physiologically tolerated amino acid.

According to anotherembodiment, the pharmaceutical composition is provided as an injectable dosage form. According to another embodiment, the pharmaceutical composition is provided as a parental dosage form.

As used herein, "administration", and "administering" refer to the manner in which teduglutide, or composition containing such, is presented to a subject. As used herein, "subject" refers to a mammal that may benefit from the administration of a composition or method as recited herein. Most often, the subject will be a human but can be other animals or plants / other organisms.

In a particular embodiment, the pharmaceutical composition according to the invention may also comprise a pharmaceutically acceptable injectable carrier. The carrier is preferably isotonic, hypotonic or weakly hypertonic and has a relatively low ionic strength, such as provided by a sucrose solution. It includes any relevant solvent, aqueous or part aqueous liquid carrier comprising sterile, pyrogen-free water, dispersion media, coatings, and/or equivalents. The pH of the pharmaceutical composition is suitably adjusted and buffered.

For example, it is possible to prepare such a pharmaceutical composition by solubilizing at least one polyelectrolyte particle, composition or complex according to the invention in the form of inverted micelles or emulsions in an oily injectable phase, for example a fatty acid compound or a fluorocarbon such as perfluorooctyl bromide (Perflubron TM), or even solubilization in an oily phase or in a dispersed fluorocarbon in the form of an aqueous emulsion, using the methods well known by skilled persons.

The pharmaceutical composition in accordance with the present invention can be administered into a vertebrate tissue. This administration may be made by intradermal, subdermal, intravenous, intramuscular, intranasal, intracerebral, intratracheal, intraarterial, intraperitoneal, intravesical, intrapleural, intracoronary or intratumoral injection, by means of a syringe or other devices. Transdermal administration is also contemplated, as are inhalation or aerosol routes.

According to the present invention, the pharmaceutical composition can be administered into target tissues of the vertebrate body including those of muscle, skin, brain, lung, liver, spleen, bone marrow, thymus, heart, lymph, bone, cartilage, pancreas, kidney, gall bladder, stomach, intestine, testis, ovary, uterus, rectum, nervous system, eye, gland, connective tissue, blood, tumor, etc.

Applied to *in vivo* gene therapy, this invention allows repeated administration to the patient without any risk of the administered composition to induce a significant immune reaction. Administration may be by single or repeated dose, once or several times after a certain period of time. Repeated administration allows a reduction in the dose of anionic substance, in particular a nucleic acid, e.g. siRNA, administered at a single time. The route of administration and the appropriate dose vary in function of several parameters, for example the individual patient, the illness being treated, or the nucleic acid being transferred. Suitable methods are known to the person skilled in the art.

The invention more particularly pertains to a pharmaceutical composition comprising at least one of the complexes described above and also incorporating at least one adjuvant capable of improving the transfection capacity of said complex. Adjuvants may be selected in the group consisting in a chloroquine, protic polar compounds such as propylene glycol, polyethylene glycol, glycerol, EtOH, 1-methyl L -2-pyrrolidone or their derivatives, or aprotic polar compounds such as dimethylsulfoxide (DMSO), diethylsulfoxide, di-n-propylsulfoxide, dimethylsulfone, sulfolane, dimethylformamide, dimethylacetamide, tetramethylurea, acetonitrile or their derivatives.

In the case of *in vivo* treatment according to the invention, in order to improve the transfection rate, the patient may undergo a macrophage depletion treatment prior to administration of the pharmaceutical compositions described above. Such a technique is described in the literature (see, e.g., Van Rooijen et al., 1997, TibTech, 15, 178-184).

A further aspect of the invention relates to a transfection, pharmaceutical or diagnostic kit comprising a polyelectrolyte particle as herein, or the complex as defined herein. The kit can further comprise at least one adjuvant capable of improving the transfection capacity of said polyelectrolyte particle or complex. Adjuvants may be selected in the group consisting in a chloroquine, protic polar compounds such as propylene glycol, polyethylene glycol, glycerol, EtOH, 1-methyl L -2-pyrrolidone or their derivatives, or aprotic polar compounds such as dimethylsulfoxide (DMSO), diethylsulfoxide, di-n-propylsulfoxide, dimethylsulfone, sulfolane, dimethylformamide, dimethylacetamide, tetramethylurea, acetonitrile or their derivatives.

Lastly, the invention relates to a cell transfected with a complex such as that described above, in particular a prokaryote cell, a yeast or eukaryote cell, notably a mammalian cell, and more especially a cancerous cell.

While the above invention has been described with respect to some of its embodiments, this is in no way to limit the scope of the invention. The person skilled in the art is clearly aware of further embodiments and alterations to the previously described embodiments that are still within the scope of the present invention.

## EXAMPLES

### Example 1: "Si-PDMAEMA"

A well defined homopolymer with a star-shaped topology (20 arms) was synthesized with the help of atom transfer radical polymerization from a silsesquioxane initiator.

Materials

Anisole, CuBr, $CuBr_2$, 1,1,4,7,10,10-hexamethyltriethylenetetramine (HMTETA), the 2-(dimethylamino)ethyl methacrylate monomer (DMAEMA), 3-(4,5-dimethylthyazolyl-2)-2,5-diphenyl tetrazolium bromide (MTT), Hoechst 33258, branched polyethylenimine and 1,3,5-trioxane are commercially available (e.g. from Sigma Aldrich, Taufkirchen, Germany).

Cell culture materials, cell culture media and solutions, serum reduced medium OptiMEM are commercially available. The composition of plasmid DNA is routine to the skilled person (e.g., by using the EndoFree Plasmid Kit from Qiagen, Hilden, Germany). The PE conjugated CD3, FITC conjugated CD4 and PECy7-conjugated CD8 antibodies are commercially available, e.g. from BD Biosciences (Heidelberg, Germany).

Synthesis of the polycation

The particles disclosed herein can be made using conventional organic synthesis methods which are known to the person skilled in the art.

For a typical polymerization procedure of the particle "Si-PDMAEMA", a silsesquioxane initiator for atom transfer radical polymerization is used, as published e.g. by H. Mori et al. (2003), Journal of the American Chemical Society 125: 3712-3713; H. Mori et al. (2004), Macromolecules 37: 5228-5238; and S. Muthukrishnan et al. (2005), Macromolecules 38: 10631-10642; which publications are incorporated herein by reference.

The polymerization of the star-shaped Si-PDMAEMA particle was carried out with an excess of CuBr compared to the silsesquioxane initiator. The polymerization process is depicted in Scheme 1:

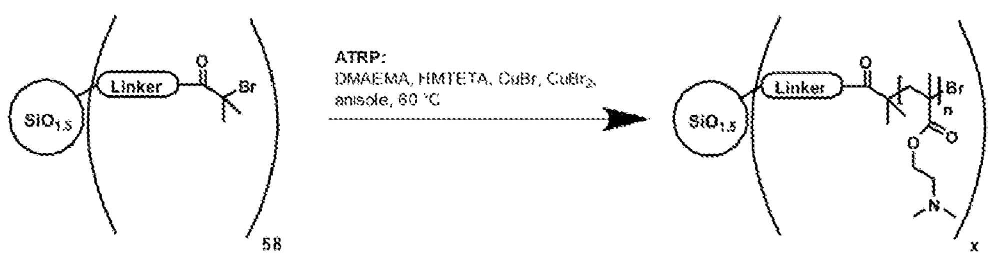


**Scheme 1**: Schematic representation of the synthesis of the star-shaped Si-PDMAEMA from the silsesquioxane inititor via core-first method.

The synthesis of star-shaped Si-PDMAEMA particles was published by F. Plamper et al. (2007), Macromolecules 40: 5689, which publication is incorporated herein by reference. The method disclosed therein can also be used to synthesize further star-shaped Si-PDMAEMA particles.

Characterization of the Si-PDMAEMA particle

The resulting particle (Si-PDMAEMA) displaying a narrow molecular weight distribution around 730 kDa was fully characterized by standard techniques of the polymer chemistry.

*a) $^1H$ NMR Spectroscopy*

All NMR spectra were recorded on a Bruker Avance (Ultrashield) 300 instrument (300 MHz) in deuterated chloroform (Deutero GmbH, Kastellaun, Germany) as solvent. The signal of $CHCl_3$ was used for calibration (7.26 ppm for $^1H$).

The conversion of the polymerization was monitored with NMR. Trioxane was used as an internal standard. From the amount of monomer that was consumed during the polymerization the average molecular weight can be calculated, assuming that the monomers are homogenously distributed among all particles. The polymerization was stopped at a conversion of 42 %, which results in an average degree of polymerization (DP or number of DMAEMA units per molecule) of 4570, or an average molecular weight $M_n$(NMR) = 730 kDa.

The $^1$H NMR spectrum of the Si-PDMAEMA after purification is shown in Figure 1. The proton signals from PDMAEMA are the most intense in this spectrum. Without wishing to be bound by theory, it is believed that the remaining signals in the spectrum belong to protons that are part of the core of molecule.

*b) Cleavage of the arms of the star-shaped polymer*

Due to steric hindrance, some of the initiation sites of the silsesquioxane initiator do not form a polymer chain (see F. Plamper et al. (2007), Macromolecules 40: 5689). Therefore, the star-shaped molecules issuing from this initiator had an arm number lower than the theoretical number of 58 arms, while the arms that have grown are longer than would initially be expected. In order to determine the average number and length of the arms, they were cleaved off the core and transformed to polymethylmethacrylate (PMMA) for an exact characterization by size exclusion chromatography (SEC). Suitable cleavage conditions are known the person skilled in the art (see e.g. F. Plamper et al. (2007), Macromolecules 40: 5689).

The SEC analysis of the cleaved arms (PMMA) gave $M_n$ = 23500 Da, $M_w$ = 33500 Da, polydispersity index (PDI) = 1.42. Therefore, the arms had an average DP of 235 per arm. From the $M_n$(NMR) of the whole molecule the number of arms per molecule was then calculated to 19.5. This value is in good agreement with the values 19-24 arms that were determined for other star-shaped polymers that were prepared from this initiator (see e.g. F. Plamper et al. (2007), Macromolecules 40: 5689).

c) *Dynamic Light Scattering*

For the determination of the hydrodynamic radius ($R_h$) of the Si-PDMAEMA particle, dynamic light scattering (DLS) measurements were performed at a concentration of 1 g/L in Milli-Q water using an instrument equipped with a compact goniometer (ALV DLS/SLS-SP 5022F), an ALV 5000/E cross-correlator and a He-Ne laser ($\lambda_0$ = 632.8 nm). The particle diameters were analyzed using the CONTIN algorithm with 250 points. The fitting was conducted in a way to set a maximum of points within the decay of the auto-correlation function. Three individual measurements gave an average $R_h$ of 37.2 nm. The size distribution of the $R_h$ from one of those measurements is depicted in Figure 2. Via cumulant analysis a PDI of 0.47 was determined for the sample.

*d) Zeta potential measurement*

Zeta potential measurements of the Si-PDMAEMA particle were performed using the standard capillary electrophoresis cell of the Zetasizer Nano ZS (Malvern Instruments, Ltd., UK) at room temperature. In a 1 g/L MilliQ solution of the Si-PDMAEMA a positive zeta potential of + 17.3 mV was measured.

*e) Elemental analysis*

An elemental analysis (EA) of the Si-PDMAEMA particle gave a content of 42.23% C, 8.41% H and 5.90 % N as well as 15.55 ppm of Cu and 764.5 ppm of Si. As can be seen from the EA, not all of the copper catalyst could be removed from the final product through dialysis and a small amount remains, probably due to the strong binding from the PDMAEMA. Without wishing to be bound by any theory, it is believed that the toxicity of the Si-PDMAEMA particle might be even further reduced, if all of the copper is removed.

*f) pH-Titration and Conductivity*

It is known in the art that branched poly(ethylene imine), b-PEI, shows an unusually high buffering capacity, because of the large amounts of nitrogen atoms in its chemical structure. As discussed above, the so-called "proton sponge effect" is a result of this buffering capacity and it is said to result in an effective escape of the polyplex from the endosome, explaining the high transfection efficiency of this polymer (see JH Jeong et al. (2007), Progress in Polymer Science 32: 1239-1274).

Figure 3a depicts the buffering capacity of the Si-PDMAEMA particle (solid line) and its comparison to that of commercially available b-PEI with a molecular weight of 25 kDa (dotted line). The conductivity was detected simultaneously with the pH value of the solution (Figure 3b), as it can give information on the amount of free ions that are present

in the solution at a given time. For reasons of comparison a pure MilliQ sample was also titrated. Compared to b-PEI, the Si-PDMAEMA particle shows a higher buffering capacity, as can be seen from the larger volume of 0.1 N HCl solution that was necessary to reach a pH of 2.8 at the same mass concentration of 0.5 g/L (see Figure 3a). The actual buffering region can also be seen in the conductivity data (see Figure 3b), i.e. where the conductivity has a plateau. This plateau reached from 2 - 3.5 mL and 2 - 4.8 mL for Si-PDMAEMA and b-PEI, respectively.

Description of cellular assays

*a) Plasmid*

Plasmid pEGFP-N1 (4.7 kb, Clontech, USA) encoding EGFP driven by the cytomegalovirus immediate early promoter was used in the transfection experiments. The plasmid was amplified using standard molecular biology techniques, including harvesting and purification. Determination of plasmid DNA (pDNA) concentration and quality is routine to the skilled person.

b) *Cell line and culture conditions*

The CHO-K1 (CCL-61, ATCC), HEK-293 (CRL-1573, ATCC), A549 (CCL-185, ATCC), wi-38 (CCL-75, ATCC), Jurkat (TIB-152, ATCC) C2C12 (CRL-1772, ATCC) and L929 (CCL-1, ATCC) cell lines used in the transfection and cytotoxicity experiments were maintained in suitable cell culture media supplemented with fetal calf serum (FCS) (as recommended by ATCC), 100 μg/mL streptomycin, 100 IU/mL penicillin, and 2 mM L-Glutamine (4 mM for L929 the cell line). Cells were cultivated at 37 ˚C in a humidified 5 % $CO_2$ atmosphere.

Differentiation of C2C12 cells was induced by cultivation in DMEM supplemented with 10% horse serum instead of FCS. Under this condition, the C2C12 mouse myoblast cell line differentiates rapidly, forming contractile myotubes and producing characteristic muscle proteins. Growing the C2C12 to confluence leads to a depletion of the myoblastic population in the culture and to growth arrest.

Primary human T lymphocytes were cultivated in the growth stimulating complete medium Quantum PBL (QPBL) (PAA, Cölbe, Germany).

Peripheral blood mononuclear cells (PBMCs) were isolated from the blood of healthy volunteers by Ficoll density gradient centrifugation (Lymphocyte separation medium LSM 1077, PAA Laboratories, Cölbe, Germany). The freshly isolated peripheral blood lymphocytes (PBLs) were cultivated in QPBL medium (PAA Laboratories, Cölbe, Germany), which contained phytohemaglutinin (PHA).

c) *Cell cycle analysis*

To assess the homogeneity of growth-arrested and differentiated cells, approximately 1 x $10^6$ fixed-cells were used for analysis. After centrifugation, resuspension in DPBS, drop wise addition of ice-cold 70% ethanol and storage for at least 2 hours at -20˚C, the cells were stained with Hoechst 33258 and analysed in a Cytomics FC 500 (Beckman Coulter, Krefeld, Germany) equipped with a 405 nm laser.

*d) Transfection*

The efficiency of the Si-PDMAEMA particle as transfection reagent was explored in several cell lines, non-diving cells and primary human T lymphocytes and its transfection efficiency was compared to the gold standard poly (ethylene imine) (b-PEI, 25 kDa). In particular, for transfection of the cell lines, the cells were seeded at optimal density in 6-well plates and incubated overnight. One hour prior to transfection, cells were rinsed with PBS and supplemented with OptiMEM. pDNA/polymer polyplexes were prepared by mixing pDNA with amounts of the respective polycation stock solution to achieve the suitable N/P ratio in aqueous solution. Solutions were vortexed and incubated at room temperature to allow for polyplexes formation. The polyplex suspension was added to the cells and the plates were incubated. Afterwards, the medium was removed by aspiration, fresh growth medium were added, and the cells were further incubated.

For primary human T lymphocytes, transgene delivery was carried out 3 to 5 days after PBMCs preparation and cultivation in QPBL medium. For polyfection, the cells were resuspended in OptiMEM medium with DNA complexed with b-PEI or Si-PDMAEMA at different N/P ratio and incubated in 6-well plates in the incubator. Afterwards, the medium was removed by centrifugation, the cell pellet was carefully resuspended in fresh QPBL medium, and the cells were further incubated.

Suitable methods for electroporation are known to the skilled person. For analysis, cells were harvested by trypsinization or centrifugation and resuspended in PBS. Dead cells were identified via counterstaining with propidium

iodide. The relative expression of EGFP fluorescence of 1 x $10^4$ cells was quantified *via* flow cytometry using a Cytomics FC 500 (Beckman Coulter, Krefeld, Germany).

*e) MTT assay*

The toxicity of the Si-PDMAEMA particle was tested using L929 murine fibroblasts, cultured in MEM supplemented with 10 % fetal bovine serum, according to the norm ISO 10993-5 (ISO 2009), using 1mg/mL MTT-stock solution. As non-complexed polymers are considered to be more toxic than the polyplexes, the harsher conditions were tested by applying the polymer dilutions in a concentration range from 0.001 mg/mL to 5.0 mg/mL to 96-well plates with 10,000 cells per well, seeded 24 h prior to the experiment. As 100% viability control, untreated cells were used. For each dilution step, 8 replicates were used. After dissolving the metabolically formed formazan crystals in isopropanol, the absorbance was measured using a plate reader (Genios Pro, Tecan, Germany) at wavelength of 570 nm.

For CHO-K1 cells, the MTT assay was performed as previously described (see A. Schallon et al. (2010), Reactive & Functional Polymers 70: 1-10). For human T lymphocytes, a MTT test with similar conditions was conducted. In particular, T lymphocytes in OptiMEM medium were transferred into 1.5 mL Eppendorf tubes. Here, the cells were centrifuged for all medium exchange and washing steps. Polymer dilutions in a concentration range from 0.001 mg/mL to 5.0 mg/mL were added and the cells were incubated at 37°C. Then, OptiMEM medium was replaced by QPBL medium. After incubation over night, the cells were rinsed with DPBS and further incubated in MTT solution. Then, the tubes were centrifuged, the MTT solution was discarded and isopropanol was added to the cells pellets. After dissolving the formazan crystals produced in the reaction, absorbance was then measured at 580 nm in a microplate reader (Genios Pro, Tecan GmbH, Crailsheim, Germany) with untreated cells serving as controls.

For data evaluation, Origin 6.1 (OriginLab Corporation, Northampton, USA) software was used, the x-scale was plotted logarithmically and nonlinear fit was run to obtain the $IC_{50}$ values.

*f) Hemolysis test*

The interaction of b-PEI and Si-PDMAEMA particles with negatively charged membranes was studied by hemolysis experiments. The release of hemoglobin was used to quantify the membrane damaging properties of these polymers. The hemolytic activity of the polymers was investigated according to Parnham and Wetzig (MJ Parnham, H Wetzig (1993), Chem Phys Lipids 64(1-3):263-274). The hemolytic activity of the polycations was calculated as follow:

$$\% \text{ hemolysis} = 100*(A - A_0)/(A_{100} - A_0)$$

where A: absorbance of the sample, $A_{100}$: absorbance at 100 % hemolysis, $A_0$: absorbance at 0% hemolysis. As 100% and 0% values Triton X-100 and phosphate-buffer-treated erythrocytes were used, respectively.

*g) Immunofluorescence analysis*

T cells expressing CD3, CD4 and/or CD8 receptors were identified by immunofluorescence, labeling cells with PE-conjugated CD3 antibody, FITC-conjugated CD4 antibody, and/or with PECy7-conjugated CD8 antibody on the day of transfection and 48 h after transfection. Immunofluorescence was analyzed using a Cytomics FC 500 equipped with the CXP Analysis research software (Beckman Coulter, Krefeld, Germany).

Results

To determine the influence of the polymers on the metabolic activity of cells as well as their destabilising effect on the plasma membrane, MTT and hemolysis assays were performed, respectively. The MTT assay performed in L929 and T cells confirmed the reduced toxicity of Si-PDMAEMA compared to b-PEI. Herein, the $IC_{50}$ value of the non-complexed star-shaped polymer (L929:0.5 mg/mL; PBLs: 0.27 mg/mL) was one log unit higher than for b-PEI (L929: 0.06 mg/mL, PBLs: 0.03 mg/mL) (Table 1 below). Both b-PEI and the Si-PDMAEMA particle affected the metabolic activity in a concentration dependent manner when it was added to the L929 cells. Under these conditions, b-PEI and Si-PDMAEMA revealed no or only moderate cytotoxic effects up to 0.01 and 0.1 mg / mL, respectively. The $IC_{50}$ values of the polycations tested after 4h incubation are given in Table 1:

**Table 1:** $IC_{50}$ of b-PEI and Si-PDMAEMA polycations. The L929 cell line and the human T lymphocytes were incubated for 4h with different concentration of polymer solution in 150 mM NaCl. Cell viability was quantified by MTT assay (n = 8)

| | $IC_{50}$ (mg/mL) | |
|---|---|---|
| **Cells** | **b-PEI** | **Si-PDMAEMA** |
| **L929** | 0.06 ± 0.004 | 0.5 ± 0.08 |
| **human T lymphocytes** | 0.03 ± 0.002 | 0.27 ± 0.01 |

Cells treated with Si-PDMAEMA maintained > 68% viability at polymer concentration up to 0.5 mg / mL, which is 25 times the concentration utilized for subsequent transfection assays performed at a N/P ratio of 10. Concentrations above 0.1 mg / mL for b-PEI and 1 mg / mL for Si-PDMAEMA reduced the cell viability to nearly 20 %.

As can be derived from Table 2 below, b-PEI was found to have a high disruptive potential reaching complete lysis of the erythrocytes at concentrations ≥ 5 mg / mL. In contrast, Si-PDMAEMA showed only low hemolytic effects (below 35 %) over the concentration ranges tested indicating low disturbance of the red blood cell membranes. Due to its low hemolytic activity and therefore a low disruptive potential for cell membranes at physiological pH, the Si-PDMAEMA particle and the particles according to the present invention are thus considered as good candidates for *in vivo* delivery of plasmid DNA.

**Table 2:** Percentage release of hemoglobin (mean ± s.e.m.) of human red blood cells after 60 min incubation with different concentrations of the cationic polymers at 37°C (n = 6):

| **Polymer** | 0.001 mg/mL | 0.005 mg/mL | 0.01 mg/mL | 0.05 mg/mL | 0.1 mg/mL | 0.5 mg/mL | 1.0 mg/mL | 5.0 mg/mL |
|---|---|---|---|---|---|---|---|---|
| **bPEI** | 0.1 ± 0.8 | 5.0 ± 1.9 | 5.4 ± 3.1 | 16.2 ± 5.0 | 26.2 ± 9.4 | 63.3 ± 12.9 | 75.2 ± 12.0 | 101.5 ± 8.4 |
| **Si-PDMAEMA** | 1.4 ± 2.1 | 0.9 ± 1.9 | 0.9 ± 0.2 | 7.1 ± 1.9 | 13.2 ± 5.8 | 22.0 ± 1.5 | 23.4 ± 5.0 | 34.1 ± 7.2 |

Contrary to the common accepted opinion that cytotoxicity increases as a function of the polycation molecular weight the Si-PDMAEMA particle despite a molecular weight almost 30-fold higher than b-PEI's one surprisingly had a less detrimental effect on cell metabolism. It is known in the art that the cytotoxic effects of polycations are due to electrostatic interactions with negatively charged cell membranes depending on the number, density and arrangement of cationic charges in the three-dimensional structure of the polymer (D Fischer et al. (2003), Biomaterials 24: 1121-1131; P van de Wetering et al. (1999), Bioconjugate Chemistry 10: 589-597). Without wishing to be bound by any theory, it is believed that the particular architecture of the star-shaped particles according to the present invention carrying high arm density might reduce the surface contact with the cell membrane, thus decreasing membrane destabilisation but preserving a high charge density, meaning good transfection efficiency. Compared to other polycations known in the art, the particles according to the present invention thus offer the great advantage to combine a high molecular weight and low *in vitro* cytotoxicity, and are therefore good candidates for *in vivo* delivery of plasmid DNA. Since b-PEI and others polycations have been investigated and optimized over the last decade without achieving this increase in transfection efficiency (up to 10-fold), it is believed (without wishing to be bound by any theory) that the star-shaped Si-PDMAEMA particles and the further particles according to the present invention utilize another transfection pathway.

Furthermore, in all analyzed cell lines, the Si-PDMAEMA led to an improvement of the transfection efficiency by slightly reduced cytotoxicity when the transfection was performed in serum-free medium. In particular, in a cell line, i.e. C2C12, known to be difficult to transfect (G.T. Atherton et al. (1996), Cell Growth & Differentiation 7: 1059-1066; F.I. Florea et al. (2002), AAPS PharmSci 4(3): article 12; B.R. Twaites et al. (2005), Journal of Controlled Release 108: 472-483), the PDMAEMA based polycation improved the transfection efficiency up to 9-fold depending on the N/P ratio utilized. A systematic variation of the amount of polymers by constant pDNA quantity used in the transfection allowed determining the N/P at which the Si-PDMAEMA particle performed best. As previously observed for other transfection reagents the efficiency of the Si-PDMAEMA depends on the N/P ratio used and on the cell type. The results of the transfection efficiency assessment are depicted in Figure 4.

The ability of the Si-PDMAEMA polycation to transfect cells in the presence of serum, which is obligatory for *in vivo* applications, was also analyzed. Once more, the Si-PDMAEMA polycation performed up to 5-fold better than b-PEI (see Figure 5).

Furthermore, the ability of the Si-PDMAEMA polycation to transfect C2C 12 cells, growth-arrested by cultivation to 100% confluence and end-differentiated to myoblasts by cultivation in horse serum instead of fetal calf serum, was evaluated (see also A Salminen et al. (1991), J. Cell Biol. 115: 905-917). Similar to the previous observation for the cell lines, the viability of the growth-arrested cells and myoblasts was always slightly higher after transfection with Si-PDMAEMA although for both polycations increasing the N/P ratio to 20 resulted in viabilities below 60%. The transfection efficiencies (TE) with the Si-PDMAEMA polycation reached an optimum at an N/P ratio of 10 in growth-arrested (TE: 16 %) and end-differentiated (TE: 19 %) cells (see Figure 6).

Moreover, Si-PDMAEMA was not only better than b-PEI in average but also for every individual transfection as clearly shown in Figure 7. Whenever the cells were growth-arrested or end-differentiated b-PEI led at most to 7 % transfected cells in accordance to data published elsewhere (GT Atherton et al. (1996), Cell Growth Differ 7: 1059-1066.). In contrast, Si-PDMAEMA yielded with 7 to 27% transfected cells much higher level of transgene expression, i.e. a 5- to 7-fold improvement of the transfection efficiency without increasing of the cytotoxicity (see Figure 7). The recognized route for nuclear entry of pDNA, after b-PEI transfection, is during mitosis when the nuclear membrane breaks down (S Grosse et al. (2006), The Journal of Gene Medicine 8: 845-851). Without wishing to be bound by any theory, it is believed that the particles according to the invention might able to beat the challenge of transfecting post-mitotic or slowly-dividing cells because they do not seem to fully rely on the breakdown of the nuclear envelope for an efficient delivery of exogenous nucleic acids to the nucleus.

Finally, because most conventional methods working effectively for cell lines fail to transfect primary cells, the question was addressed of whether the particles according to the invention could be used for gene delivery into these cell populations. Nucleofection is up to now the only efficient method towards this goal but is restricted to *in vitro* applications (A Hamm et al. (2002), Tissue Engineering 8: 235-245). In the following, human primary T lymphocytes were used for transfection because efficient tools to allow gene delivery in these cells are rare and would be of high interest not only in the research area but also for medical applications (i.e., AIDS). The peripheral blood T lymphocytes (PBLs) were isolated from human blood and transfected with b-PEI and Si-PDMAEMA at N/P ratio of 5 and 10. Whereas b-PEI never yielded more than 1 % transfection efficiency, the Si-PDMAEMA yielded 3-fold higher transfected cells at N/P 10 than at N/P 5 (data not shown). The robustness of the Si-PDMAEMA as transfection reagent for human T lymphocytes was further tested at a N/P of 10 with PBLs samples isolated from several independent donors. Si-PDMAEMA polycation yielded high level transfection efficiency with up to 44% transgene-positive T cells representing an increase of up to 236-fold of the transfection outcome (see Figure 8A). A trend toward higher transgene expression level of Si-PDMAEMA relative to b-PEI transfected cells was also observed (see Figure 8B).

The relative viabilities after transfection with the two polycations or electroporation were similar and dropped down to 50% for some samples. Though noticeably, three out of five samples showed viability within 70% of the non-transfected cells (Figure 8C). The electroporation of the T lymphocytes led to slightly better results (< 15 % transfected cells) than polyfection with PEI but never reached the values achieved with Si-PDMAEMA. Hence, the Si-PDMAEMA polycation allowed high transfection level (up to 40%) in human T lymphocytes without much increasing the cytotoxicity. So far, comparable values have not been observed for other polycations in this cell type. This contribution creates for the first time a polycation based transfection reagent with high potentiality for primary as well as for non-growing / differentiated cells transfection. Moreover, due to its low disruptive potential for cell membranes (hemolytic activity) at physiological pH and its ability to transfect cells in the presence of serum, the polycations according to the present invention have a great potential for *in vivo* delivery of plasmid DNA and thus for human gene therapy.

**Example 2: "NP@PDMAEMA"**

Furthermore, a well defined homopolymer with a star-shaped topology (46 arms) was also synthesized with the help of atom transfer radical polymerization from iron oxide nanoparticles.

<u>Materials</u>

AVS Titrinorm buffer solution pH 10 (VWR), 2-bromoisobutyryl bromide (98 %, Sigma-Aldrich), (2-dimethylamino)ethyl methacrylate (99 %, Sigma-Aldrich), di(ethylene glycol) methyl ether methacrylate (95 %, Sigma-Aldrich), dioctyl ether (99 %, Sigma-Aldrich), 1,1,4,7,10,10-hexamethyltriethylenetetramine (97 %, Sigma-Aldrich), 3-hydroxytyramine hydrochloride (98 %, Sigma-Aldrich), Iron(0)pentacarbonyl (99.9 %, Sigma-Aldrich), oleic acid (90 %, Fluka), sodium carbonate monohydrate (99.5%, Sigma-Aldrich) and sodium tetraborate decahydrate (99.5 %, Sigma-Aldrich) were purchased and used as received. Copper (I) chloride was purified according to FA Plamper et al. (2007), Macromolecules 40, 5689-5697, and the stabilizer of the monomers were removed via a column of basic aluminium oxide. For dialysis a tube from regenerated cellulose (ZelluTrans, Roth) with a MWCO of 6-8 kDa was used.

Cell culture materials, media and solutions were from PAA Laboratories (Cölbe, Germany). Serum reduced medium OptiMEM was from Invitrogen (Darmstadt, Germany). Plasmid DNA was prepared by using the EndoFree Plasmid Kit from Qiagen (Hilden, Germany). Ultrapure Milli-Q water was used for the preparation of all aqueous solutions and for dialysis.

Plasmid pEGFP-N1 (4.7 kb, Clontech, USA) encoding EGFP driven by the cytomegalovirus immediate early promoter was used in all transfection experiments. The plasmid was amplified in *E. coli DH5 alpha* strain in LB medium

to sufficient quantities by using standard molecular biology techniques, including harvesting and purification via Qiagen's Giga-Prep kits. Plasmid DNA (pDNA) concentration and quality were determined by $A_{260}/_{280}$ ratio and by agarose gel electrophoresis.

Synthesis and functionalization of iron oxide nanoparticles

A catechol-terminated initiator was synthesized following the method reported by X. Fan et al. (2005), J. Am. Chem. Soc. 127, 15843-15847. The iron oxide nanoparticles (NP) were synthesized following the strategy disclosed in T Hyeon et al. (2001), J. Am. Chem. Soc. 123, 12798-12801. The iron oxide nanoparticles (500 mg) were functionalized with 250 mg dopamine-initiator in 30 mL THF. The mixture was shaken for 3 days at room temperature. Subsequently, the particles were precipitated with methanol to remove the excess of non-bound initiator and dialyzed further for 4 days in anisole for solvent exchange.

Synthesis of NP@PDMAEMA via "grafting from"-approach

A 250 mL screw cap glass equipped with a septum was charged with 500 mg nanoparticles dispersed in 150 mL anisole, 100 mL DMAEMA (93.3 g, 594 mmol) and 82 mg CuCl (0.83 mmol). The mixture was purged with nitrogen for 30 min before adding 0.23 mL degassed HMTETA (0.19 g, 0.83 mmol) dissolved in 2 mL anisole. The reaction mixture was heated to 60 ˚C for 42 h. After cooling down to room temperature the reaction was terminated by exposing the mixture to air while stirring for 10 min. The crude product was purified by passing it through a silica column for removing the catalyst and subsequently, precipitated in n-hexane followed by redispersed in 1,4-dioxane and freeze-drying. Final purification was performed by controlled temperature induced precipitation.

Temperature induced precipitation: 200 mg of the grafted particles were dispersed in 20 mL of a boric acid based buffer solution (pH 10). This solution was heated until the particles started to precipitate. The supernatant was decanted and the particles were again dispersed in 20 mL of fresh buffer solution. This temperature induced controlled precipitation was performed 3 times until the particles were finally dispersed and dialysed against deionized water and stored in aqueous solution.For characterizing the grafted polymer, NP@PDMAEMA particles were dissolved in 3 M hydrochloric acid which causes hydrolysis of the iron oxide cores of the hybrid material. Subsequently, the resulting yellow solution was dialyzed for 3 days against deionized water to neutral pH.

The remaining polymer chains were characterized by DMAc-SEC using a PDMAEAMA calibration ($M_n$(PD-MAEMA) = 93000 g/mol; PDI = 1.22). Size exclusion chromatography (SEC) measurements were performed on a system based on GRAM columns (5 μm particle diameter) with $10^2$ and $10^3$ Å pore diameter from PSS equipped with a RI- and UV-detector. SEC was measured at an elution rate of 1 mL/min with N,N-dimethylacetamid (DMAc) as solvent.

A scheme of the synthesis strategy and dual-responsive behavior of NP@PDMAEMA particles (see below) is shown in Figure 9.

Synthesis of NP@PDMAEMA-b-PDEGMA

A glass vessel equipped with a rubber septum and a NIR probe was charged with 1 g of NP@PDMAEMA raw product dispersed in 30 mL Acteonitrile, 2 mL DEGMA (2.04 g, 10.8 mmol) and 10 mg CuCl (0.1 mmol). The mixture was purged with nitrogen for 30 min before adding 0.05 mL degassed HMTETA (46.5 mg, 0.1 mmol) dissolved in 2 mL acetonitrile. The reaction mixture was heated to 60 ˚C for 19.3 h and terminated after 25.5 % converstion (resulting composition of the copolymer: $PDMAEMA_{590}$-b-$PDEGMA_{280}$) by cooling down to room temperature and exposing the mixture to air while stirring for 10 min. The crude product was purified by passing it through a silica column for removing the catalyst and subsequently, precipitated in n-hexane followed by redispersing in 1,4-dioxane and freeze-drying. Final purification was performed by ultrafiltration.

Ultrafiltration: 900 mg of the crude product was dispersed in deionized water and filtrated with deionized water for three weeks utilizing a 50 nm MF-Millipore™ membrane filter. The purified particles were stored in deionized water (NP@PDEGMA-$PDMAEMA_{121}$).

Characterization of the NP@PDMAEMA particle

The resulting particle (NP@PDMAEMA) was fully characterized by standard techniques for polymer characterization:

*a) TEM and DLS*

Transmission electron microscopy (TEM) images were taken with a Zeiss CEM902 (EFTEM) electron microscope operated at 80 kV or a Zeiss EM922 OMEGA (EFTEM) electron microscope operated at 200 kV. Samples were prepared through deposition of a drop of the solution onto carbon-coated TEM copper-grids. Afterwards the remaining solvent was removed with a filter paper. Dynamic light scattering (DLS) were carried out by using an ALV DLS/SLS-SP 5022F goniometer with an ALV 5000/E correlator and a He-Ne laser with a wavelength of 632.8 nm. The measurement was performed at a scattering angle of 90° and CONTIN algorithm was applied to analyze the obtained correlation functions. Before measuring, the sample (c = 0.5 g/L) was filtrated through a 0.2 $\mu$ PTFE-filter.

The iron oxide nanoparticles were synthesized via thermal decomposition showing a well defined and rather monodisperse round shape as demonstrated by TEM and DLS (see Figures 10A and 10B). The size of the particles resulted from an evaluation of the TEM-micrographs indicating an average diameter of 9.9 $\pm$ 1.8 nm (average over 300 particles) and 13.2 nm by DLS, respectively. Due to the high contrast of the NP's oleic acid is invisible in the TEM-micrographs but was taken into account by determining the $R_h$ by DLS, which results in a higher value for the diameter.

*b) EDX*

Energy dispersive X-ray Spectroscopy (EDX) analysis was performed on a Leo 1530 Gemini instrument equipped with a field emission cathode and a X-ray detector. The used acceleration voltage was between 0.5 kV and 3.0 kV. For preparation the purified sample was drop-coated and dried onto a silicon wafer.

Energy dispersive X-ray spectroscopy (EDX) is a suitable method to indicate the existence of the bromine end-groups of the attached dopamine based ATRP initiator after the functionalization (see Figure 11A). The evidence of bromine with a characteristic signal at around 1.5 keV is a result of the surface-bound initiator. Because of the high carbon and oxygen content and hence, a high signal strength for both elements the signal for nitrogen with its signal at values < 0.5 keV is completely covered.

*c) FT-IR*

Fourier transform infrared spectroscopy (FT-IR) was carried out on a Spectrum 100 FT-IR spectrometer (Perkin Elmer) using an U-ATR unit. The dried samples were directly placed on top of the U-ATR unit and the measurement was started.

NMR-spectroscopy: $^1H$ and $^{13}C$ NMR spectra were recorded on a Bruker 300 AC spectrometer using MeOD or $CDCl_3$ (Deutero) as solvent and the calibration was done with the help of the internal solvent signal.

The comparison of the FT-IR spectra of the functionalized NPs (NP@Dopamine initiator) with the spectra of oleic acid stabilized NP's (NP@Oleic acid), pure oleic acid and pure dopamine initiator shows clearly a successful functionalization (Fig. 11B). In case of NP@Oleic acid, the characteristic stretching vibrations of the aliphatic $CH_2$ and $CH_3$ groups at 2900-2800 $cm^{-1}$ and carbonyl groups (C=O) at 1700 $cm^{-1}$ of the oleic acid are observed. After functionalization NP@Dopamine initiator exhibit a broad band at 3700-3100 $cm^{-1}$ as well as a band at 1650 $cm^{-1}$ which correspond to hydroxyl (-OH) and amide (N-H; C=O) bonds, respectively. It is noted that the bands of the molecules close to the surface of the NPs and especially for the binding groups are less pronounced and slightly shifted compared to the pure substances.

*d) TGA*

Thermogravimetric analysis (TGA) was carried out using a Mettler Toledo TGA/SDTA 85 at a heating rate of 10 K/min between 30 and 1000 °C under an air-flow of 60 mL/min. The typical sample size was between 8 mg and 15 mg.. For determining the grafting densities ($\delta_{graft}$) the weight loss given by TGA is used to calculate the amount of molecules per $nm^2$ according to following equation:

$$\delta_{graft} = [(\Delta m / M) \text{ x } N_A] / [Q \text{ x } A_{NP}],$$

with $\Delta m$, M, $N_A$, Q and $A_{NP}$ corresponding to the weight of the grafted molecules or polymer determined by TGA, molecular weight of the dopamine initiator or $M_n$ of a polymer, Avogadro's number, amount of NPs utilized in the TGA measurement (i.e. Q = (initial sample weight - weight loss) divided by the mass of a single nanoparticle assessed by theoretical calculation) and the surface of the NPs. For the calculation the NP's were assumed to be monodisperse with a spherical shape and a diameter of 9.9 nm evaluated by TEM-micrographs, leading to the volume ($V_{NP}$ = 508.1 $nm^3$) and the surface ($A_{NP}$ = 307.9 $nm^2$) of a single iron oxide nanoparticle. The weight per particle ($m_{NP} = 2.5 \cdot 10^{-18}$ g) is obtained by considering the density of maghemite.

TGA measurements of the pure dopamine initiator showed a complete degradation at much higher temperatures

than oleic acid. A characteristic degradation step of the dopamine initiator at temperatures above 440 ˚C is observed where approx. 40 % of the initiator mass is degraded. This significant degradation step can also be observed by comparing the TGA curves of NP@Oleic acid and NP@Dopamine initiator (Fig. 12A and 12B).

TGA after the polymerization of DMAEMA showed a weight loss of 73,6 % for the purified particles ($NP@PDMAEMA_{46}$) which is much higher compared to the NP's just carrying the ATRP initiator (Fig. 13). By utilizing the equation and considerations for calculating the grafting density mentioned in the experimental part, the resulting grafting density for the PDMAEMA chains anchored on the surface of the NP's is 46 chains/particle (0.15 chains/$nm^2$).

*e) Stability and magnetic properties*

The polymer grafted particles showed excellent stability and solubility in aqueous media without agglomeration. The TEM-micrograph prepared by drop-coating from an aqueous solution (c = 2 g/L) on a hydrophilized copper grid (Fig. 14) demonstrated clearly well dispersed $NP@PDMAEMA_{46}$ particles. Due to electrostatic repulsive interactions and steric hindrance of the long PDMAEMA chains preventing agglomeration it is impossible to separate the grafted NP's just by applying a magnet. Even by using NdFeB-magnets, which are very powerful, the NP@PDMAEMA particles stay excellently dispersed in solution. Consequently, for collecting the particles by applying a magnet they have at first to be precipitated e.g. heating above the LCST (Fig. 15).

*g) VSM*

Vibrating sample magnetometry (VSM): Magnetization curves at room temperature were recorded with an Lake Shore Vibrating Sample Magnetometer Model 7404 applying field strengths up to 1.4 T. Samples were measured in sealed Kel-F vessels, placed on a fiber glass sample holder between two poles of an electromagnet, and vibrated at a frequency of 82 Hz.

Magnetization measurements, carried out via VSM, proved the superparamagnetic behavior of the unmodified particles and $NP@PDMAEMA_{46}$ (Fig. 16). The normalized graphs of both, pure and grafted particles show the typical symmetrical sigmoidal shape without hysteresis which means, that magnetic redistribution takes place via internal (Néel) relaxation. No significant difference between the two samples was observed. These curves are additional fitted with the more complex (compared to the Langevin function) Ivanov model (AO Ivanov et al. (2001), Phys. Rev. E: Stat., Nonlinear, Soft Matter Phys.64, 041405), which assumes a gamma-distribution of the particle size and takes into account an approximated particle interaction. The measurements fit well with the theoretical assumption, which leads to the conclusion (however without wishing to be bound by any theory) that the superparamagnetic behavior of the particles is remaining and not significantly influenced by the grafting-from approach.

<u>Description of cellular assays</u>

The CHO-K1 (CCL-61, ATCC) and L929 (CCL-1, ATCC) cell lines used in the transfection and cytotoxicity experiments, respectively, were maintained in RPMI 1640 (CHO-K1) and MEM (L929) cell culture media supplemented with 10 - 20 % fetal calf serum (FCS) (as recommended by ATCC), 100 μg/mL streptomycin, 100 IU/mL penicillin, and 2 - 4 mM L-Glutamine. Cells were cultivated at 37 ˚C in a humidified 5 % $CO_2$ atmosphere.

*a) Transfection*

The efficiency of the NP@PDMAEMA particles as transfection reagent was explored in the CHO-K1 cell line and transfection efficiencies were compared to the gold standard poly(ethylene imine)(b-PEI, 25 kDa). For transfection of the CHO-K1 cells were incubated at a density of 2 x $10^5$ cells/well in 6-well plates overnight prior transfection. One hour prior transfection, cells were rinsed with DPBS and supplemented with OptiMEM. pDNA/polymer polyplexes were prepared by mixing 3 μg pDNA with amounts of the respective polycation stock solution to achieve the suitable N/P ratio in a final volume of 200 pL of aqueous 150 mM NaCl solution. Solutions were vortexed and incubated for several minutes at room temperature to allow polyplexes formation. The polyplexe suspension was added to the cells and the plates were centrifuged for 5 min and placed for 4 h in the incubator. Afterwards, the medium was removed by aspiration, fresh growth medium was added, and the cells were further incubated overnight. For analysis, the cells were harvested by trypsinization and resuspended in DPBS. Dead cells were identified *via* counterstaining with propidium iodide. The relative expression of EGFP fluorescence of 1 x $10^4$ cells was quantified *via* flow cytometry using a Cytomics FC 500 (Beckman Coulter, Krefeld, Germany).

*b) MTT assay*

The toxicity of NP@PDMAEMA polymers was tested using L929 murine fibroblasts, cultured in MEM supplemented with 10 % fetal bovine serum, according to the norm ISO 10993-5 (ISO 2009), using 1 mg/mL MTT-stock solution. The absorbance was measured using a plate reader (Genios Pro, Tecan, Germany) at wavelength of 580 nm. For data evaluation, Origin 6.1 (OriginLab Corporation, Northampton, USA) software was used, the x-scale was plotted logarithmically and nonlinear fit was run to obtain the $IC_{50}$ values.

c) *Statistical analysis*

Group data are reported as mean ± s.e.m. For transfection results, the Student's t-test was used to determine whether data groups differed significantly from each other. Statistical significance was defined as having $P < 0.05$.

Results

The efficiency of this polycation as potential transfection reagent was explored, under standard conditions and its transfection efficiency was compared to the gold standard poly(ethylene imine)(b-PEI, 25 kDa). In the CHO-K1 cell line, the $NP@PDMAEMA_{46}$ improved the transfection efficiency up to almost 5-fold depending on the N/P ratio utilized and performed best at N/P 10 to N/P 20. Averaged transfection efficiencies, at optimal N/P ratio, between 53.5 % and 61.4 % were obtained with the $NP@PDMAEMA_{46}$ polycation. Corresponding experiments with b-PEI led at most to 27.6 % transfected cells (see Experiment 1) (**Table 3**). Alternatively, we synthesized the 121 arms variant as block copolymer ($NP@DEGMA\text{-}PDMAEMA_{121}$).

**Table 3** Summary transfection with NP@PDMAEMA -based polycations

| **Cell line** | **NP** | **Transfection efficiency (%)** | **Viability (%)** |
|---|---|---|---|
| | | | |
| **b-PEI** | 5 | 27.6 ± 11.2 | 88.6 ± 8.2 |
| | 10 | 26.7 ± 5.1 | 83.8 ± 13.0 |
| | 20 | 12.8 ± 4.9 | 71.3 ± 18.9 |
| NP@**PDMAEMA**$_{46}$ | 5 | 23.8 ± 15.8 | 84.1 ± 11.2 |
| | 10 | 53.5 ± 12.4 | 82.7 ± 12.6 |
| | 20 | 61.4 ± 6.6 | 73.0 ± 13.6 |
| NP@**DEGMA-b-PDMAEMA**$_{121}$ | 5 | 59.8 ± 7.3 | 84.2 ± 8.5 |
| | 10 | 53.5 ± 4.2 | 84.9 ± 8.7 |
| | 20 | 28.8 ± 2.0 | 60.3 ± 16.7 |

DNA concentration in all cases was 15 μg/mL, polymer concentrations were adjusted to the indicated N/P ratio. Data represent mean ± s.e.m, $n \geq 4$.

Furthermore, the influence of the $NP@PDMAEMA_{46}$ on the metabolic activity of cells was tested (Table 4). The investigation of the metabolic damaging effects of the free, non-complexed polycations by MTT assay reflects a worst case setting.

**Table 4:** $IC_{50}$ of b-PEI and $NP@PDMAEMA_{46}$ polycations. The L929 cell line were incubated for 4h with different concentration of polymer solution in 150 mM NaCl. Cell viability was quantified by MTT assay (n = 8)

| | **$IC_{50}$ (mg/mL)** | |
|---|---|---|
| **Cells** | **b-PEI** | NP@**PDMAEMA**$_{46}$ |
| **L929** | 0.06 ± 0.004 | 0.09 ± 0.003 |

The $IC_{50}$ for cells treated with $NP@PDMAEMA_{46}$ was 0.09 mg/mL and represents 14 times the concentration utilized for subsequent transfection assays performed at a N/P ratio of 10.

**Example 3: "Micellar particles"**

Furthermore, poly(butadiene)-*block*-poly(N,N-dimethylaminoethyl methacrylate) diblock copolymers which arrange in aqueous solution similar to polymers having a star-shaped topology were synthesized.

The synthesis of the poly(butadiene)-*block*- poly(N,N-dimethylaminoethyl methacrylate) (PB-*b*-PDMAEMA) diblock copolymers (Scheme 2) was done as described in the literature ("New block Copolymers with Poly(N,N-dimethylaminoethyl methacrylate") as a double stimuli responsive block (F Schacher et al. (2009), Macromolecular Chemistry and Physics 210, 256-262).

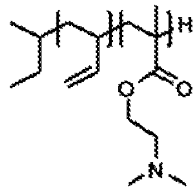

**Scheme 2:** Chemical formula of poly(butadiene)-*block*- poly(N,N-dimethylaminoethyl methacrylate) diblock copolymer.

In short, the polymers were prepared via sequential living anionic polymerization with sec-butyl lithium as initator and tetrahydrofuran (THF) as solvent in a thermostatted laboratory autoclave under an inert atmosphere. First, butadiene was polymerized at -10 ˚C for 10 h, followed by the addition of 2 equiv. of 1,1-diphenylethylene. After another 1 h reaction time, DMAEMA was added and the mixture was stirred for 2 h at -50 ˚C. The final polymers were purified through precipitation in water.

Polymer Characterization

Characterization of the polymers was done as described in detail in the literature (F. Schacher et al. Macromol. Chem. Phys., 2009, 210, 256-262). A summary is given in the following table (Table 5).

**Table 5:** Molcular characterization of the PB-b-PDMAEMA polymers

| **Sample**[a)] | **$M_n$ PB block**[b)] **[g/mol]** | **$M_n$ copolymer**[c)] **[g/mol]** | **$M_w/M_n$**[d)] |
|---|---|---|---|
| $B_{810}DMAEMA_{65}$ | 43700 | 54000 | 1.05 |
| $B_{290}DMAEMA_{240}$ | 15700 | 53500 | 1.07 |
| a) The subscripts denote the average degree of polymerization of the corresponding block; b) Determined by MALDI-ToF-MS; c) Calculated from $^1H$ NMR spectra in $CDCl_3$ using the absolute $M_n$ of the first block; d) Determined by SEC in THF with additional 0.25 wt.-% TBAB calibrated with PS standards. | | | |

Preparation of Micelles

For the preparation of micellar solutions from the PB-b-PDMAEMA block copolymers, the polymers were first dissolved in a non-selective solvent (e.g. all blocks are well soluble in the solvent) for both blocks, here THF (p.a. quality). The polymer concentrations in THF ranged from 1-20 g/L. Then, roughly 1.5 times the amount of water or PBS buffer solution was added dropwise and under stirring to the polymer solution. The mixture was stirred open to air for 6-18 h so that the THF could partially evaporate and was then dialyzed (MWCO 1000) against water or PBS buffer solution for several days in order to remove residual THF. Final concentrations were determined from the volume of the solution in the dialysis membrane and ranged from 1.0 - 11.00 g/L.

Characterization of Micelles

For determining the size of the micelles and its distribution, DLS measurements were performed. Figure 17 gives the distribution of the hydrodynamic radii as determined by DLS for a 10.65 g/L $B_{290}DMAEMA_{240}$ solution in PBS buffer. There, two main distributions can be seen, that have their maxima at 24 and 206 nm, respectively. Since in this graph an unweighted distribution is shown, the intensity of the peaks does not represent the actual number of the particles

in the solution. Larger particles show a much stronger scattering intensity and are therefore more dominant in this representation.

Additionally, cryogenic transmission electron microscopy was employed to characterize the structure of the micelles in solution. Figures 18 A) and B) show two representative images from a $B_{290}DMAEMA_{240}$ (10.65 g/L) in PBS buffer solution. In the cryo-TEM micrographs, the PB core of the micelles is clearly visible as dark spots, but the PDMAEMA corona cannot be seen, due to its low electron contrast, when swelled with solvent. The trends from DLS can be confirmed by the electron microscopy, since there are two particle distributions as well. The larger particles (Figure 18A) reach diameters up to 400 nm, which corresponds well to the larger distribution that was detected in DLS measurements (Rh = 206 nm). By far the larger number of particles are made up by the smaller particles (Figure 18B) that have a core-diameter of 18.2 ± 2.5 nm. An estimation of the true micelle size (core and corona) can be done from the cryo-TEM images by measuring the core-core distance. This estimation works under the assumption that the corona of the micelles are touching, but do not mix (due to charge repulsion). The average core-core distance of the smaller particles was determined to be 71 ± 18 nm, which is slightly larger than the expected size from DLS. Without wishing to be bound by theory, since the micelles are not densely packed in the vitrified film imaged in cryo-TEM it is likely that the core-core distance overestimates the size of the micelles.

Results

The efficiency of micellar diblock-co-polymer-based polycations as potential transfection reagent was explored under standard conditions. Micelles containing a higher percentage (w/w) of PDMAEMA ($B_{290}DMAEMA_{240}$) or containing a low percentage (w/w) of PDMAEMA ($B_{810}DMAEMA_{65}$) were synthesized. These micelles have a star-shaped structure in hydrophilic solvents as water or PBS. These polycations were transfected in CHO-K1 and Jurkat cells at N/P ratio ranging from 3 to 20. In particular, for transfection of the CHO-K1 cell line, the cells were seeded at optimal density in 6-well plates and incubated overnight. One hour prior to transfection, cells were rinsed with PBS and supplemented with OptiMEM. pDNA/polymer polyplexes were prepared by mixing pDNA with amounts of the respective polycation stock solution to achieve the suitable N/P ratio in 150 mM NaCl. Solutions were vortexed and incubated at room temperature to allow for polyplexes formation. The polyplex suspension was added to the cells and the plates were incubated for 4h. Afterwards, the medium was removed by aspiration, fresh growth medium were added, and the cells were further incubated. For transfection in the Jurkat cell line, the cells were resuspended in OptiMEM medium and incubated for 1 h. Polyplexes were formed as described for CHO-K1 and added to Jurkat cells. Cells were incubated with polyplexes for 4 h.. Afterwards, the medium was removed by centrifugation, the cell pellet was carefully resuspended in fresh growth medium, and the cells were further incubated. The results of the transfection are given in Table 6.

**Table 6** Summary transfection with micellar diblock co-polymer-based polycations

| | | CHO-K1 | | Jurkat cells | |
|---|---|---|---|---|---|
| Polycations | NP ratio | Transfection efficiency (%) | Viability (%) | Transfection efficiency (%)[a] | Viability (%)[a] |
| $B_{290}DMAEMA_{240}$ | 3 | 63.5 | 89.1 | 11.5 ± 1.4 | 88.1 ± 3.2 |
| | 5 | 78.65 | 90.48 | 31.0 ± 3.0 | 76.2 ± 13.3 |
| | 7 | n.d. | n.d. | 23.3 ± 2.6 | 87.5 ± 0.0 |
| | 10 | 83.18 | 84.3 | 21.2 ± 0.0 | 79.4 ± 0.4 |
| | 15 | 86.7 | 81.35 | 29.5 ± 0.0 | 40.9 ± 0.0 |
| | 20 | 68.1 | 68.75 | 35.0 ± 17.4 | 32.4 ± 20.9 |
| $B_{810}DMAEMA_{65}$ | 3 | 47.6 | 57.2 | 72.1 | 27.7 |
| | 5 | 23.7 | 77.4 | 71.3 | 12.6 |
| | 7 | 22.8 | 55 | 61.0 | 13.5 |
| | 10 | 16.53 | 64.7 | 54.0 | 8.7 |
| | 15 | n.d. | n.d. | 31.8 | 0.6 |
| | 20 | 21.17 | 53.6 | 16.1 | 0.6 |

a: mean values of three independent experiments

In the CHO-K1 cell line, the $B_{290}DMAEMA_{240}$ micelles led to transfection efficiencies in a range between of 64 to 87%, thus in the same range as the ones observed with Si-PDMAEMA and almost 2-fold higher than for b-PEI

(Figure 4). Decreasing the PDMAEMA content ($B_{810}DMAEMA_{65}$) and thus increasing the size of the hydrophobic core led to a decrease of the tranfection efficiency which was then comparable to b-PEI. For both micellar polycations a similar trend was observed for the Jurkat cell line. Additionally, the cell viability after transfection was assessed with propidium iodide and analyzed by flow cytometry. The $B_{290}DMAEMA_{240}$ micelles led to a slight decrease of the cell viability, in particular at higher N/P ratio, compared to b-PEI or Si-PDMAEMA. Increasing the hydrophobic core and reducing the PDMAEMA content led to a further decrease of the cell viability, which dropped down to almost 50% depending on the N/P ratio applied to the cells. In the Jurkat cell line, the $B_{290}DMAEMA_{240}$ micelles affect the cell viability in the same range as b-PEI. The $B_{810}DMAEMA_{65}$ micelles are fairly toxic to the cells even at a N/P ratio of 3 where only 28% of the cells survived after transfection. Nevertheless the transfection efficiency observed with micelles is higher compared to Si-PDMAEMA.

To summarize, the $B_{290}DMAEMA_{240}$ is an efficient transfection reagent in both tested cell lines. These micellar polycations are of particular interest because their production is cheap and easy to perform. Moreover, these data emphasize the fact that the efficiency of the Si-PDMAEMA to deliver plasmid DNA in the cells is more related to the high number of arms carried by the molecule than to the synthesis from a core. Considering that diblock copolymers can be used as "arms" a further functionalization of the molecule is possible (change of the LCST (low critical solution temperature), utilization of other polymers - introduction of PEO, ..).

**Example 4: "Transfection of siRNA"**

RNA interference (RNAi) is a highly efficient regulatory process that causes posttranscriptional gene silencing in most eukaryotic cells. RNAi thus represents a promising new approach for producing gene-specific inhibition and knockouts, producing transgenic animal models, and designing new therapeutics. The mechanisms of RNAi were first reported in *Caenorhabditis elegans* in 1998 (A. Fire et al. (1998), Nature 391(6669):806-11). The first clinical trial with short interfering RNA (siRNA) in patients suffering from agerelated macular degeneration (AMD) commenced in 2004; the relatively good safety profiles of siRNA in humans have led to its clinical evaluation in other genetic and viral diseases.

However, a critical factor limiting the utility of siRNA as therapeutics is delivering siRNA to its intracellular target site due to their unfavorable physicochemical properties (negative charges, large molecule weight, and size). Furthermore, siRNA, after endocytosis, is transported to lysosomes where siRNA is degraded (YC Tseng et al. (2009), Adv. Drug Deliv. Rev. 61(9): 721-31). The latter often diminishes the activity of siRNA therapeutics. Hence, there is a strong need in the art to provide safe carriers for the systemic delivery of siRNA therapeutics. However, it could be shown that the particles according to the invention can also be used for the systemic delivery of siRNA therapeutics, thus providing a valuable tool for biochemical studies as well as for gene therapy.

In particular, EGFP-specific siRNA duplex purchased from MWG Eurofin containing the sequences sense,5'-AAGCUGACCCUGAAGUUCAUCUGCACC -3' and antisense 5'-GGUGCAGAUGAACUUCAGGGUCAGCUU-3, were used for EGFP interference work. 50 nM siRNA were complexed with b-PEI, the Si-PDMAEMA particle according to Example 1, and two micelles $B_{810}DMAEMA_{65}$, and $B_{290}DMAEMA_{240}$ (according to Example 3) at N/P ratio of 5, 10 and 15. The polyplexes were transfected in EGFP-expressing CHO cells. For analysis, the cells were harvested by trypsinization and resuspended in PBS. Dead cells were identified via counterstaining with propidium iodide. The knockdown of the EGFP expression was analyzed by flow cytometry as described above.

EGFP knockdown in CHO cells stably expressing EGFP were performed to evaluate the efficiency of the Si-PDMAEMA and two micelles ($B_{810}DMAEMA_{65}$ and $B_{290}DMAEMA_{240}$) to mediate gene silencing (Table 7, see below). Knockdown after incubation with the polyplexes/nanoparticles containing anti-EGFP siRNA was evaluated by flow cytometric analysis. PEI/siRNA polyplexes demonstrated at most a 16% reduction in fluorescence geometric mean. Si-PDMAEMA presents a much better knockdown capability (54.7%). The two micelles tested ($B_{810}DMAEMA_{65}$) and ($B_{290}DMAEMA_{240}$) were also efficient for the EGFP knockdown. B71D29 performed in the same range as Si-PDMAEMA. Noticeably, $B_{290}DMAEMA_{240}$ is the most potent of the tested delivery system with more than 73% reduction in fluorescence geometric mean. Most importantly, all tested polyplexes / nanoparticles had minimal effects on cell viability (> 85%).

**Table 7:** Geo mean fluorescence intensity (%)

| | Untreated cells | siRNA | PEI | Si-PDMAEMA | $B_{810}DMAEMA_{65}$ | $B_{290}DMAEMA_{240}$ |
|---|---|---|---|---|---|---|
| N/P ratio | | | | | | |
| 0 | 100 | 94.74 | - | - | - | - |
| 5 | - | - | 128.95 | 98.25 | 114.04 | 26.84 |
| 10 | - | - | 83.95 | 45.35 | 89.47 | n.a. |
| 15 | - | - | n.a. | 49.04 | 54.47 | 27.11 |

## Claims

1. An *in vitro* method for transferring an anionic substance into a cell, the method comprising contacting the anionic substance and a polyelectrolyte particle in an aqueous solution under conditions so as to form a complex, and contacting said complex and the cell, wherein the polyelectrolyte particle comprises at least 15 polymer chains, which in the aqueous solution have a positive net charge and radiate outward from a common branching centre so as to form the star-shaped polyelectrolyte particle, and wherein each polymer chain comprises at least 40 covalently linked monomer units on average.

2. The method according to claim 1, wherein the polymer chains are linear polymer chains and the polyelectrolyte particle does not comprise any branched or cross-linked polymer chains.

3. The method according to claim 1 or 2, wherein the polymer chains are each formed at least in part by the polymerisation of ethylenically unsaturated monomers selected from the group consisting of dialkylamino alkyl(alk)acrylates, dialkylamino alkyl(alk)acrylamides, hydroxy alkyl(alk)acrylates, hydroxy alkyl(alk)acrylamides, alkyl(alk)acrylates and alkyl(alk)acrylamides.

4. The method according to any of the preceding claims, wherein the polymer chains are each formed at least in part by the polymerisation of ethylenically unsaturated monomers comprising monomers having the following general formula (I):

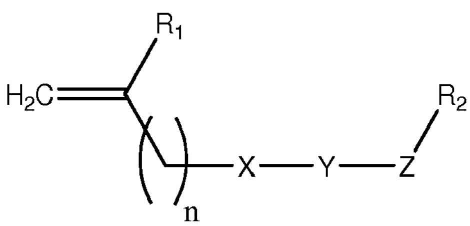

(I)

wherein:

$R_1$ is selected from hydrogen or optionally substituted -($C_1$-$C_3$)alkyl;
X is selected from -O-C(O)-, -C(O)-O-, -$NT_3$-C(O)- or -C(O)-$NT_3$-;
Y is -$(CH_2)_m$-;
Z is selected from -O-, -$(O-CH_2CH_2)_o$-, -$(CH_2CH_2-O)_o$-, -O-C(O)-, -C(O)-O-, -$NT_3$-, - $NT_3$-C(O)- or -C(O)-$NT_3$-, or is absent;
n is an integer selected from 0, 1, or 2;
m is an integer selected from 0, 1, 2, 3, 4, or 5;
o is an integer selected from 1 to 10;
$R_2$ is selected from -H, -($C_1$-$C_3$)alkyl which is unsubstituted or substituted with 1 or 2 independently selected $R_4$ groups;
each $R_4$ is independently selected from -$OT_3$, -N($T_1$)($T_2$), -N($T_3$)C(=O)$T_3$, or -N($T_3$)C(=O)O$T_3$; and
each $T_1$, $T_2$, and $T_3$ is independently selected from -H or -($C_1$-$C_3$)alkyl.

5. The method according to any of the preceding claims, wherein the polymer chains are each formed at least in part by the polymerisation of ethylenically unsaturated monomers comprising monomers having a general formula selected from the group consisting of formulae (II), (III) and (IV), wherein formulae (II), (III) and (IV) have the following chemical structures:

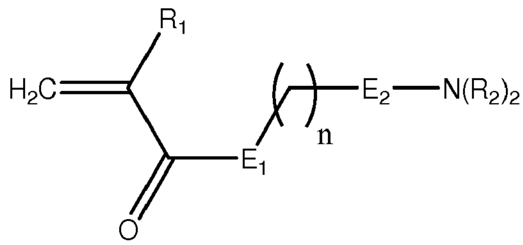

(II),

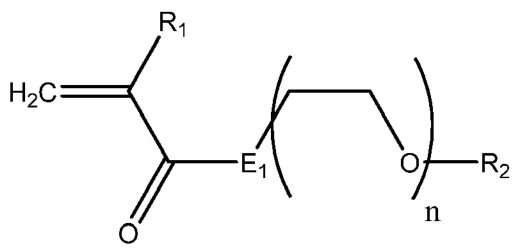

(III),

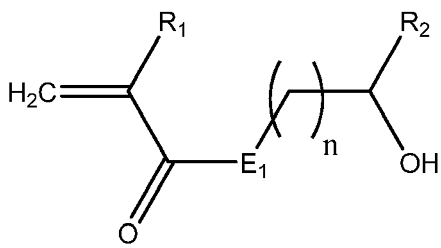

(IV),

wherein:

in formula (II):

$R_1$ is selected from -H, $-CH_3$ or $-CH_2CH_3$;
$E_1$ is selected from -O-, -NH-, or $-N(CH_3)-$;
n is an integer selected from 0, 1 or 2;
$E_2$ is selected from $-(NH-CH_2)_m-$, $-(CH_2-NH)_m-$, $-(NH-CH_2CH_2)_m-$, $-(CH_2CH_2-NH)_m-$, $-(N(CH_3)-CH_2)_m-$, $-(CH_2-N(CH_3))_m-$, $-(N(CH_3)-CH_2CH_2)_m-$, or $-(CH_2CH_2-N(CH_3))_m-$, or is absent;
m is an integer selected from 0, 1, 2, 3, 4, 5, or 6; and
$R_2$ is selected from -H, $-CH_3$ and $-CH_2CH_3$;

in formula (III):

$R_1$ is selected from -H, $-CH_3$ or $-CH_2CH_3$;
$E_1$ is selected from -O-, -NH-, or $-N(CH_3)-$;
n is an integer selected from 1, 2, 3, 4, 5, 6, 7, 8, 9, or 10; and
$R_2$ is selected from -H, $-CH_3$ and $-CH_2CH_3$;

in formula (IV):

$R_1$ is selected from -H, $-CH_3$ or $-CH_2CH_3$;
$E_1$ is selected from -O-, -NH-, or $-N(CH_3)-$;
n is an integer selected from 0, 1, 2, or 3; and
$R_2$ is selected from -H, $-CH_3$ and $-CH_2CH_3$.

6. The method according to any claims 1 to 5, wherein the common branching centre is a branched, cross-linked polymer network, or is a silicate nanoparticle, optionally a silsesquioxane, or is a functionalized metal-containing

nanoparticle.

7. The method according to claim 6, wherein functionalized metal-containing nanoparticle is selected from the group consisting of a functionalized magnetic nanoparticle, a functionalized iron oxide containing nanoparticle, and a functionalized maghemite nanoparticle .

8. The method according to any claims 1 to 5, wherein the polymer chains are block copolymers and are arranged as spherical micelles having a micellar core in the aqueous solution so as to form the star-shaped polyelectrolyte particle, wherein the micellar core acts as common branching centre.

9. The method according to any of the preceding claims, wherein the polymer chains comprised by the polyelectrolyte particle together have a molecular weight of at least 500 kDa, 550 kDa, 600 kDa, 650 kDa, 700 kDa, 750 kDa, 800 kDa, 850 kDa, 900 kDa, 950 kDa, 1000 kDa, 1500 kDa, 2000 kDa, 2500 kDa, 3000 kDa, 3500 kDa, 4000 kDa, 4500 kDa, 5000 kDa, 6000 kDa, 7000 kDa, 8000 kDa, 9000 kDa, 10,000 kDa, 15,000 kDa, 20,000 kDa, or 30,000 kDa.

10. A complex obtainable in the method according to any of claims 1 to 9.

11. A polyelectrolyte particle as defined in any of claims 1 to 9, or the complex according to claim 10 for use in the curative, preventive or vaccinal treatment of an object, or for use as diagnostic tool in an object.

12. A transfection, pharmaceutical or diagnostic composition comprising a polyelectrolyte particle as defined in any of claims 1 to 9, or the complex according to claim 10.

13. Use of a polyelectrolyte particle as chemical-based transfection agent for transferring an anionic substance into a cell, wherein the polyelectrolyte particle comprises at least 15 polymer chains which in an aqueous solution a positive net charge and radiate outward from a common branching centre so as to form the star-shaped polyelectrolyte particle, and wherein each polymer chain comprises at least 40 covalently linked monomer units on average.

14. The method according to any of claims 1 to 9 or the use of claim 13, wherein the anionic substance is a nucleic acid, optionally being selected from the group consisting of cDNA, genomic DNA, plasmid DNA, messenger RNA, antisense RNA, siRNA, short hairpin RNA, micro-RNA, ribozymes, transfer RNA, ribosomal RNA, and DNA encoding for such types of RNA.

15. The method or use according to claim 14, wherein the polymer chains comprise positively charged nitrogen atoms and the N/P ratio is between 5 and 50.

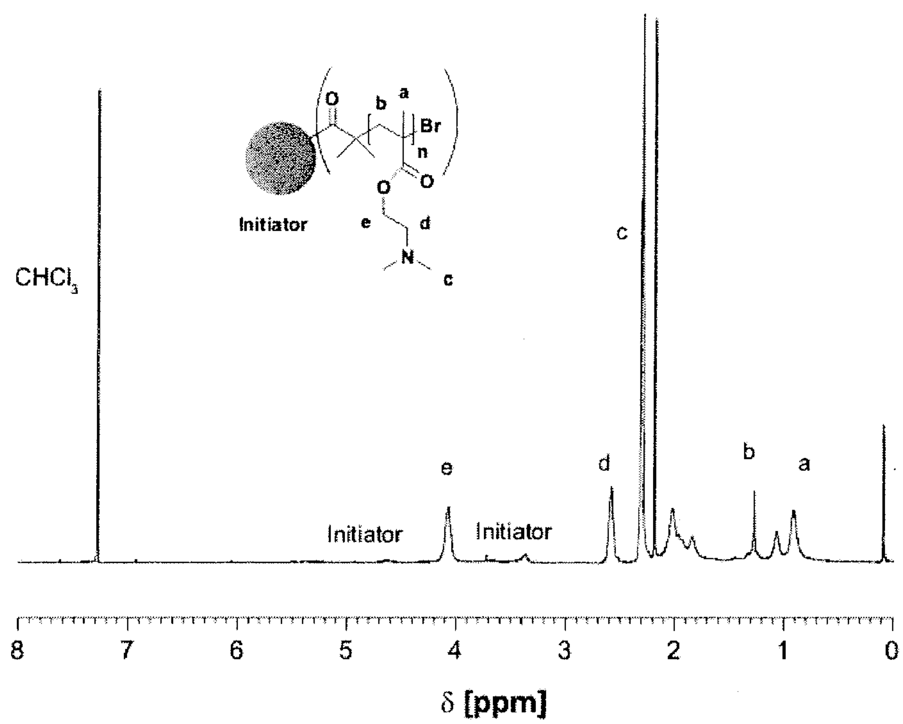
CHCl3
Initiator
c
e
d
b
a
Initiator
Initiator
8
7
6
5
4
3
2
1
0
δ [ppm]

**Figure 1**

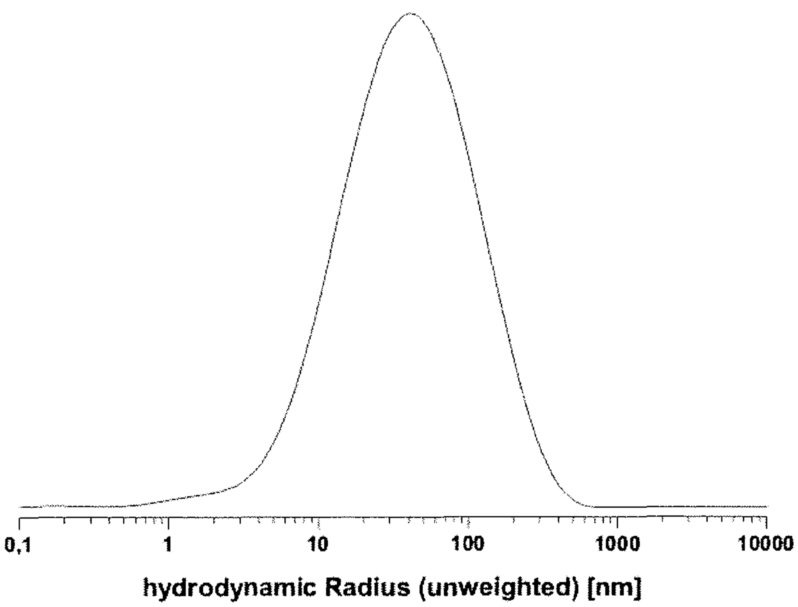


Figure 2

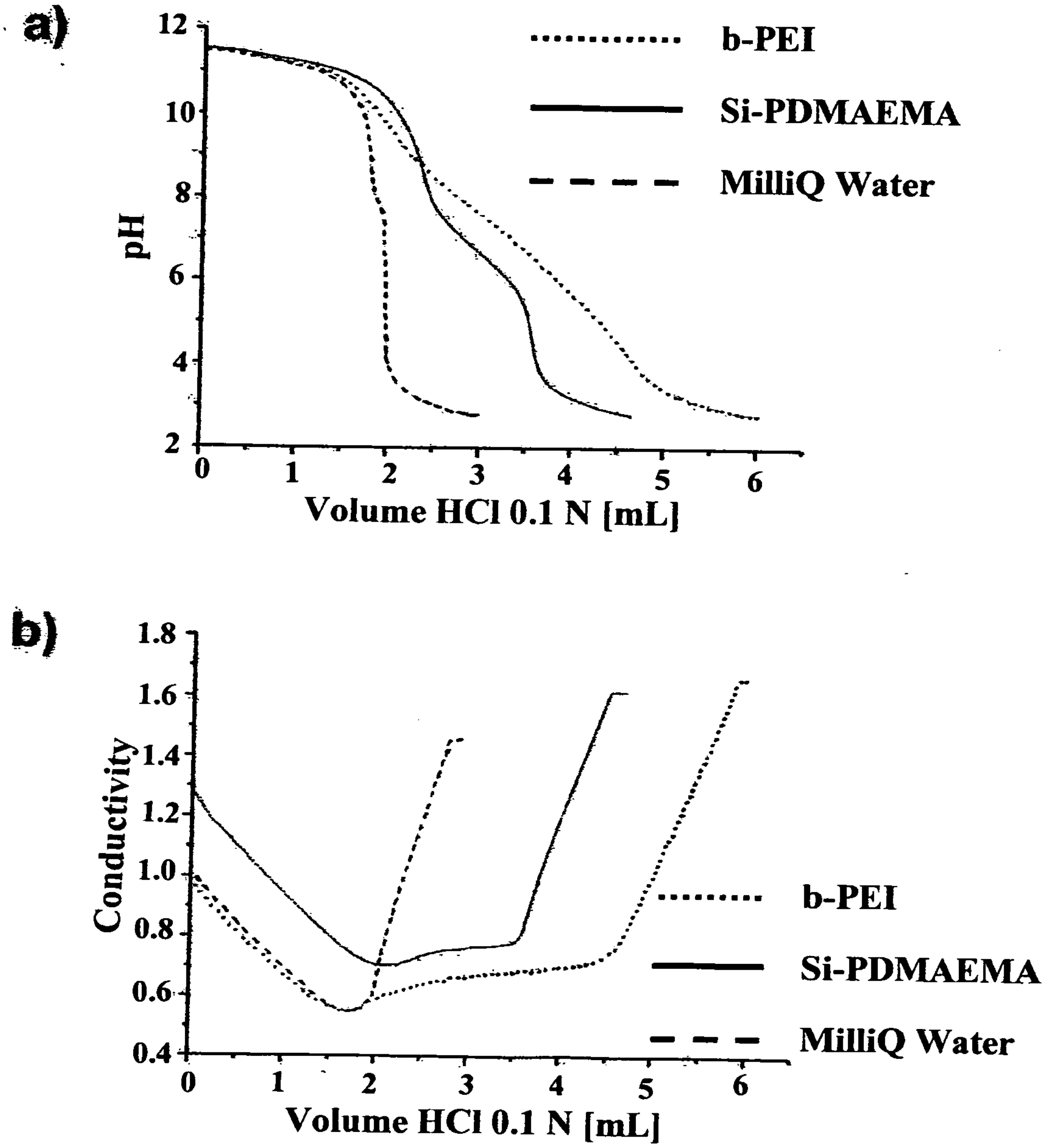
a)
12
10
8
6
4
2
pH
0
1
2
3
4
5
6
Volume HCl 0.1 N [mL]
b-PEI
Si-PDMAEMA
MilliQ Water
b)
1.8
1.6
1.4
1.2
1.0
0.8
0.6
0.4
Conductivity
0
1
2
3
4
5
6
Volume HCl 0.1 N [mL]
b-PEI
Si-PDMAEMA
MilliQ Water

Figure 3

**Table S1** Summary of the cell lines transfection with b-PEI and Si-PDMAEMA polycations

| Cell line | | Transfection efficiency (%) | | Viability (%) | |
|---|---|---|---|---|---|
| | | b-PEI | Si-PDMAEMA | b-PEI | Si-PDMAEMA |
| CHO-K1 | N/P 5 | 36.6 ± 12.0 | 59.8 ± 18.9 | 95.3 ± 3.7 | 93.7 ± 4.4 |
| | N/P 10 | 49.1 ± 17.6 | 73.5 ± 8.0 | 94.4± 3.9 | 92.9 ± 3.0 |
| | N/P 20 | 40.9 ± 20.6 | 70.5 ± 6.3 | 87.3 ± 8.7 | 91.6 ± 3.2 |
| HEK-293 | N/P 5 | 23.5 ± 9.7 | 33.9 ± 15.0 | 83.9 ± 10.1 | 88.0 ± 6.8 |
| | N/P 10 | 36.1 ± 8.2 | 50.3 ± 15.1 | 82.7 ± 14.3 | 90.8 ± 5.9 |
| | N/P 20 | 32.8 ± 7.7 | 55.2 ± 15.2 | 79.1 ± 17.7 | 83.4 ± 9.6 |
| Wi-38 | N/P 5 | 20.3 ± 3.1 | 9.8 ± 3.5 | 71.0 ± 6.5 | 76.8 ± 7.3 |
| | N/P 10 | 19.2 ± 3.9 | 26.9 ± 5.5 | 66.6 ± 5.7 | 73.3 ± 6.4 |
| | N/P 20 | 2.1 ± 1.7 | 20.9 ± 6.4 | 39.4 ± 16.6 | 53.8 ± 7.9 |
| A549 | N/P 5 | 21.7 ± 21.2 | 45.8 ± 28.0 | 93.2 ± 4.7 | 91.4 ± 4.0 |
| | N/P 10 | 36.1 ± 14.2 | 48.6 ± 22.0 | 74.8 ± 7.9 | 86.0 ± 9.4 |
| | N/P 20 | 20.0 ± 7.7 | 43.0 ± 9.8 | 48.7 ± 16.1 | 70.1 ± 21.3 |
| | N/P 3 | 0.55 ± 0.35 | 24.1 ± 0.0 | 81. 4 ± 2.9 | 76.6 ± 4.8 |
| Jurkat[a] | N/P 5 | 2.0 ± 1.4 | 33.3 ± 2.7 | 84.3 ± 4.2 | 54.4 ± 0.6 |
| | N/P 10 | 4.4 ± 3.1 | 46.1 ± 3.7 | 69.0 ± 19.3 | 44.2 ± 15.3 |
| | N/P 20 | 6.2 ± 2.6 | 28.6 ± 16.3 | 39.9 ± 22.0 | 53.6 ± 17.7 |
| C2C12 growing | N/P 5 | 1.5 ± 2.3 | 12.9 ± 2.1 | 90.1 ± 3.1 | 92.7 ± 0.9 |
| | N/P 10 | 4.8 ± 1.4 | 22.3 ± 2.0 | 88.3 ± 5.0 | 90.94 ± 1.7 |
| | N/P 20 | 16.6 ± 4.1 | 27.7 ± 5.2 | 79. 2 ± 3.3 | 81.7 ± 2.1 |

DNA concentration in all cases was 15 μg/mL, polymer concentrations were adjusted to the indicated N/P ratio. Data represent mean ± s.e.m, n ≥ 5. a: Data represent mean ± s.e.m, n ≥ 3.

Figure 4

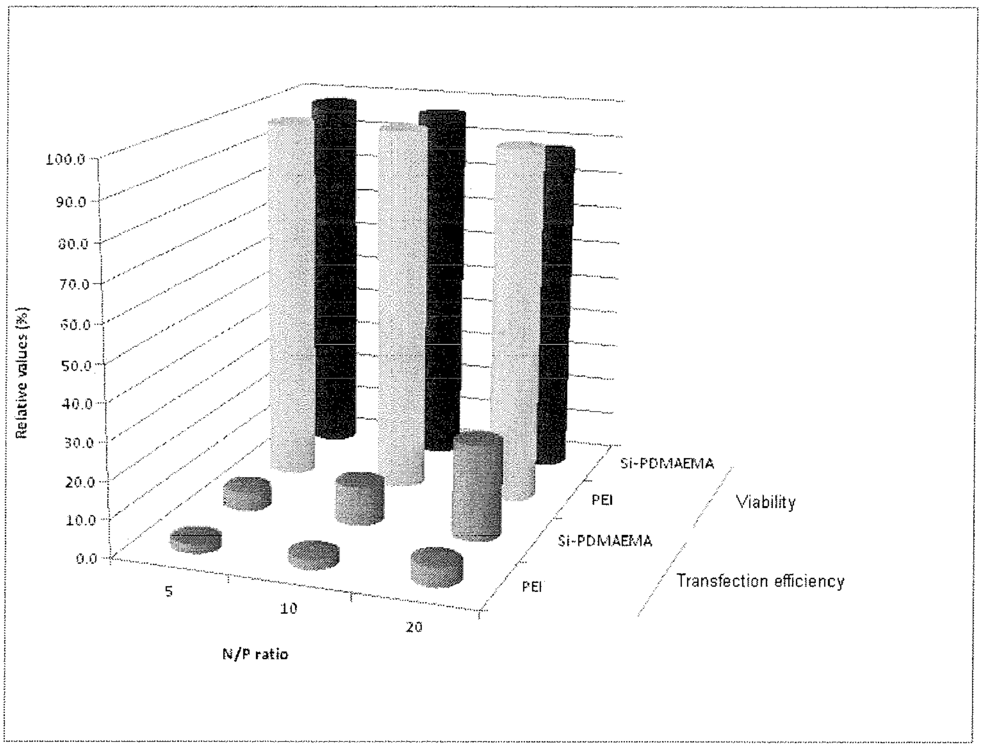
100.0
90.0
80.0
70.0
60.0
50.0
40.0
30.0
20.0
10.0
0.0
Relative values (%)
5
10
20
N/P ratio
Si-PDMAEMA
PEI
Si-PDMAEMA
PEI
Viability
Transfection efficiency

**Figure 5**

| | | Transfection efficiency (%) | | Viability (%) | |
|---|---|---|---|---|---|
| | | PEI | Si-PDMAEMA | PEI | Si-PDMAEMA |
| **Non-dividing**[a] | N/P 5 | 0.8 ± 0.5 | 7.3 ± 3.9 | 88.6 ± 5.9 | 88.3 ± 6.0 |
| | N/P 10 | 2.7 ± 1.6 | 15.8 ± 6.2 | 82.0 ± 7.3 | 83.4 ± 8.4 |
| | N/P 20 | 2.7 ± 2.3 | 13.4 ± 6.9 | 63.7 ± 14.6 | 61.3 ± 17.5 |
| | | | | | |
| **End-differentiated**[b] | N/P 5 | 1.3 ± 1.3 | 7.6 ± 3.2 | 85.6 ± 10.0 | 90.0 ± 4.9 |
| | N/P 10 | 1.9 ± 1.2 | 18.8 ± 4.7 | 79.0 ± 10.0 | 83.8 ± 8.2 |
| | N/P 20 | 1.4 ± 1.3 | 11.3 ± 6.8 | 49.7 ± 25.2 | 54.2 ± 16.4 |

DNA concentration in all cases was 15 µg/mL, polymer concentrations were adjusted to the indicated N/P ratio. Data represent mean ± s.e.m, $n \geq 9$. Cell cycle distribution on the day of transfection, a: sub-G1: 0.5 %, G1: 81.3 %, S: 15.3 %, G2/M: 0.5 %, b: sub-G1: 7.7 %, G1: 87.5 %, S: 5.1 %, G2/M: 0.2 %).

**Figure 6**

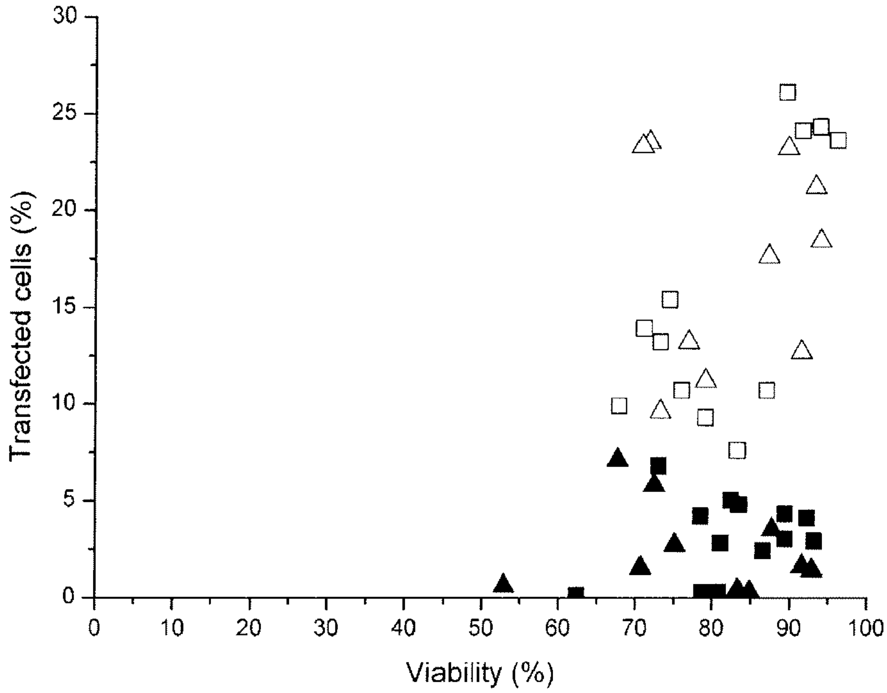
Transfected cells (%)
30
25
20
15
10
5
0
0 10 20 30 40 50 60 70 80 90 100
Viability (%)

Figure 7

A

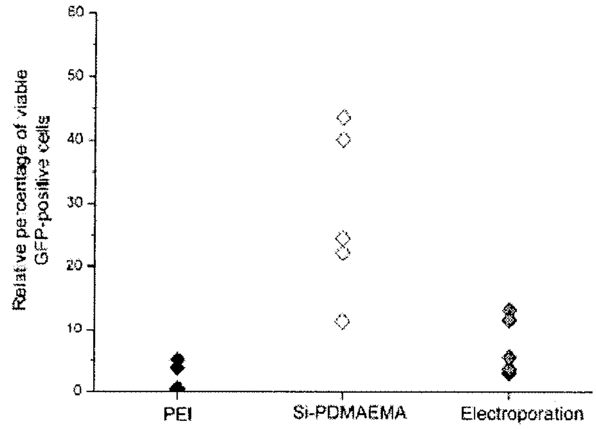

Relative percentage of viable GFP-positive cells
0
10
20
30
40
50
60
PEI
Si-PDMAEMA
Electroporation


B

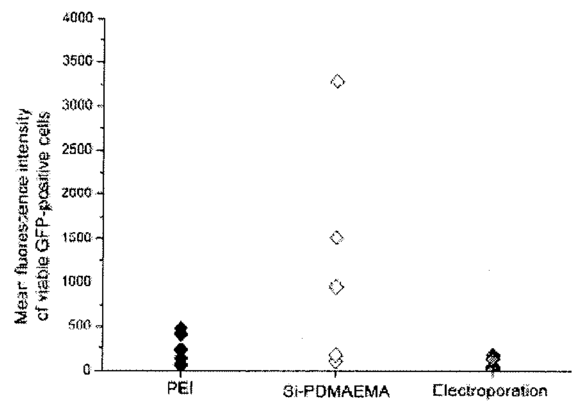

Mean fluorescence intensity of viable GFP-positive cells
0
500
1000
1500
2000
2500
3000
3500
4000
PEI
Si-PDMAEMA
Electroporation


C

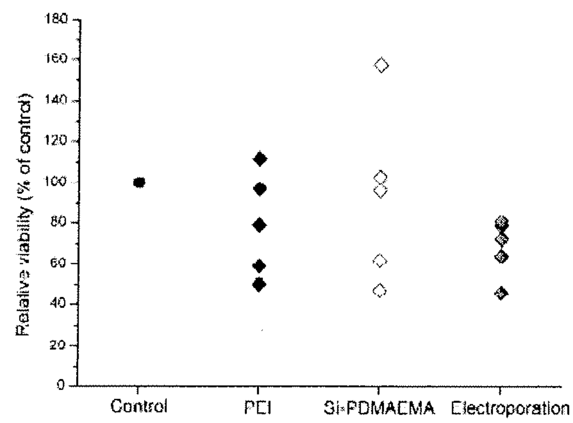

Relative viability (% of control)
0
20
40
60
80
100
120
140
160
180
Control
PEI
Si-PDMAEMA
Electroporation


**Figure 8**

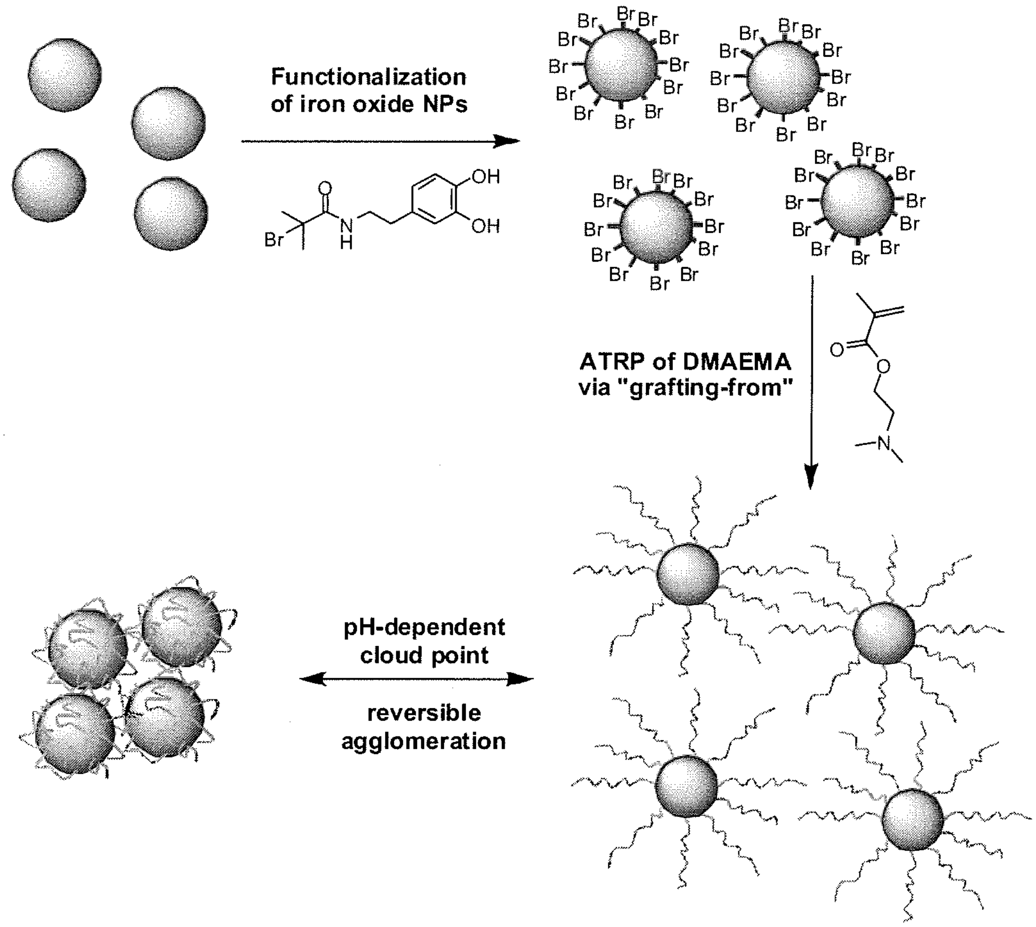
Functionalization
of iron oxide NPs
ATRP of DMAEMA
via "grafting-from"
pH-dependent
cloud point
reversible
agglomeration

Figure 9

A:

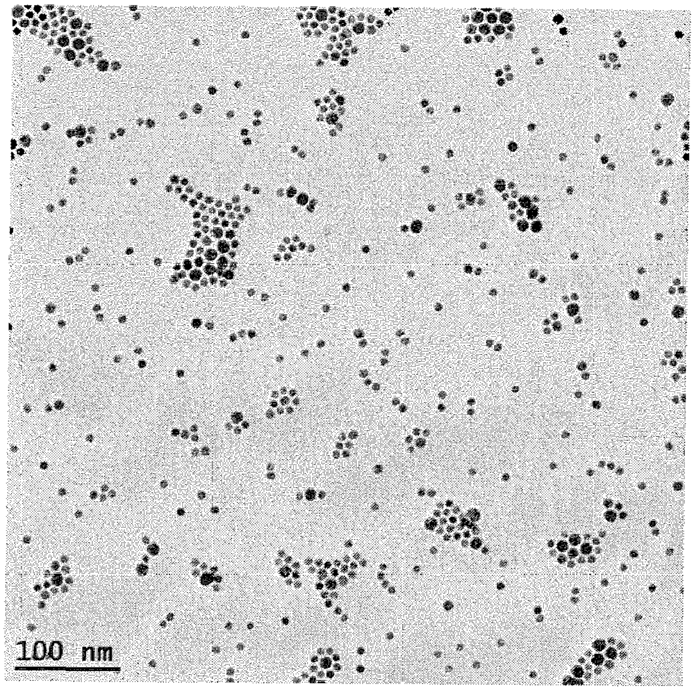
100 nm

B:

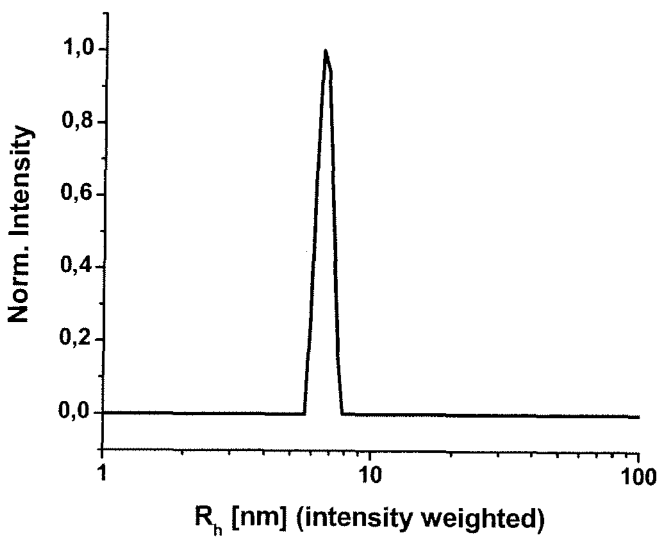
Norm. Intensity
1,0
0,8
0,6
0,4
0,2
0,0
1
10
100
$R_h$ [nm] (intensity weighted)

Figure 10

A:

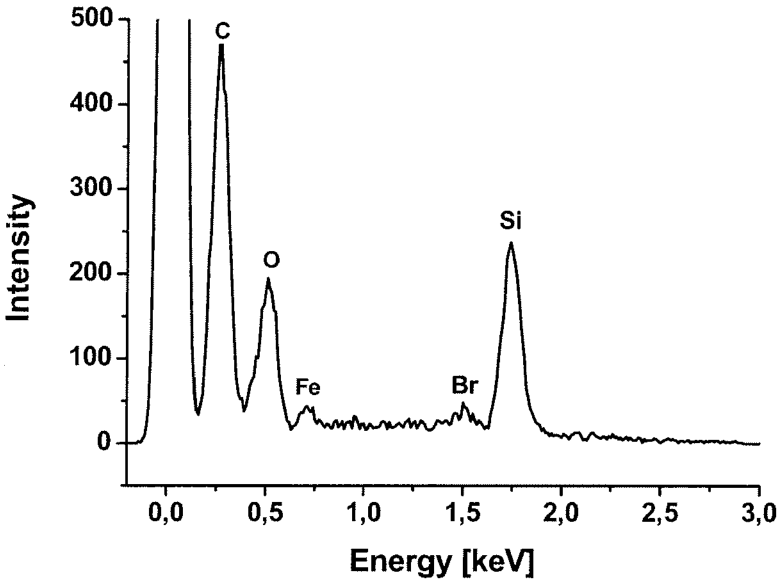
Intensity
500
400
300
200
100
0
C
O
Fe
Br
Si
0,0
0,5
1,0
1,5
2,0
2,5
3,0
Energy [keV]

B:

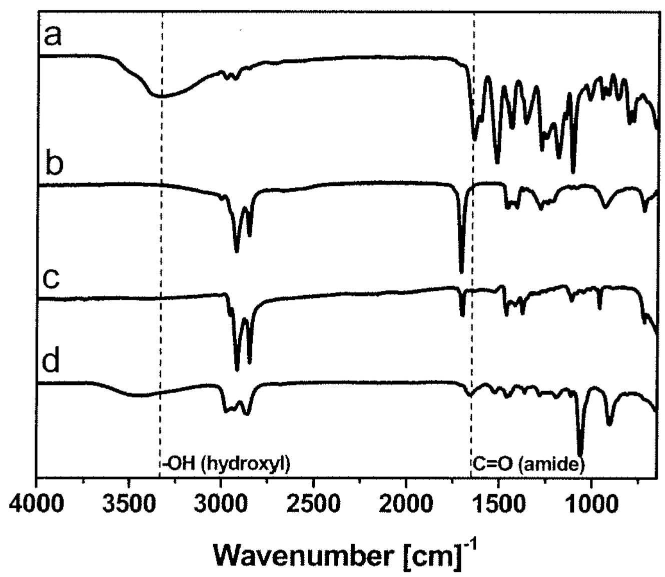
a
b
c
d
-OH (hydroxyl)
C=O (amide)
4000
3500
3000
2500
2000
1500
1000
Wavenumber [cm]-1

Figure 11

A:

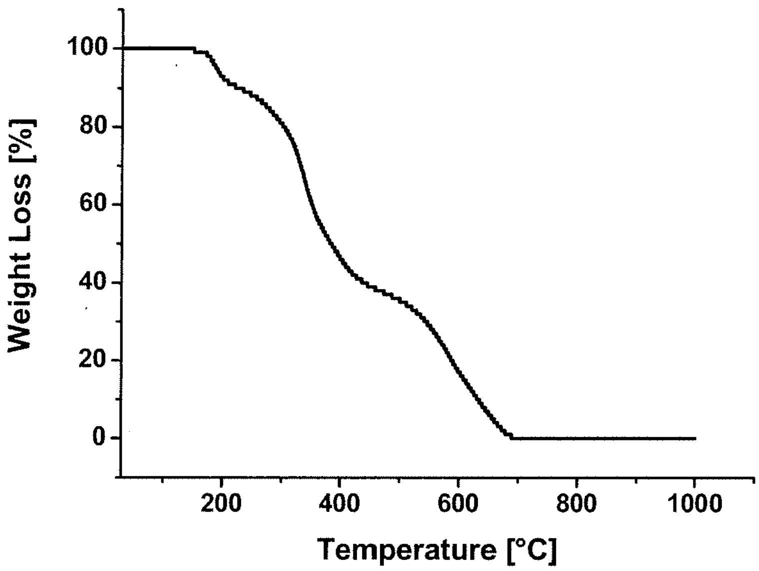
Weight Loss [%]
100
80
60
40
20
0
200
400
600
800
1000
Temperature [°C]

B:

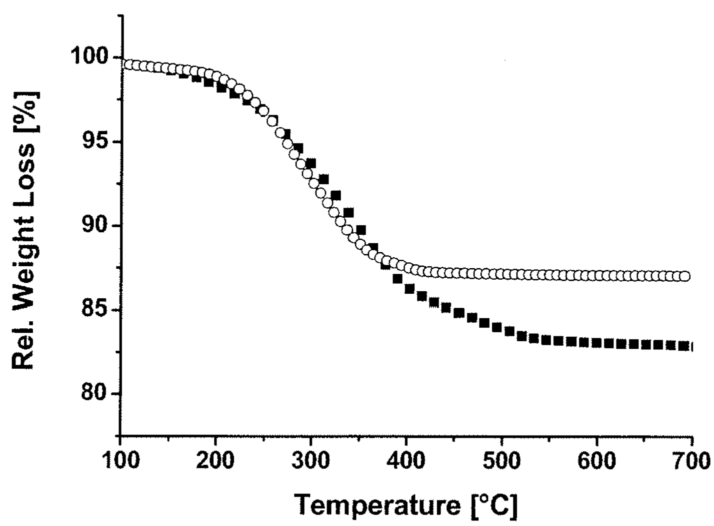
Rel. Weight Loss [%]
100
95
90
85
80
100
200
300
400
500
600
700
Temperature [°C]

Figure 12

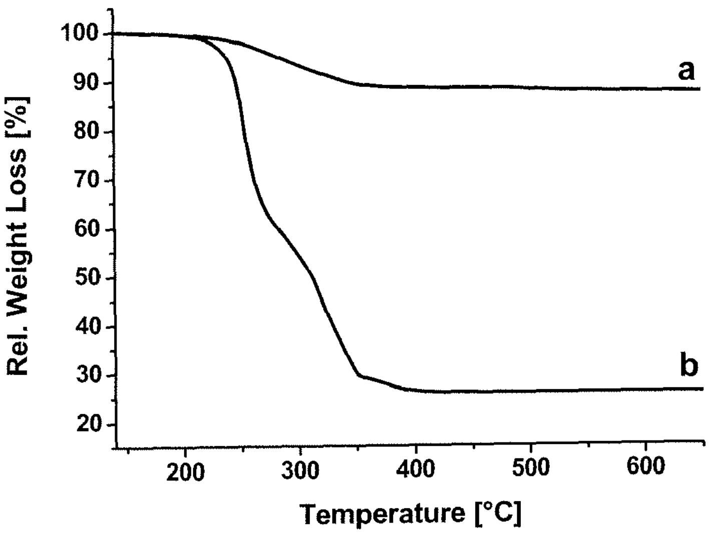
100
90
80
70
60
50
40
30
20
Rel. Weight Loss [%]
a
b
200
300
400
500
600
Temperature [°C]

Figure 13

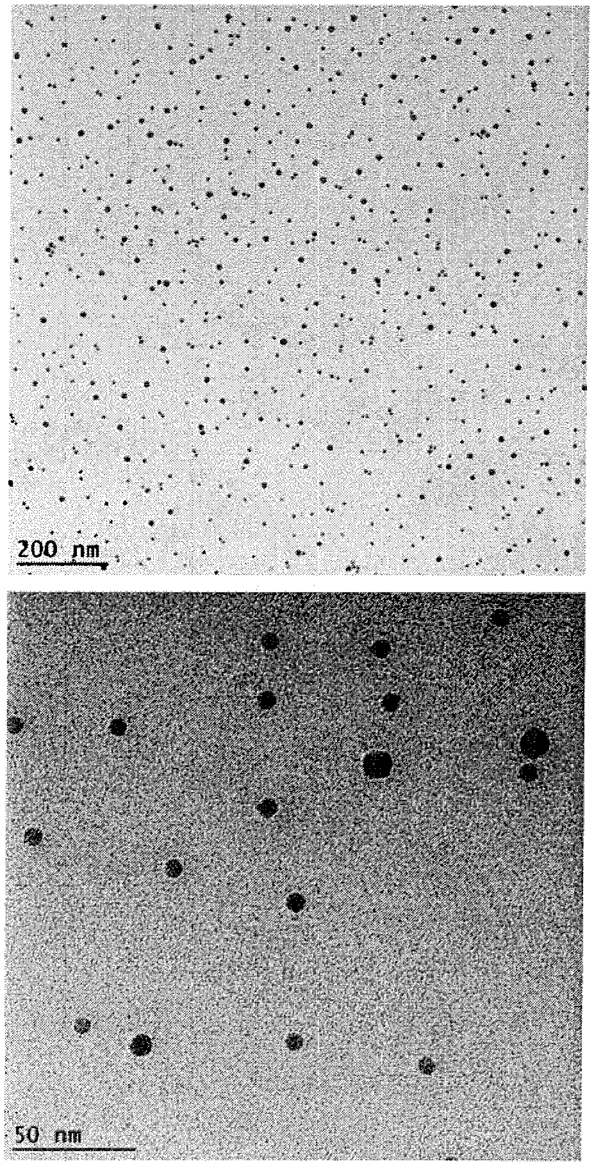


Figure 14

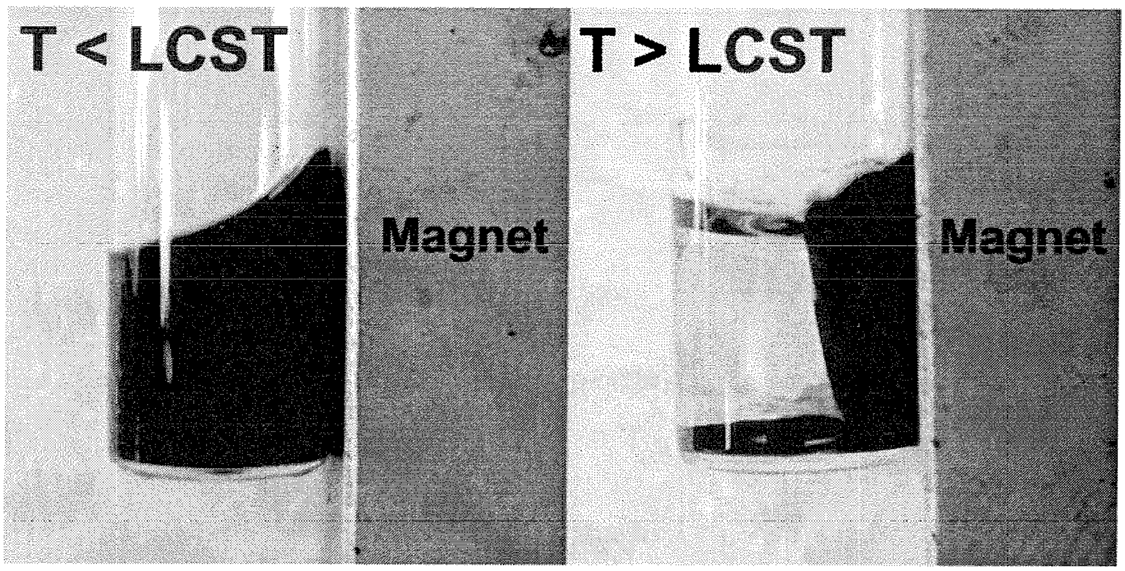


Figure 15

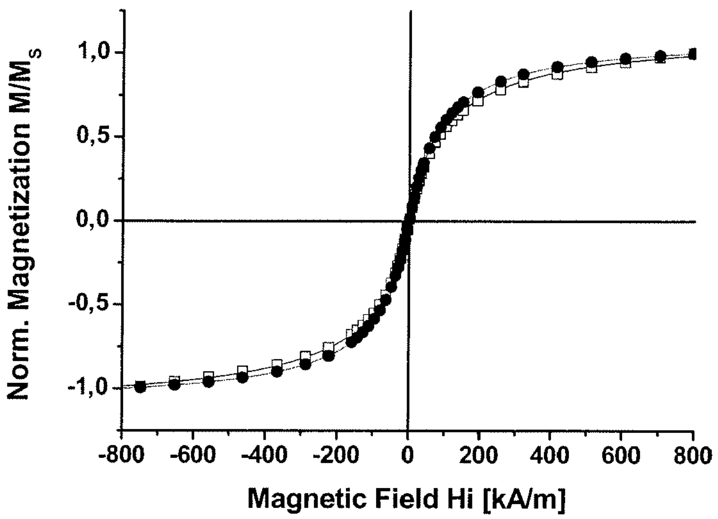
Norm. Magnetization M/M$_S$
1,0
0,5
0,0
-0,5
-1,0
-800
-600
-400
-200
0
200
400
600
800
Magnetic Field Hi [kA/m]

Figure 16

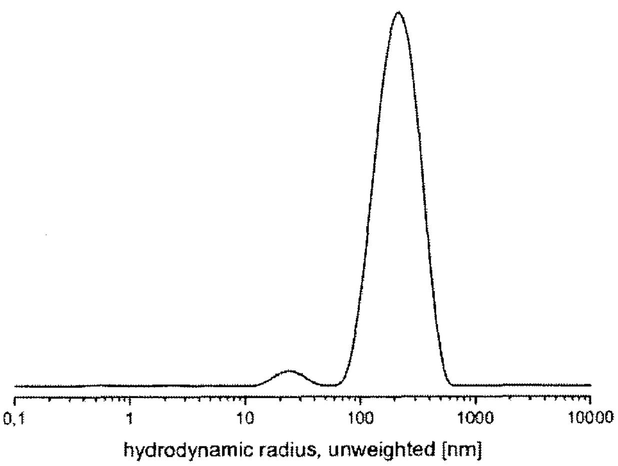


Figure 17

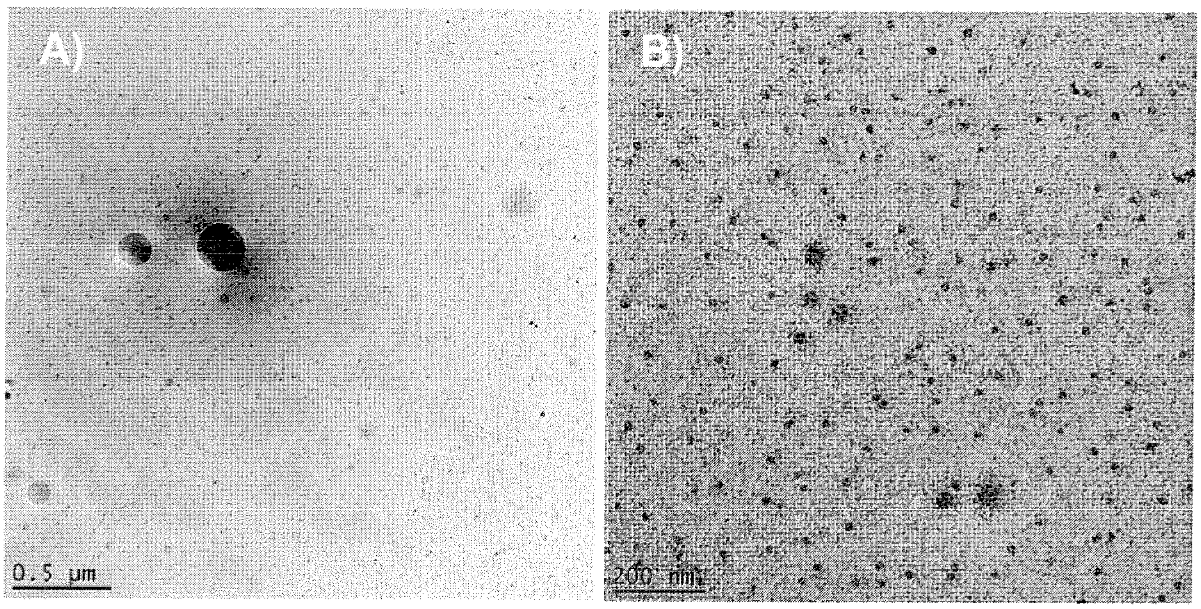


Figure 18

Europäisches Patentamt
European Patent Office
Office européen des brevets

# EUROPEAN SEARCH REPORT

Application Number
EP 11 16 6108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHALLON: "Performance of three PDMAEMA-based polycation architectures as gene delivery agents in comparison to linear and branched PEI", REACTIVE & FUNCTIONAL POLYMERS, vol. 70, no. 1, 1 January 2010 (2010-01-01), page 1, XP55018998, ISSN: 1381-5148<br>* the whole document *<br>----- | 1-15 | INV.<br>C08G83/00 |

TECHNICAL FIELDS SEARCHED (IPC)

C08G

The present search report has been drawn up for all claims

1

| Place of search | Date of completion of the search | Examiner |
|---|---|---|
| The Hague | 10 February 2012 | Friederich, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9715680 A1
- EP 1505089 A1
- US 5525711 A
- US 4711955 A
- EP 302175 A
- US 4699880 A


### Non-patent literature cited in the description


- **IM VERMA ; N SOMIA.** *Nature,* 1997, vol. 389, 239-242
- **DW PACK et al.** *Nature Reviews Drug Discovery,* 2005, vol. 4, 581-593
- **SC DE SMEDT et al.** *Pharmaceutical Research,* 2000, vol. 17 (2), 113-126
- **JM LAYMAN.** *Biomacromolecules,* 2009, vol. 10 (5), 1244-52
- **P WETERING et al.** *Journal of Controlled Release,* 1997, vol. 49, 59-69
- **WT GODBEY et al.** *Journal of Controlled Release,* 1999, vol. 60 (2-3), 149-160
- **WT GODBEY ; AG MIKOS.** *Journal of Controlled Release,* 2001, vol. 72, 115-125
- **L PARHAMIFAR et al.** *Soft Matter,* 2010, vol. 6 (17), 4001-4009
- **A AKINC et al.** *J Gene Med,* 2005, vol. 7, 657-663
- **T. BIEBER et al.** *Journal of Controlled Release,* 2002, vol. 82, 441-454
- **P VAN DE WETERING et al.** *Journal of Controlled Release,* 1997, vol. 49, 59-69
- **RA JONES et al.** *Journal of Controlled Release,* 2004, vol. 96, 379-391
- **B. NEWLAND et al.** *Chem. Commun.,* 2010, vol. 46, 4698-4700
- **F. DAI et al.** *Biomaterials,* 2010, vol. 31, 559-569
- **XJ LOH et al.** *J. Mater. Chem.,* 2010, vol. 20, 10634-10642
- **A. SCHALLON et al.** *Reactive & Functional Polymers,* 2010, vol. 70, 1-10
- **JM LAYMAN et al.** *Biomolecules,* 2009, vol. 10, 1244-1252
- **WJ KIM et al.** *Pharmaceutical Research,* 2009, vol. 26 (3), 657
- **D CASTANOTTO et al.** *Nature,* 2009, vol. 457, 426
- **G.T. ATHERTON et al.** *Cell Growth & Differentiation,* 1996, vol. 7, 1059-1066
- **F.I. FLOREA et al.** *AAPS PharmSci,* 2002, vol. 4 (3
- **B.R. TWAITES et al.** *Journal of Controlled Release,* 2005, vol. 108, 472-483
- **K. AOI ; M. OKADA.** *Prog. Polym. Sci,* 1996, vol. 21, 151-208
- **H. M. L. LAMBERMONT-THIJS et al.** *Polym. Chem.,* 2011, vol. 2, 313-322
- **M. LABET ; W. THIELEMANS.** *Chem. Soc. Rev.,* 2009, vol. 38, 3484-3504
- **F SCHACHER.** *Macromol. Chem. Phys.,* 2009, vol. 210, 256-262
- **G. RIESS.** *Prog. Polym. Sci.,* 2003, vol. 28, 1107-1170
- **FJ XU ; WT YANG.** *Prog. Polym. Sci,* 2011
- Macromolecular Engineering. Wiley-VCH, 2007, vol. 4
- **LV VINOGRADOVA.** *Russian Journal of Applied Chemistry,* 2010, vol. 83 (3), 351-378
- **H GAO et al.** *Progress in Polymer Science,* 2009, vol. 34, 317-350
- **IL MEDINTZ et al.** *Nature Materials,* 2005, 435-446
- **H. MORI et al.** *Journal of the American Chemical Society,* 2003, vol. 125, 3712-3713
- **H. MORI et al.** *Macromolecules,* 2004, vol. 37, 5228-5238
- **S. MUTHUKRISHNAN et al.** *Macromolecules,* 2005, vol. 38, 10631-10642
- **S. BEHRENS.** *Nanoscale,* 2011, vol. 3, 877
- Macromolecular Engineering. Wiley-VCH, 2007
- **T HYEON et al.** *J. Am. Chem. Soc.,* 2001, vol. 123, 12798-12801
- **X. FAN et al.** *J. Am. Chem. Soc.,* 2005, vol. 127, 15843-15847
- *Macromolecular Chemistry and Physics,* 2009, vol. 210, 256-262
- **KAI SIMONS ; J. VICTOR SMALL ; TONY HUNTER ; JULIO E. CELIS ; NIGEL CARTER.** Cell Biology. A Laboratory Handbook. Elsevier Ltd, 2005, vol. 4
- **C ZHU et al.** *Biomaterials,* vol. 31, 2408-2416

- **T.-M. SUN.** *ACSN Nano,* 2011, vol. 5, 1483-1494
- **Y. MATSUMURA ; K. KATAOKA.** *Cancer Science,* 2009, vol. 100 (4), 572-579
- *Journal of Pharmaceutical Sciences,* 2011, vol. 100 (1), 38-52
- *Eur J Pharm Biopharm.,* 13 July 2007, vol. 68 (1), 129-37
- *Pharm Res.,* 21 August 2010, vol. 27 (11), 2457-65
- *Pharmaceutical Research,* vol. 13 (7), 1038-1042
- **J WANG et al.** *The AAPS Journal,* 2010
- **VAN ROOIJEN et al.** *TibTech,* 1997, vol. 15, 178-184
- **F. PLAMPER et al.** *Macromolecules,* 2007, vol. 40, 5689
- **JH JEONG et al.** *Progress in Polymer Science,* 2007, vol. 32, 1239-1274
- **MJ PARNHAM ; H WETZIG.** *Chem Phys Lipids,* 1993, vol. 64 (1-3), 263-274
- **D FISCHER et al.** *Biomaterials,* 2003, vol. 24, 1121-1131
- **P VAN DE WETERING et al.** *Bioconjugate Chemistry,* 1999, vol. 10, 589-597
- **A SALMINEN et al.** *J. Cell Biol.,* 1991, vol. 115, 905-917
- **GT ATHERTON et al.** *Cell Growth Differ,* 1996, vol. 7, 1059-1066
- **S GROSSE et al.** *The Journal of Gene Medicine,* 2006, vol. 8, 845-851
- **A HAMM et al.** *Tissue Engineering,* 2002, vol. 8, 235-245
- **FA PLAMPER et al.** *Macromolecules,* 2007, vol. 40, 5689-5697
- **AO IVANOV et al.** *Phys. Rev. E: Stat., Nonlinear, Soft Matter Phys.,* 2001, vol. 64, 041405
- **F SCHACHER et al.** *Macromolecular Chemistry and Physics,* 2009, vol. 210, 256-262
- **F. SCHACHER et al.** *Macromol. Chem. Phys.,* 2009, vol. 210, 256-262
- **A. FIRE et al.** *Nature,* 1998, vol. 391 (6669), 806-11
- **YC TSENG et al.** *Adv. Drug Deliv. Rev.,* 2009, vol. 61 (9), 721-31